(19) Europäisches Patentamt / European Patent Office / Office européen des brevets

(11) **EP 4 737 971 A1**

(12) **EUROPEAN PATENT APPLICATION**
published in accordance with Art. 153(4) EPC

(43) Date of publication:
06.05.2026 Bulletin 2026/19

(21) Application number: 24832499.8

(22) Date of filing: 28.06.2024

(51) International Patent Classification (IPC):
$G02B\ 13/00^{(2006.01)}$    $G01S\ 7/481^{(2006.01)}$
$G02B\ 9/60^{(2006.01)}$    $G03B\ 9/02^{(2021.01)}$
$G02B\ 3/02^{(2006.01)}$    $G02B\ 5/28^{(2006.01)}$
$G02B\ 9/34^{(2006.01)}$    $G02B\ 3/00^{(2006.01)}$

(52) Cooperative Patent Classification (CPC):
G01S 7/4816; G01S 7/481; G01S 7/4814;
G02B 3/00; G02B 3/02; G02B 5/28; G02B 9/34;
G02B 9/60; G02B 13/00; G03B 9/02

(86) International application number:
PCT/KR2024/009092

(87) International publication number:
WO 2025/005722 (02.01.2025 Gazette 2025/01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.06.2023 KR 20230084536
29.06.2023 KR 20230084539

(71) Applicants:
• **LG INNOTEK CO. LTD**
**Gangseo-gu**
**Seoul 07796 (KR)**
• **Hyundai Mobis Co., Ltd.**
**Gangnam-gu**
**Seoul 06141 (KR)**

(72) Inventors:
• **KIM, Jinyoung**
**Seoul 07796 (KR)**
• **LEE, Changhyuck**
**Seoul 07796 (KR)**
• **JUNG, Yukyeong**
**Seoul 07796 (KR)**

(74) Representative: **M. Zardi & Co S.A.**
**Via G. B. Pioda, 6**
**6900 Lugano (CH)**

(54) **OPTICAL TRANSMISSION SYSTEM, OPTICAL RECEPTION SYSTEM, SENSOR SYSTEM, AND LIDAR DEVICE**

(57) A receiving optical system disclosed in an embodiment of the invention includes first to fifth lenses aligned along an optical axis from an object toward a sensing unit; and an optical filter spaced apart from the sensing unit and disposed between the third lens and the fourth lens, wherein the first to fifth lenses include aspherical lenses and spherical lenses having a number of lenses greater than the number of aspherical lenses, an optical axis distance from the optical filter to a surface of the sensing unit is D1, an optical axis distance from a sensor-side surface of the fifth lens closest to the sensing unit to a surface of the sensing unit is BFL, the following Mathematical expression satisfies: BFL < D1, an effective diameter of the first lens may be larger than the effective diameters of the remaining lenses, and an effective diameter of the fourth lens may be smaller than the effective diameter of the first lens.

【FIG. 1】

**Description**

[Technical Field]

An embodiment of the invention relates relates to an optical system and a sensor system having the same. An embodiment of the invention relates to an optical system for LIDAR (Light detection and ranging) and a device having the same. An embodiment of the invention relates to a mobile device having a transmitting optical system and system for LIDAR. An embodiment of the invention relates to a mobile device having a receiving optical system and system for LIDAR.

[Background Art]

ADAS (Advanced driving assistance system) is an advanced driver assistance system that assists the driver in driving, and is composed of sensing the situation ahead, judging the situation based on the sensed results, and controlling the vehicle's behavior based on the situation judgment. For example, the ADAS sensor device detects the vehicle ahead and recognizes the lane. Afterwards, when the target lane, target speed, and target ahead are determined, the vehicle's ESC (Electrical stability control), EMS (Engine management system), and MDPS (Motor driven power steering) are controlled. Representative examples of ADAS include automatic parking systems, low-speed city driving assistance systems, and blind spot warning systems.

Recently, as interest in autonomous vehicles has increased, demand for LIDAR (Light detection and ranging) sensors, which are its core components, is increasing. Currently, LIDAR is only used for high-spec, expensive vehicles, but it is expected to be applied to general vehicles as well due to reduced manufacturing costs.

Ultra-small and ultra-light LIDAR technology may be used not only as a sensor for unmanned mobile devices, but also in satellites and aerospace for observing the Earth's topography and environment, unmanned vehicles, transporters, cranes, and robots used in factories and shipyards, and is expected to emerge as a complex or cooperative operation between mobile devices through an integrated approach in the land, aviation, and marine industries, and as a result, it is urgent to develop an optical system for ultra-small and ultra-light LIDAR to implement ultra-small and ultra-light LIDAR.

[Disclosure]

[Technical Problem]

An embodiment provides an optical system with improved optical characteristics and a sensor system having the same. An embodiment provides a wide-angle optical system and a sensor system having the same. An embodiment provides a wide-angle receiving optical system and a sensor system having the same.

An embodiment provides a transmitting and receiving optical system, sensor system, and LIDAR device with improved heat compensation characteristics.

[Technical Solution]

A transmitting optical system according to an embodiment of the invention comprises first to fifth lenses aligned along an optical axis from an object toward a sensing unit; and an optical filter spaced apart from the sensing unit and disposed between the third lens and the fourth lens, wherein the first to fifth lenses include aspherical lenses and spherical lenses having a number of lenses greater than a number of the aspherical lenses, an optical axis distance from the optical filter to a surface of the sensing unit is D1, an optical axis distance from a sensor-side surface of the fifth lens closest to the sensing unit to the surface of the sensing unit is BFL, the following mathematical expression satisfies: BFL < D1, an effective diameter of the first lens may be larger than effective diameters of the remaining lenses, and the effective diameter of the fourth lens may be smaller than the effective diameter of the first lens.

The receiving optical system includes an aperture stop disposed around an object-side periphery of the optical filter, and an optical axis distance from the aperture stop to the surface of the sensing unit is SD, and the mathematical expression satisfies: 1 < SD/D1 < 1.2. The optical axis distance from the object-side surface of the first lens to the optical filter is D2, and may satisfy the mathematical expression: 0.5 < D1/D2 < 1.5. The fourth lens and the fourth lens may be spherical lenses, the second lens may be an aspherical lens, and the fifth lens may be an aspherical lens. The first lens may be a spherical lens, the effective diameter of the fourth lens may be larger than the effective diameter of the first lens, and the effective diameter may be an average of the effective diameters of the object-side surface and the sensor-side surface of each lens. A center thickness of the fifth lens may be CT5, and the optical axis distance from the center of the object-side surface of the first lens to the surface of the sensing unit may be TTL, and may satisfy the mathematical expression: CT5 < TTL/3 < D1.

In the receiving optical system, the optical filter is a bandpass filter that passes light in the range of 890 nm to 960 nm, and a center distance between the third lens and the fourth lens may be the largest among the center distances between the first lens to the fifth lens. The first lens includes a convex object-side surface and a concave sensor-side surface on the optical axis, and the effective diameter of the object-side surface of the first lens may be the largest among the effective diameters of the lens surfaces from the first lens to the fifth lens. The third lens may have a biconvex shape on the optical axis, the fourth lens may have a meniscus shape convex toward the object on the optical axis, and the fifth lens may have a convex object-side surface and a concave sensor-side surface on the optical axis.

In the receiving optical system, the first lens may have negative refractive power, the fifth lens may have positive refractive power, and the third and fourth lenses may have positive refractive power. Half of the diagonal length of the sensing unit is ImgH, and the optical axis distance from the optical filter to the surface of the sensing unit is D1, and may satisfy the mathematical expression: ImgH < BFL < D1.

According to an embodiment of the invention, the optical axis distance from the surface of the first lens to a surface of the sensing unit is TTL, and satisfies the mathematical expression: 20 mm < TTL < 60 mm, and the first to fifth lenses may be made of glass.

A LIDAR device according to an embodiment of the invention comprises a transmitting optical system having a light source and first to fourth lenses aligned with a first optical axis toward the light source from an object; and a receiving optical system having a sensing unit and fifth to nineth lenses aligned with a second optical axis toward the sensing unit from the object side, wherein the fifth to nineth lenses include spherical lenses and aspherical lenses, the number of spherical lenses in the receiving optical system is greater than the number of aspherical lenses, the receiving optical system includes an optical filter arranged between the spherical lenses, the transmitting optical system includes spherical lenses and aspherical lenses, the number of aspherical lenses in the transmitting optical system is smaller than the spherical lenses, the transmitting optical system includes an aperture stop and a diffuser disposed on the object side relative to the first lens, a light emitting area of the light source is different from a light receiving area of the sensing unit, and the first to fourth lenses and the fifth to nineth lenses may be made of glass.

According to an embodiment of the invention, the first lens of the transmitting optical system may have a meniscus shape convex toward the object side and have positive power, and the third lens may have positive power. The fourth lens has a meniscus shape convex toward the object side and has negative power, and the effective diameter of the third lens may be larger than the effective diameter of the fourth lens.

[Advantageous Effects]

The optical system of the embodiment can have improved optical characteristics. The LIDAR transmitting optical system of the invention can maximize the extraction efficiency of light emitted from the transmitting optical system. The LIDAR transmitting optical system of the invention can have excellent optical characteristics in a low- to high-temperature range. Specifically, the plurality of lenses included in the transmitting optical system can have preset materials, refractive powers, and refractive indices. Accordingly, when the refractive index of each lens changes due to temperature changes, and the focal length of each lens changes as a result, the glass mold lens and the glass lens can mutually compensate for this change. In other words, the transmitting optical system can effectively distribute refractive power in a low- to high-temperature range and prevent or minimize changes in optical characteristics in a low- to high-temperature range. Therefore, the optical system and sensor system of the embodiment can maintain improved optical characteristics in a variety of temperature ranges.

The lenses of the LIDAR transmitting optical system of the invention can have preset thicknesses, refractive powers, and distances between adjacent lenses. Accordingly, the optical system and sensor system according to the embodiment can have improved MTF characteristics, aberration control characteristics, resolution characteristics, etc. within a set field of view range, and can exhibit excellent optical performance at the periphery of the field of view. The transmitting optical system and sensor system according to the embodiment may satisfy the set field of view and achieve excellent optical characteristics through a combination of glass molded lenses and glass lenses. This allows the optical system to provide a slimmer vehicle sensor system. Therefore, the optical system and sensor system may be applied to various applications and devices, and can exhibit excellent optical characteristics even in harsh temperature environments, such as when exposed to the exterior of a vehicle or in the high temperatures of a vehicle during summer.

The receiving optical system according to the embodiment can exhibit improved optical characteristics. Specifically, the position of the bandpass filter in the receiving optical system may be positioned near the aperture stop to minimize the incident angle of light entering the filter. This allows the transmittance range of the bandpass filter to be widely utilized depending on the incident angle of light. The receiving optical system of the inventive LIDAR can maximize the effect of receiving light emitted from the transmitting optical system. The receiving optical system of the inventive LIDAR can exhibit superior optical characteristics over a temperature range from low to high. Specifically, the plurality of lenses included in the receiving optical system can have preset materials, refractive powers, and refractive indices. Accordingly, when the refractive index of each lens changes due to temperature changes, resulting in a change in the focal length of each lens, the glass mold lens and the glass lens can mutually compensate for this change. In other words, the receiving optical system can effectively distribute refractive power over a temperature range from low to high, and can prevent or minimize changes in optical characteristics over this temperature range. Therefore, the optical system and sensor system according to the embodiment can maintain enhanced optical characteristics over a wide temperature range.

The lenses of the receiving optical system of the inventive LIDAR can have preset thicknesses, refractive powers, and distance between adjacent lenses. Accordingly, the optical system and sensor system according to the embodiment can exhibit enhanced MTF characteristics, aberration control characteristics, resolution characteristics, etc. over a preset field of view range, and can exhibit superior optical performance at the periphery of the field of view. The receiving optical system and sensor system according to the embodiment can achieve excellent optical characteristics while satisfying a set field of view through a combination of a glass molded lens and a glass lens. This allows the optical system to provide a slimmer vehicle sensor system.

Therefore, the transmitting and receiving optical system and sensor system may be used in various applications and devices, and can maintain excellent optical characteristics even in harsh temperature environments, such as when exposed to the exterior of a vehicle or in the high temperatures of a vehicle interior during summer.

[Description of Drawings]

FIG. 1 is a cross-sectional side view of a transmitting optical system of a LIDAR according to an embodiment.
FIG. 2(A) is a drawing illustrating the first lens and diffuser of the transmitting optical system of FIG. 1, and FIG. 2(B) is an example of a rear view of the diffuser.
FIG. 3 illustrates examples of optical paths through the lens arrays of the diffusers of the comparative example and the embodiment.
FIG. 4 is a table illustrating lens characteristics of the transmitting optical system of FIG. 1.
FIG. 5 is a table illustrating aspherical coefficients of lenses in the transmitting optical system of FIG. 1.
FIG. 6 is a graph illustrating diffraction MTF (Modulation Transfer Function) data at low, room, and high temperatures in the transmitting optical system of FIG. 1.
FIG. 7 is a graph illustrating data on aberration characteristics of the transmitting optical system of FIG. 1 at low temperatures.
FIG. 8 is a graph illustrating data on aberration characteristics of the transmitting optical system of FIG. 1 at room temperature.
FIG. 9 is a graph showing data on the aberration characteristics of the transmitting optical system of FIG. 1 at high temperatures.
FIG. 10 shows data on the distortion characteristics of the transmitting optical system of FIG. 1.
FIG. 11 is a cross-sectional view of the receiving optical system of a LIDAR according to an embodiment.
FIG. 12 is a table showing the lens characteristics of the receiving optical system of FIG. 11.
FIG. 13 is a table showing the aspherical coefficients of the lenses in the receiving optical system of FIG. 11.
FIG. 14 shows data on the distortion characteristics of the receiving optical system of FIG. 11.
FIG. 15 is a graph showing diffraction MTF data at low, room, and high temperatures in the receiving optical system of FIG. 11.
FIG. 16 is a graph showing data on the aberration characteristics of the receiving optical system of FIG. 11 at low temperatures.
FIG. 17 is a graph showing data on the aberration characteristics of the receiving optical system of FIG. 11 at room temperature.
FIG. 18 is a graph showing data on the aberration characteristics of the receiving optical system of FIG. 11 at high temperatures.
FIG. 19 is a graph comparing the transmittance curves when the main beam's incident angle is 0 degrees, 20 degrees, and 40 degrees, as measured by an automatic optical inspection (AOI) device using a filter according to an embodiment of the invention.
FIG. 20 is a block diagram showing a sensor system having the receiving optical system of FIG. 11.
FIG. 21 is a diagram showing an example of measuring an object in a vehicle having the sensor system of the invention.
FIG. 22 is a diagram showing an example of surrounding surveillance in a vehicle having the sensor system of the invention.

[Best Mode]

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology.

The terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the description of the invention, "object-side surface" may refer to a surface of the lens facing the object side on the optical axis OA, and "sensor-side surface" may refer to a surface of the lens facing the imaging surface (image sensor) on the optical axis. A convex surface of the lens may mean that the lens surface on the optical axis or a paraxial region has a convex shape, and a concave surface of the lens may mean that the lens surface on the optical axis or a paraxial region has a concave shape. A curvature radius, center thickness, and distance between lenses described in the table for lens data may mean values on the optical axis, and the unit is mm. The vertical direction may mean a direction perpendicular to the optical axis, and an end of the lens or the lens surface may mean the end or edge of the effective region of the lens through which the incident light passes. The effective diameter on the lens surface may have a measurement error of up to $\pm 0.4$ mm depending on the measurement method. The paraxial region refers to a very narrow region near the optical axis, and is a region in which a distance at which a light ray falls from the optical axis OA is almost zero. Hereinafter, the concave or convex shape of the lens surface will be described as an optical axis, and may also include a paraxial region. Within the specification, * indicates multiplication.

The sensor system of the invention includes a transmitting optical system and a receiving optical system, and may be mounted inside or outside a vehicle to monitor the driver or sense external objects or lane markings. The lenses of the transmitting optical system and the receiving optical system may be made of glass or plastic. Since the coefficient of linear expansion of glass is lower than that of plastic, glass lenses may be used to suppress changes in the focal point due to temperature changes. However, when the optical system is composed of spherical glass lenses, there are limitations in reducing the number of lenses, size reduction, and weight reduction.

<Transmitting Optical System>

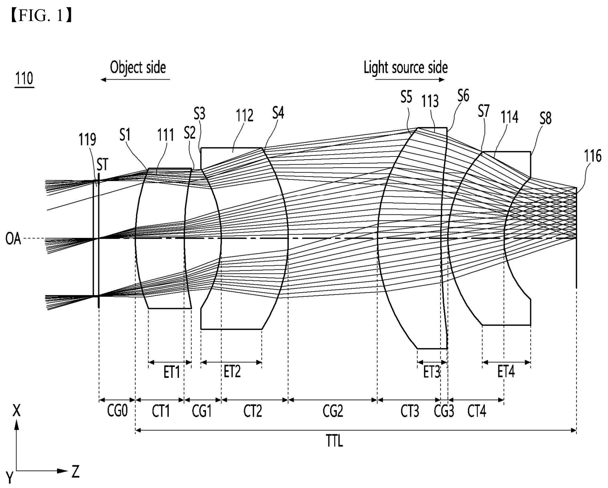

Referring to FIG. 1, the transmitting optical system 110 may include a spherical lens and an aspherical lens. The spherical lens is a lens in which at least one of the object-side surface and the light source-side surface of the lens along the optical axis is spherical. The aspherical lens is a lens in which at least one of the object-side surface and the light source-side surface of the lens along the optical axis is aspherical. The transmitting optical system 110 may include spherical glass lenses and aspherical glass lenses. Furthermore, by employing aspherical lenses, the optical system 110 can have a reduced overall length (TTL), and the aspherical lenses can provide excellent correction for various aberrations, such as spherical aberration and chromatic aberration. Furthermore, the aspherical lenses can minimize distortion in the peripheral region.

The optical system 110 may include n lenses, where the n-th lens may be the last lens adjacent to the image sensor 151, and the n-1th lens may be the lens closest to the last lens. "n" is an integer less than or equal to 5, for example, ranging from 3 to 5. The ratio of the spherical to aspherical lenses in the n lenses may be either 3:1 or 2:2. The transmitting optical system 110 may include a first lens 111 closest to the object, made of glass. The glass material exhibits minimal expansion and contraction changes due to external temperature changes, and its surface is less susceptible to scratches, preventing surface damage. Accordingly, in the optical system 110, the lenses adjacent to the object may be spherical lenses, while the lenses adjacent to the light source may be aspherical lenses.

The last lens within the optical system 110 closest to the light source 116 may be an aspherical lens. The n-th lens within the optical system 110 may be an aspherical lens. Accordingly, the light emitted from the light source 116 may be emitted through various paths. The aspherical lens may be a glass mold made of injection-molded glass. As another example, at least two lenses closest to the light source 116 may be aspherical lenses. The lenses within the optical system 110 may be made of glass. Since the glass lenses exhibit a smaller rate of contraction and expansion due to temperature changes than plastic lenses, the glass lenses may be arranged in a region adjacent to the outside of the lens barrel.

Each lens may have an object-side surface and a light source-side surface. The lenses may include lenses with an object-side spherical surface and a light source-side spherical surface, and lenses with an object-side aspherical surface and a light source-side aspherical surface. The number of aspherical lenses in the optical system 110 may be smaller than the number of spherical lenses. The optical system 110 can provide variously refracted light by arranging the aspherical lenses adjacent to the light source 116. The spherical lenses may be made of glass, and the aspherical lenses may be made of a glass mold. Among the lenses in the optical system 110, the lens with the highest refractive index may be a spherical lens, and the lens with the highest Abbe number may be a spherical lens. Accordingly, since the lens with the highest refractive index is disposed on the object side, the radius of curvature of the lenses after the second lens may be easily changed, and the center thickness may be increased.

Within the optical system 110, the lens with the largest effective diameter is positioned closest to the aspherical lens and may be a spherical lens made of glass. Within the optical system 110, the lens with the smallest effective diameter is positioned closest to the aperture stop ST or the object and may be a glass lens. The effective diameter of the aspherical lens may be smaller than the average effective diameter of the spherical lenses. Here, the effective diameter of the lens is the average value of the effective diameter of the object-side surface and the effective diameter of the light source-side surface of each lens. Each of the lenses 111-114 may include an effective region and an ineffective region. The effective region may be the area through which light incident on each lens passes. In other words, the effective region may be defined as the effective region or effective diameter where the incident light is refracted to realize optical characteristics. The ineffective region may be positioned around the effective region. The ineffective region may be a region where effective light is not incident from the plurality of lenses. In other words, the ineffective region may be a region unrelated to the optical characteristics. Furthermore, the end of the ineffective region may be an area fixed to a lens barrel (not shown) that accommodates the lens.

Among the lenses of the optical system 110, the lens with the largest center thickness may be a spherical lens, and the lens with the largest edge thickness may be a spherical lens. Accordingly, the center distance CG2 between the lens 112 with the largest thickness and the lens 113 with the largest effective diameter may be spaced apart, thereby reducing the number of lenses in the optical system. The center thickness of the aspherical lens may be smaller than the average center thickness of the spherical lenses. Such an aspherical lens may be positioned adjacent to the light source 116 to refract laser light across the entire region of the object-side lenses.

Within the optical system 110, the TTL (Total top length or Total track length) may be more than 5 times, for example, more than 5 times and less than 15 times, than the LsH. The TTL is the distance from the center of the object-side surface of the first lens 111 to the surface of the light source 116 on the optical axis OA. The LsH is the distance from the center of the light source 116 to the diagonal end or half of the maximum diagonal length of the light source 116. In addition, the effective diameter of each lens within the optical system 110 may be greater than the diagonal length of the light source 116. Within the optical system 110, the effective focal length (EFL) may be more than 5 mm and the field of view (FOV) may be less than 80 degrees or $42\pm10$ degrees, so that the optical system may be provided as a standard transmitting optical system in a vehicle sensor system. For example, the transmitting optical system and sensor system according to the embodiment may be applied to a sensing device for an Advanced Driving Assistance System (ADAS) installed inside or outside a vehicle.

The optical system 110 may have a TTL/(2*LsH) condition of greater than 2.5 times and less than 7.5 times. Accordingly, the center thickness of each lens along the optical axis OA may be increased and the size of the light source 116 may be reduced, thereby providing a vehicle-use lens optical system. Furthermore, temperature compensation must be applied within the temperature range that serves as the temperature reliability evaluation standard for automotive electrical components for use in vehicle cameras, i.e., -40°C to 120°C. In other words, the lens must be configured so that its focus remains within a set range even when it expands or contracts due to temperature changes. The lens may be configured with a total effective focal length (EFL) exceeding 5 mm, for example, in the range of 8 mm to 20 mm, and made of glass capable of the aforementioned temperature compensation. The transmitting optical system 110 can achieve a narrow angle by having a longer effective focal length than the receiving optical system.

The optical system 110 may include one or more lenses with positive (+) refractive power, and one or more lenses with negative (-) refractive power. Since this optical system 110 incorporates a mixture of spherical and aspherical lenses made of glass, it can prevent optical performance degradation. The effective diameter of the lens closest to the object within the optical system 110 may be smaller than the effective diameter of the lens closest to the light source 116.

Accordingly, the brightness of the receiving optical system may be controlled. By controlling the effective diameters of each lens, the optical system 110 can control the incident light, thereby compensating for resolution and degradation of optical characteristics due to temperature changes, and improving chromatic aberration control characteristics. By controlling the effective diameters of the lenses, the optical system 110 may be miniaturized.

The optical system 110 may include a first lens 111, a second lens 112, a third lens 113, and a fourth lens 114 aligned from the object side toward the light source side along the optical axis OA. The first to fourth lenses 111, 112, 113, and 114 may be defined as a lens unit. The light source 116 generates a laser beam, and the wavelength of the laser beam may be in the range of 890 nm to 960 nm or 940 nm ± 10 nm. As another example, the wavelength of the laser beam may be 1550 nm ± 10 nm. The light source 116 may be implemented as an InGaAs/GaAs-based semiconductor diode laser and may emit highpower laser light. The light source 116 may include a single emitter and/or multiple emitters. The light source 116 generates laser light in the form of a line source or a point source.

If the radius of curvature is expressed in absolute values, the lens surface with the minimum radius of curvature relative to the optical axis OA within the optical system 110 may be the light source-side surface of the fourth lens 114 among the spherical surfaces. Accordingly, the center distance between the second lens 112 and the third lens 113 may be made larger than the center distance between the first lens 111 and the second lens 112. The lens surface with the maximum radius of curvature within the optical system 110 may be the light source-side surface of the third lens 113. By adjusting the radius of curvature of each lens, the Chief ray angle (CRA) may be minimized to 0.5 degrees or less from the optical axis to the edge of the effective region, i.e., across the entire field, thereby maximizing transmission efficiency. Here, as the CRA increases, the asymmetry of the divergence angle with respect to the center of the light source 116 of the transmitting optical system 110 increases, which may reduce transmission efficiency.

The optical system 110 may include an aperture stop ST. The aperture stop ST may control the amount of light emitted from the optical system 110. The aperture stop ST may be disposed on the periphery of the object-side surface of the first lens 111. The aperture stop ST may be spaced a predetermined distance CG0 from the object-side surface of the first lens 111. The optical axis distance CG0 between the first lens 111 and the aperture stop ST may be 2 mm or more. Since the aperture stop ST is spaced apart from the object-side surface of the first lens 111 by the distance described above, an increase in the effective length of the diffuser 119 may be suppressed.

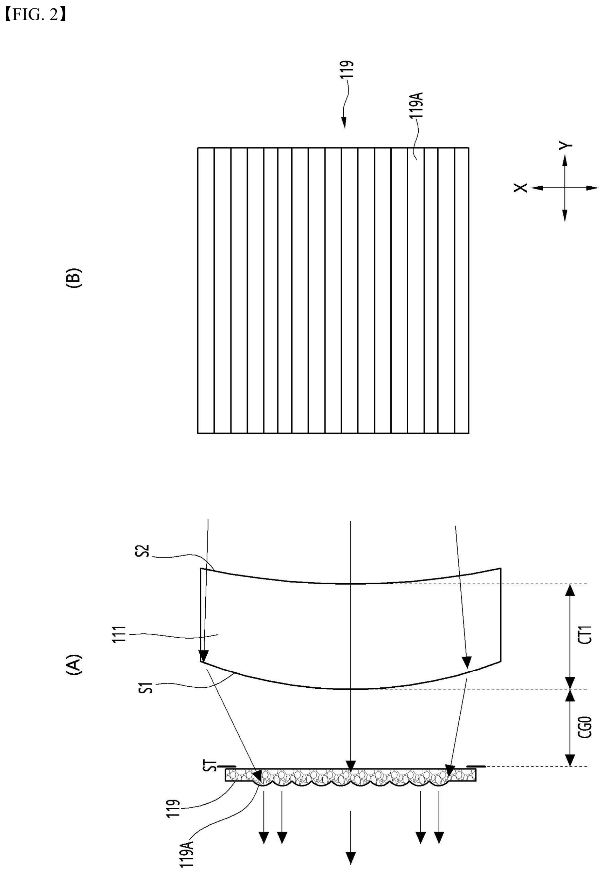

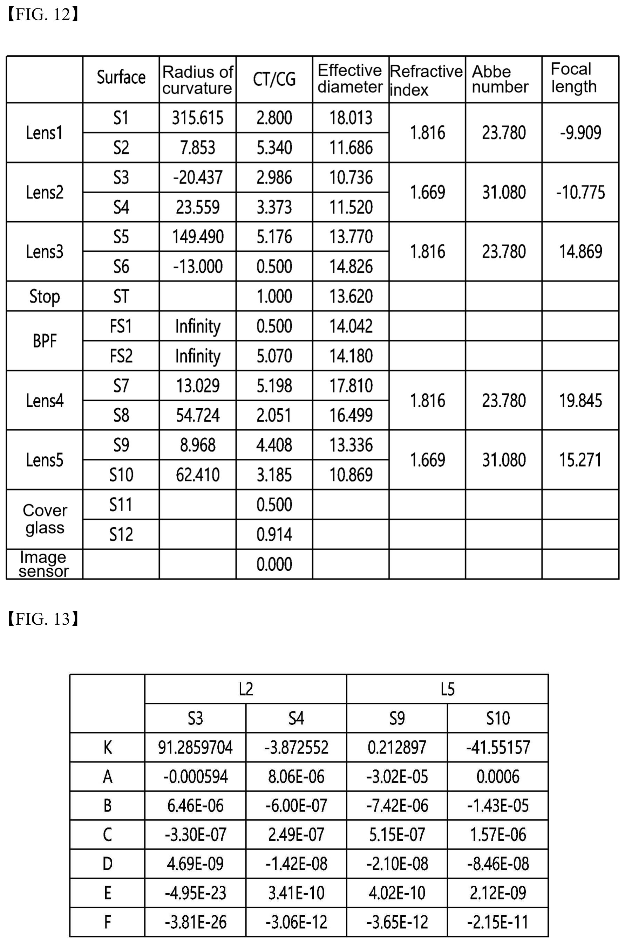

As shown in FIG. 2(A)(B), the diffuser 119 may be positioned between the object and the aperture stop ST. The diffuser 119 may include a lens array, for example, a microlens array, on at least one of the incident-side surface and the output-side surface. The microlens array may be positioned on the output-side surface of the diffuser 119. Each of the microlenses 119A may have a long length in the first direction X (e.g., vertical direction) and may be spaced apart from each other in the second direction Y (e.g., horizontal direction). The diffuser 119 may have a polygonal shape, for example, a square shape. Each of the lenses may have a cylindrical cross-section and a convex hemispherical shape. The diffuser 119 can refract light emitted through the first lens 111 and output it as parallel light. Since the light emitted through the first lens 111 is provided as parallel light, as shown in FIG. 12, the radius of curvature of the object-side surface of the fifth lens 101 of the receiving optical system may be increased to resemble a flat surface. Accordingly, the amount of light incident through the fifth lens 101 may be increased. The diagonal length of the diffuser 119 may be greater than the maximum diameter of the light source 116 and less than the maximum diameters of the first to fourth lenses 111-114. The output-side surface of the diffuser 119 is the object-side surface, and the incident-side surface is the light source-side surface. The area of the object-side surface of the diffuser 119 may be greater than the area of the effective diameter of the aperture stop ST, i.e., the hole area.

The transmitting optical system 110 having the first to fourth lenses 111-114 can spread the horizontal field of view (HFOV) of the receiving optical system 100 to 120 degrees or more because the object-side diffusers 119 are arranged in a one-dimensional shape. That is, since the diffusers 119 are arranged as a cylinder-type lens array having a long length in the first direction (e.g., vertical direction), only the horizontal FOV (HFOV) may be increased without a significant change in the vertical FOV (VFOV). The aspect ratio of the transmitting optical system 110 and the receiving optical system 100 by the diffusers 119 is the ratio of the width to the height of the image sensor, and may be expressed as H:V=1:7. This has the effect of enabling optical matching by means of a diffuser 119 even if the aspect ratios of the transmitting optical system and the receiving optical system are different compared to the aspect ratio of the existing receiving optical system, which is H:V=3.43:1. Accordingly, the size of the transmitting/receiving optical system may be reduced.

In the optical system 110 of the embodiment, the sum of the refractive indices of the lenses may be 6 or greater, for example, in the range of 6 to 10, and the average refractive index may be in the range of 1.70 to 1.80. The sum of the Abbe numbers of each of the lenses may be 160 or less, for example, in the range of 100 to 160, and the average Abbe number may be 45 or less, for example, in the range of 20 to 45. By adjusting the refractive indices of the lenses within the transmitting optical system 110, a decrease in transmission efficiency due to temperature changes from -45 to 120 degrees Celsius may be prevented and thermal compensation optimized. Furthermore, by adjusting the Abbe numbers of the lenses, variation in transmission efficiency depending on wavelength may be minimized.

The sum of the center thicknesses of the entire lens may be 13 mm or greater, for example, in the range of 13 mm to 23 mm, and the average of the center thicknesses may be 3.9 mm or greater, for example, in the range of 3.9 mm to 5.9 mm. The sum of the center distances between the lenses along the optical axis OA may be 25 mm or less, for example, in the range of 8 mm to 20 mm, and may be less than the sum of the center thicknesses of the lenses. Furthermore, the average effective diameter of each lens surface of the transmitting optical system 110 may be 20 mm or less, for example, in the range of 10 mm to 20 mm. The transmitting optical system 110 may adjust the thickness of the lenses to prevent optical performance degradation and optimize thermal compensation for temperature changes ranging from -45°C to 120°C.

In the transmitting optical system 110 according to an embodiment of the invention, the field of view may be less than 80 degrees, for example, in the range of 30 to 60 degrees. The F-number of the optical system or camera module may be 1.8 or less, for example, in the range of 1 to 1.8 or 1.2 to 1.7. The diagonal length of the light source 116 may be 8.26 mm ± 0.5 mm, and may be greater than the height of the image sensor in the vertical direction. The invention can provide a vehicle LIDAR device that suppresses changes in the focal imaging position due to temperature changes by stacking glass lenses and corrects various aberrations by providing an aspherical lens. Since the embodiment is an optical system applied to the LIDAR device, the first lens 111 may be provided with a glass material. This has the advantage that the glass material is more scratch-resistant and less sensitive to external temperature than a plastic material. In order to more effectively prevent scratches caused by foreign substances or when placed inside a vehicle, a glass lens may be used as the first lens 111, and the object-side surface of the first lens 111 may have a convex shape to prevent external foreign substances from accumulating. The LIDAR device can detect the distance, direction, speed, temperature, material distribution, and concentration characteristics to an object when the vehicle is running. Such a LIDAR device may be used for an advanced driver assistance system (ADAS). The optical system 110 according to the embodiment may further include a reflective member (not shown) for changing the path of light. The reflective member may be implemented as a prism that reflects the emitted light toward the lenses. The optical system according to the embodiment will now be described in detail.

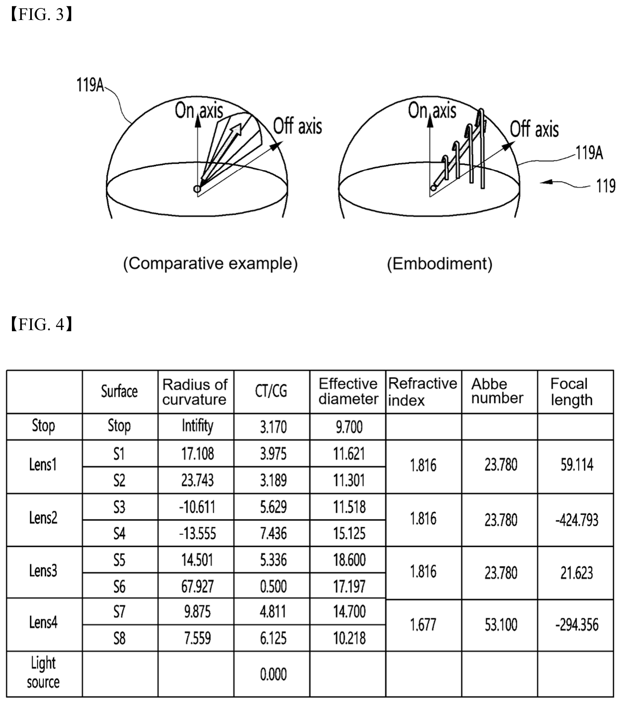

Referring to FIGS. 1 and 4, the transmitting optical system 110 may include first lenses 111 to fourth lenses 114 sequentially aligned along the optical axis OA from the object toward the light source. Laser light generated from the light source 116 is emitted by the fourth lens 114, the third lens 113, the second lens 112, and the first lens 111 and may be irradiated to the subject through the diffuser 119.

The aperture stop ST may be positioned closer to the diffuser 119 than to the object-side surface of the first lens 111. The aperture stop ST may be spaced a predetermined distance CG0 from the apex of the first surface S1 of the first lens 111. Since the first lens 111 adjacent to the light source side of the aperture stop ST has positive refractive power (F1 > 0), the first lens 111 can refract the emitted light along the optical axis and suppress an increase in the distance from the light source side or the rear lens of the first lens 111.

The diffuser 119 is disposed on the object side of the aperture stop ST and can refract light traveling through the aperture stop ST into parallel light toward the subject. As shown in FIGS. 2 and 3, the diffuser 119 of the embodiment uses a microlens array to control the path of the passing light. At this time, a change in the Field of Illumination (FOI) occurs in an on-axis direction separate from the direction of light propagation. The comparative example demonstrates that the FOI shifts off-axis after passing through the microlens array. Here, looking at the optical path after passing through the diffuser 119, the comparative example has an optical path of F*θ, while the embodiment has an optical path of f*sinθ.

The power of the first lens 111 may be positive (+) or negative (-) on the optical axis OA. The power of the first lens 111 is positive (+). The first lens 111 may be made of plastic or glass, for example, glass. The glass-based first lens 111 can reduce changes in the center position and radius of curvature due to temperature changes in the surrounding environment and protect the output surface of the optical system 110. On the optical axis, the first surface S1 on the object side of the first lens 111 may be convex, and the second surface S2 on the light source side may be concave. The first surface S1 and the second surface S2 may have spherical surfaces. The first lens 111 may have a meniscus shape that is convex toward the object side. Differently, the first surface S1 may have a concave shape, and the second surface S2 may have a convex shape, on the optical axis OA. Since the first surface S1 is convex and the second surface S2 is concave, the emitted light may be refracted in a direction close to the optical axis OA, the distance between the first and second lenses 111 and 112 may be reduced, and the effective diameter of the first lens 111 may be reduced. The effective diameter of the light source-side surface of the second lens 112 may be designed to be smaller than the effective diameter of the object-side surface due to the shape of the lens surface of the first lens 111. The first surface S1 of the first lens 111 may be provided without a critical point from the optical axis OA to the end of the effective region, i.e., the edge. The second surface S2 of the first lens 111 may be provided without a critical point.

When the refractive index of the first lens 111 is Nd1, the condition of Nd1 > 1.70 or 2.0 > Nd1 > 1.70 may be satisfied. Since the refractive index Nd1 of the first lens 111 is higher than that of an aspherical lens, the radius of curvature of the first surface S1 of the first lens 111 may be larger than that of an aspherical lens, facilitating lens manufacturing. If the refractive index Nd1 of the first lens 111 is lower than the above condition, the lens surfaces must be formed sharply concave or convex to increase the refractive power of the first and second lenses 111 and 112. However, this can make lens manufacturing difficult, increase the lens defect rate, and lower yields.

Since the first lens 111 is disposed on the light source side of the aperture stop ST and diffuser 119, it may be provided with the thinnest thickness among the lenses. Since the first lens 111 is disposed on the light source side of the aperture stop ST and diffuser 119, it can have the smallest effective diameter among the lenses. Since the first lens 111 is disposed on the light source side of the aperture stop ST and diffuser 119, it can have a radius of curvature greater than the average of the absolute values of the radii of curvature of the second lens 112.

The second lens 112 may be disposed between the first lens 111 and the third lens 113. The power of the second lens 112 may be positive (+) or negative (-) on the optical axis OA. The power of the second lens 112 is negative (-). The second lens 112 may include a plastic or glass material, and may be provided as a spherical lens made of glass, for example. The object-side third surface S3 of the second lens 112 on the optical axis OA may be concave, and the light source-side fourth surface S4 may be convex. The third and fourth surfaces S3 and S4 may be spherical. The third and fourth surfaces S3 and S4 may be provided without a critical point from the optical axis OA to the end of the effective region. Alternatively, the third surface S3 may be convex and the fourth surface S4 may be concave. Alternatively, the second lens 112 may be concave on both sides.

When the refractive index of the second lens 112 is Nd2, the condition of Nd2 > 1.7 or 2.0 > Nd2 > 1.70 may be satisfied. Since the refractive index Nd2 of the second lens 112 is higher than the refractive index of the aspherical lens, the radius of curvature of the third surface S3 of the second lens 112 may be larger than that of the aspherical lens, and the lens may be easily manufactured. Since the fourth surface S4 on the light source side of the second lens 112 is convex and has a small radius of curvature, the center distance between the second lens 112 and the third lens 113 may be spaced apart. Furthermore, if the radius of curvature of the third surface S3 of the second lens 112 is L2R1 and the radius of curvature of the fourth surface S4 is L2R2, the condition may satisfy: |L2R2| > |L2R1|. If this condition is satisfied, the light emitted by the third and fourth surfaces S3 and S4 may be efficiently refracted, preventing the effective diameter of the first lens 111 from increasing and reducing the TTL. If the condition satisfies: |L2R2| < |L2R1|, the center distance between the first and second lenses 111 and 112 is reduced, causing significant aberrations on the light source side of the second lens 112 and degrading the light refractive efficiency on the object side.

The power of the third lens 113 may be positive (+) or negative (-) on the optical axis OA. The power of the third lens 113 may be positive (+). The third lens 113 may include a plastic or glass material, and may be, for example, a glass material. The fifth surface S5 on the object side of the third lens 113 on the optical axis may be convex, and the sixth surface S6 on the light source side may be concave. The third lens 113 may have a meniscus shape convex toward the object from the optical axis OA. At least one or both of the fifth surface S5 and the sixth surface S6 may be spherical. At least one or both of the fifth surface S5 and the sixth surface S6 may be provided without a critical point from the optical axis OA to the end of the effective region. Alternatively, the third lens 113 may have a meniscus shape that is convex on both sides or convex toward the light source. Alternatively, the third lens 113 may have a concave shape on both sides of the optical axis.

If the refractive index of the third lens 113 is Nd3, the condition of Nd3 > 1.7 or 2.0 > Nd3 > 1.70 may be satisfied. The first to third lenses 111, 112, and 113 may be made of the same glass material. The first to third lenses 111, 112, and 113 may have the same refractive index. If the Abbe number of the third lens 113 is Vd3, the condition may satisfy: Vd3 < Vd4. Furthermore, the condition may satisfy: Nd4 < Nd3. Nd4 is the refractive index of the fourth lens 114. Vd4 is the Abbe number of the fourth lens 114.

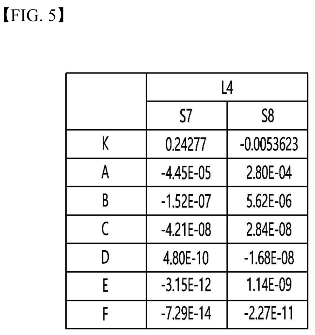

The power of the fourth lens 114 may have a positive (+) or negative (-) refractive power on the optical axis OA. The power of the fourth lens 114 is negative. The fourth lens 114 may include a plastic or glass material, and may be provided as a glass material. The fourth lens 114 may be an injection-molded glass mold. The object-side seventh surface S7 of the fourth lens 114 on the optical axis may be convex, and the light source-side eighth surface S8 may be concave. The fourth lens 114 may have a meniscus shape that is convex toward the object on the optical axis OA. At least one or both of the seventh surface S7 and the eighth surface S8 may be aspherical. The aspherical coefficients of the seventh and eighth surfaces S7 and S8 may be provided as S7 and S8 of L4 of FIG. 5. The seventh surface S7 may be provided without a critical point from the optical axis OA to the end of the effective region. The eighth surface S8 may be provided without a critical point from the optical axis OA to the end of the effective region. As another example, at least one of the seventh surface S7 and the eighth surface S8 may have a critical point. Here, the critical point may be a point where the sign of the slope value with respect to the optical axis OA and the direction perpendicular to the optical axis OA changes from positive (+) to negative (-) or from negative (-) to positive (+), and may mean a point where the slope value is 0. In addition, the critical point may be a point where the slope value of a tangent line passing through the lens surface increases and then decreases, or a point where the slope value decreases and then increases. Alternatively, the fourth lens 114 may have a convex meniscus shape toward the light source. Alternatively, the fourth lens 114 may have a shape in which both sides are concave on the optical axis OA.

The effective diameter of the fourth lens 114 may be smaller than that of the third lens 113. The effective diameter of the third lens 113 may be the largest among the lenses. Furthermore, the effective diameters of the first lens 111 and the n-th (last) lens may be smaller than the effective diameters of at least two lenses positioned between the first lens 111 and the n-th (last) lens. The fourth lens 114 may have a lower refractive index than those of the first, second, and third lenses 111, 112, and 113, and a higher Abbe number than those of the first, second, and third lenses 111, 112, and 113. The powers of the first lens 111 and the third lens 113 may have positive values, and the powers of the second and fourth lenses 112 and 114 may have negative values. At least one of the object-side surface and the light source-side surface of the fourth lens 114 may have a free-form surface, i.e., a non-rotationally symmetrical surface. The fourth lens 114 may be an aspherical lens closest to the light source 116. The aspherical lens surface can improve aberrations such as spherical aberration and chromatic aberration.

The center thicknesses of the first to fourth lenses 111 to 114 are represented by CT1 to CT4, the edge thicknesses, which are the ends of the effective regions of each lens, are represented by ET1 to ET4, and the center distance between two adjacent lenses is represented by CG1 to CG3. The first to fourth lenses 111 to 114 may satisfy at least one of the following conditions:

$$\text{Condition 1: } CT1 < CT3 < CT2$$

$$\text{Condition 2: } CT1 < CT4 < CT3$$

$$\text{Condition 3: } (CT3\text{-}CT4) < (CT2\text{-}CT1)$$

$$\text{Condition 4: } ET3 < ET1 < ET2$$

$$\text{Condition 5: } ET1 < ET4 < ET2$$

$$\text{Condition 6: } ET4 < ET2 < CT3 < CT2$$

$$\text{Condition 7: } CG1 < CT1 < CT4 < CG2$$

$$\text{Condition 8: } CG3 < ET2 < CT2 < CG2$$

$$\text{Condition 9: } CG1+CG3 < CG2$$

The center thickness CT2 of the second lens 112 is the largest among the lenses, and the center thickness CT1 of the first lens 111 is the smallest among the lenses. The maximum center thickness may be 1 mm or more thicker than the minimum center thickness. That is, lenses made of spherical material can be provided with a thick center thickness to reduce the total number of lenses, and by arranging aspherical lenses, a deterioration in optical performance can be prevented, and the size (light source height) of the sensor system can be provided in a slim manner.

Since the aperture stop ST and diffuser 119 are disposed on the object side of the first lens 111, the center thickness of the first lens 111 is thinner than that of the second lens 112, and the radius of curvature is larger than that of the second lens 112, allowing light incident through the second lens 112 to be refracted toward the diffuser 119.

Regarding the center distance CG between adjacent lenses, the center distance CG2 between the second lens 112 and the third lens 113 is maximum, while the center distance CG3 between the third and fourth lenses 113 and 114 is minimum. Here, the difference between the maximum center distance and the minimum center distance may be 5 mm or greater, for example, in the range of 5 mm to 8 mm. Furthermore, by ensuring that the maximum center distance between the lenses is greater than the maximum center thickness of each lens, a transmitting optical system may be provided that does not increase the center distance between the aspherical lens and the spherical lens. Furthermore, since the maximum center distance between the lenses is greater than the minimum center thickness of each lens, the optical path may be controlled.

Among the first to fourth lenses 111-114, the maximum distance between adjacent lenses is CGmax, and among the first to fourth lenses 111-114, the minimum distance between adjacent lenses is CGmin, satisfying the Mathematical expression: 12 < CGmax / CGmin < 18.

In addition, since the center distance CG2 between the second lens 112 and the third lens 113 is increased, the effective diameters of the first and second lenses 111 and 112 may be provided to be smaller than the effective diameter of the third lens 113. The effective diameter of the third lens 113 may be the largest among the lenses. In addition, since the radius of curvature of the third lens 113 is the largest among the lenses, the light incident through the fourth lens 114 may be refracted to the second lens 112 without loss. The lens having the maximum effective diameter may be a spherical lens made of glass, i.e., the third lens 113. The lens surface having the maximum effective diameter may be the fifth surface S5 of the third lens 113. The lens having the minimum effective diameter may be the first lens 111 adjacent to the aperture stop ST. The lens surface having the minimum effective diameter may be the eighth surface S8 of the fourth lens 114. The effective diameters of each of the first to fourth lenses 111-114 may be greater than the diagonal length of the light source 116. The fourth lens 114 has an aspherical surface and can guide incident light to a spherical lens.

FIG. 4 is an example of lens data of the transmitting optical system of the embodiment of FIG. 1. As shown in FIG. 4, the radius of curvature of the first to fourth lenses 111, 112, 113, and 114 on the optical axis OA, the center thickness CT of the lenses, the center distance CG between the lenses, the refractive index at the d-line, the Abbe number, and the size of the effective radius may be set. As illustrated in FIG. 5, the lens surface of the fourth lens 114 of the exemplary embodiment may include an aspherical surface having a conic constant K and a 14th-order aspherical coefficient A to F. For example, the object-side surface and the light source-side surface of the fourth lens 114 may be lens surfaces having a 14th-order aspherical coefficient. As described above, an aspherical surface having a 14th-order aspherical coefficient (a non-zero value) can significantly change the aspherical shape of the peripheral portion, thereby effectively compensating for the optical performance of the peripheral portion of the field of view (FOV).

The focal lengths F1 and F3 of the first and third lenses 111 and 113 may have positive refractive power, while the focal lengths F2 and F4 of the second and fourth lenses 112 and 114 may have negative refractive power. Additionally, the second lens 112 and the third lens 113, which are adjacently positioned lenses, may satisfy the following conditions.

Condition 1: The refractive index of the lens with positive refractive power < the refractive index of the lens with negative refractive power

Condition 2: The dispersion of the lens with positive refractive power > the dispersion of the lens with negative refractive power

Here, since the second lens 112 has negative refractive power and the third lens 113 has positive refractive power, the dispersion values of the second and third lenses may be adjusted according to Conditions 1 and 2.

Comparing the absolute focal lengths, the fourth lens 114 has the largest focal length among the lenses, and may be 150 or greater. Accordingly, the optical system can achieve improved MTF characteristics, aberration control characteristics, and other characteristics within the set field of view range, thereby achieving superior optical performance.

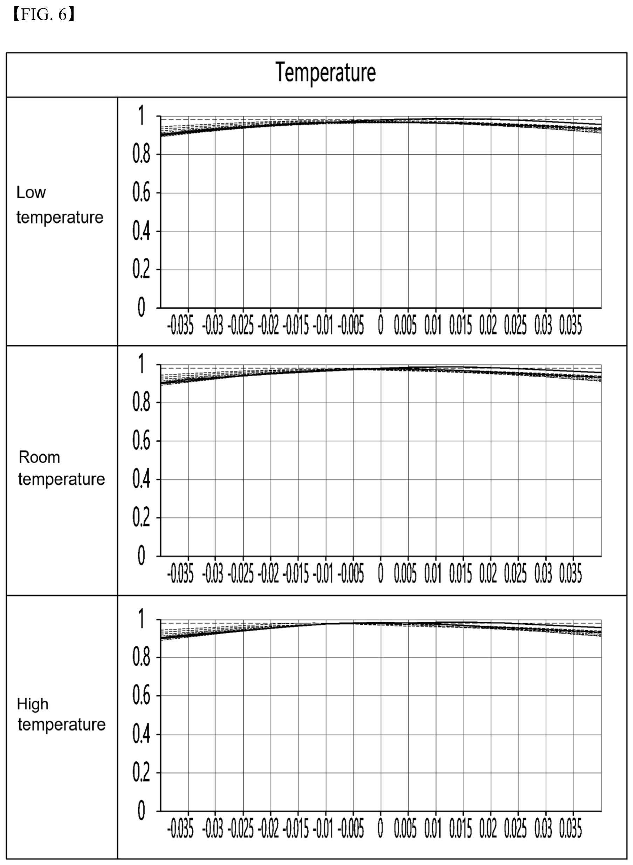

FIG. 6 is a graph showing the diffraction MTF (Modulation Transfer Function) at low, room, and high temperatures in the transmitting optical system of FIG. 1, and is a graph showing the modulation ratio according to spatial frequency. As shown in FIG. 6, in an embodiment of the invention, the deviation of the MTF between low and high temperatures relative to room temperature may be less than 10%, i.e., 7% or less. Here, each MTF curve was measured from 0.000 mm to 3.946 mm in 0.380 mm increments.

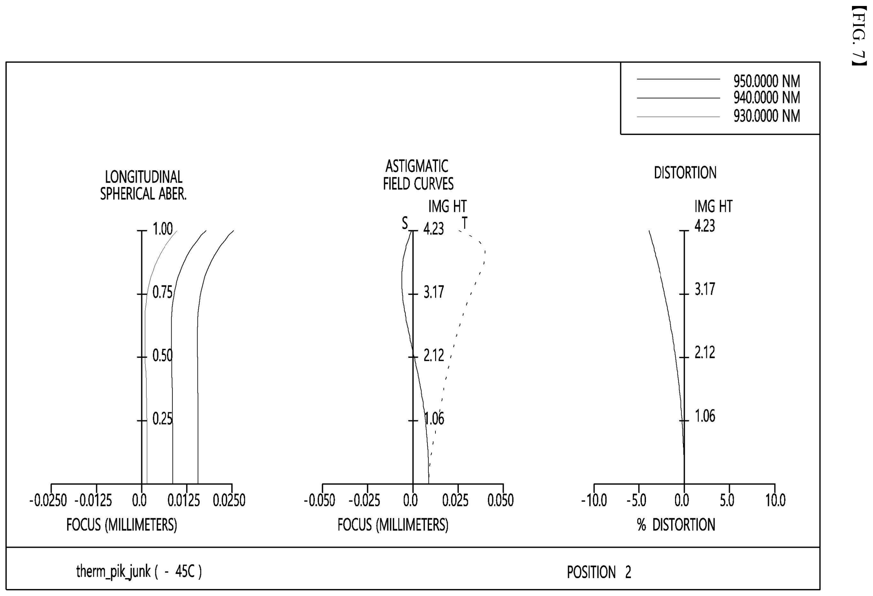

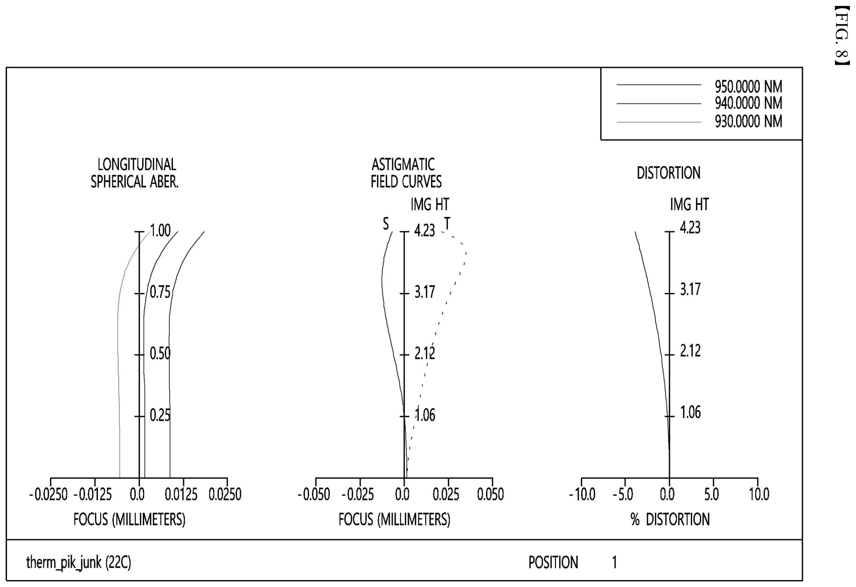

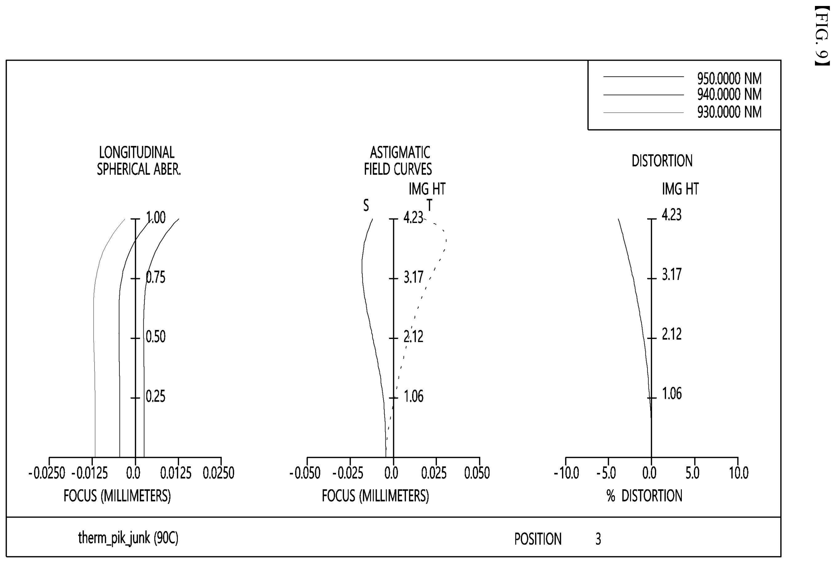

FIGS. 7 to 9 are graphs showing the aberration characteristics of the transmitting optical system of FIG. 1 at low, room, and high temperatures. The graphs in FIGS. 7 to 9 show spherical aberration, astigmatic field curves, and distortion measured from left to right. In FIGS. 7 to 9, the X-axis may represent the focal length (mm) and distortion (%), and the Y-axis may represent the light source height (height). In addition, the graph for spherical aberration is a graph for light in a wavelength band of about 930 nm, about 940 nm, and about 950 nm, and the graph for astigmatism and distortion is a graph for light in a wavelength band of about 940 nm. In the aberration diagrams of FIGS. 7 to 9, the closer the respective curves at low temperature, room temperature, and high temperature are to the Y-axis, the better the aberration correction function may be interpreted. Here, the low temperature is -20 degrees or lower, for example, in the range of -20 to -50 degrees, the room temperature is in the range of 22 degrees ± 5 degrees or in the range of 18 degrees to 27 degrees, and the high temperature may be 85 degrees or higher, for example, in the range of 85 degrees to 120 degrees. Accordingly, it may be seen that the modulation reduction from low to high temperatures in FIGS. 7 to 9 is less than 10%, for example, 5% or less, or barely changes.

Optical systems experience chromatic aberration, and spaced aspherical lenses are used to correct this aberration. As the temperature changes from low to high, the lenses contract and expand repeatedly. Since lenses made of the same material exhibit the same degree of change in lens characteristics with temperature changes, it is effective to compensate for chromatic aberration between lenses made of the same material, even when the temperature changes. For example, as shown in Table 1, when the temperature of the lens barrel or receiving optical system varies from -45°C (low temperature), 22°C (room temperature), and 90°C (high temperature), the optical characteristics show almost no change. Table 1 compares the changes in optical characteristics such as EFL, BFL, F number (F#), TTL, and FOV at room temperature, low temperature, and high temperature in an optical system according to an embodiment, and it may be seen that the change rate of optical characteristics at low temperature is 5% or less, for example, 3% or less or 2% or less, based on room temperature, and the change rate of optical characteristics at high temperature is 5% or less, for example, 3% or less or 2% or less, based on room temperature.

[Table 1]

|  | Low temperature | Room temperature | High temperature | Low temperature/ Room temperature (%) | High temperature/ Room temperature (%) |
|---|---|---|---|---|---|
| EFL | 15.276 | 15.285 | 15.296 | 99.94% | 100.07% |
| BFL | 6.116 | 6.125 | 6.135 | 99.85% | 100.16% |
| FNO | 1.575 | 1.576 | 1.578 | 99.94% | 100.13% |
| TTL | 36.962 | 37.000 | 37.038 | 99.90% | 100.10% |
| FOV | 32.140 | 32.130 | 32.100 | 100.03% | 99.91% |

Therefore, as shown in Table 1, it may be seen that the change in optical characteristics according to the temperature change from low temperature to high temperature, for example, the change rate of effective focal length (EFL), TTL, BFL, F number, and FOV, is 10% or less, that is, 5% or less, for example, in the range of 0 to 5%. This means that even if at least one aspherical lens is used, the design enables temperature compensation for the aspherical lens, thereby preventing a decrease in the reliability of the optical characteristics. The transmitting optical system of the embodiment disclosed above can effectively control aberration characteristics such as chromatic aberration and distortion aberration, and can have good optical performance at the center and periphery of the FOV. Here, EFL is the effective focal length of the receiving optical system, BFL is the optical axis distance from the final lens, i.e., the fourth lens 104, to the surface of the light source 116, Fno is the F number of the optical system, TTL is the optical axis distance from the first lens 111 to the surface of the light source 116, and FOV is the field of view of the receiving optical system.

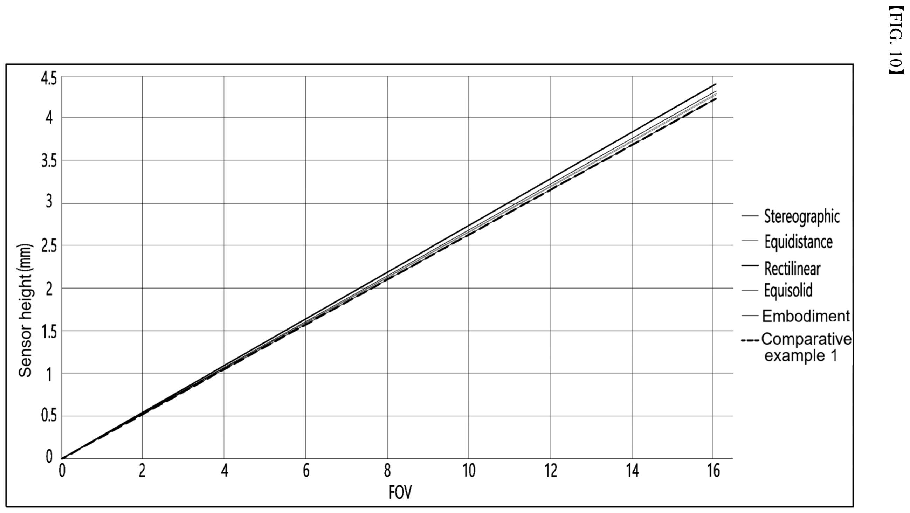

Referring to FIG. 10, the transmitting optical system 110 may have distortion characteristics set relative to the design criteria (comparative example) as it moves from a 0-degree field of view to a maximum half-field of view (HALF FOV). For example, the embodiment of the optical system 110 may exhibit distortion characteristics that increase as the light source height increases from a 0-degree field of view to a maximum half-field of view. Furthermore, the embodiment may exhibit distortion characteristics that are satisfactory compared to other examples of mapping, such as Stereographic, Equidistance, Rectilinear, and Equisolid. Specifically, the embodiment may satisfy distortion characteristics compared to Example 1. Furthermore, the receiving optical system 110 can have distortion characteristics set as compared to other examples as it progresses from a 0-degree field of view to a maximum half-angle, thereby providing an optical system that satisfies the orthographic projection type. Here, the ratio of the distortion characteristics can refer to the value of the light source height at a specific half-angle position, calculated as ((Other Example - Example)/Example * 100). Accordingly, the optical system according to the embodiment can prevent changes in optical characteristics due to temperature changes in the temperature range from low (-40 degrees Celsius) to high (120 degrees Celsius) based on the Equal Area mapping method, and can provide improved optical performance across a wide temperature range.

The transmitting optical system according to the embodiment of the invention can prevent degradation of optical performance from low to high temperatures by considering the characteristics of vehicle optical systems. For example, after designing a lens at room temperature, the value of the dn/dt, which is a temperature-dependent refractive index change coefficient, is assembled by considering the power combination of each lens, and the value of the temperature coefficient (dn/dt) according to the refractive index of the lens and the defocus for the thickness variable according to low, room, and high temperatures may be set to 5 μm or less. To this end, the first to third lenses 111, 112, and 113 are made of a spherical glass material, and the fourth lens 114 is made of an aspherical glass material.

The optical system 110 according to the embodiment disclosed above may satisfy at least one or two or more of the Mathematical expressions described below. Accordingly, the optical system 110 according to the embodiment can have improved optical characteristics. For example, if the optical system 110 satisfies at least one Mathematical expression, the optical system 110 can effectively control aberration characteristics such as chromatic aberration and distortion aberration, and can achieve excellent optical performance at both the center and periphery of the FOV. Furthermore, the optical system 110 can have improved resolution. Furthermore, the thicknesses of the lenses along the optical axis OA and the distance between adjacent lenses along the optical axis OA described in the Mathematical expressions may be referenced to the embodiments disclosed above.

[Mathematical expression 1] $0 < CT1 / CT2 < 3$

CT1 is the center thickness of the first lens 111, and CT2 is the center thickness of the second lens. By setting the center thickness CT1 of the first lens 111 and the center thickness CT2 of the second lens 112 in Mathematical expression 1, a decrease in the rigidity of the first lens 111 may be prevented, and factors affecting aberrations may be controlled.

Preferably, Mathematical expression 1 may satisfy: 0 < CT1 / CT2 < 1.

$$\text{[Mathematical expression 2]} \quad 0 < CT4 / CT3 < 1$$

CT3 and CT4 are the center thicknesses of the third and fourth lenses 113 and 114. By setting the center thicknesses of the third and fourth lenses 113 and 114 in Mathematical expression 2, the rigidity and optical characteristics of the glass lens may be prevented from deteriorating, and factors affecting aberration may be controlled. Preferably, Mathematical expression 2 may satisfy: 0 < CT4 / CT3 < 0.6.

$$\text{[Mathematical expression 3]} \quad 0 < CT2 / CT3 < 3$$

By setting the center thicknesses of the second and third lenses 112 and 113 in Mathematical expression 3, thermal compensation may be optimized according to temperature changes from low to high temperatures, and deterioration of optical performance may be prevented. Preferably, Mathematical expression 3 may satisfy: 1 < CT2/CT3 < 1.5.

$$\text{[Mathematical expression 4]} \quad 1 < CG2 / CT2 < 3$$

CG2 is the center distance between the second and third lenses 112 and 113. In Mathematical expression 4, by setting the center distance between the second and third lenses 112 and 113 within the above range, light refracted through the aspherical fourth lens 114 may be guided along the distance CG3 between the second and third lenses 112 and 113. Preferably, Mathematical expression 4 may satisfy: 1 < CG2 / CT2 < 2.

$$\text{[Mathematical expression 5]} \quad 0 < CG2 / (CT3+CT4) < 1$$

In Mathematical expression 5, by setting the center distance CG2 between the second and third lenses 112 and 113 to be smaller than the sum of the center thicknesses CT3 and CT4 of the third and fourth lenses 113 and 114, an increase in the effective diameter of the second lens 112 may be prevented. Furthermore, the effective diameter of the second lens 112 may be adjusted by the effective diameter of the third lens 113 and the distance CG2.

$$\text{[Mathematical expression 6]} \quad 1 < CG2 / CG1 < 3$$

CG1 is the center distance between the first and second lenses 111 and 112. In Mathematical Expression 6, the center distance CG1 between the first and second lenses 111 and 112 and the center distance CG2 between the second and third lenses 112 and 113 may be set to determine the center distance between the spherical lenses. Preferably, 2 < CG1 / CG2 < 2.7 may be satisfied.

$$\text{[Mathematical Expression 7]} \quad 5 < CG2 / CG3 < 20$$

In Mathematical Expression 7, the center distance CG2 between the second and third lenses 112 and 113 may be set to be greater than the center distance CG3 between the third and fourth lenses 113 and 114, thereby reducing the center distance between the spherical lenses and the aspherical lenses more than the center distance between the object-side spherical lenses. Preferably, 10 < CG2 / CG3 < 20 may be satisfied.

$$\text{[Mathematical expression 8]} \quad 0 < CG2 / (CT1+CG1+CT2) < 1$$

In mathematical expression 8, the center distance CG2 between the second and third lenses 112 and 113 may be set to be smaller than the optical axis distance between the object-side surface of the first lens 111 and the light source-side surface of the second lens 112. Accordingly, the effective diameter of the object-side surface of the first lens 111 may be set to be smaller than the effective diameter of the object-side surface of the second lens 102, and the second lens 112 may be set to have a convex meniscus shape toward the light source 116. Preferably, 0.3 < CG2 / (CT1+CG1+CT2) < 0.7 may be satisfied.

$$\text{[Mathematical expression 9]} \quad TTL < SD$$

SD is the optical axis distance from the aperture stop ST to the surface of the light source 116, and TTL is the optical axis distance from the object-side surface of the first lens to the surface of the light source. Preferably, 1 < SD/TTL < 1.5, and more preferably, 1 < SD/TTL < 1.2. When the optical system satisfies Mathematical expression 9, the aperture stop ST may be positioned at the furthest point from the light source 116, i.e., closer to the object than the first lens 111, thereby controlling the amount of light emitted.

$$[\text{Mathematical expression 10}]\ 1.70 < Nd1$$

Nd1 is the refractive index at the d-line of the first lens 111. In mathematical expression 10, by setting the refractive index of the first lens 111 high, the factor affecting the reduction of the third-order aberration (Seidel aberration) of the optical system may be adjusted, and the aberration that may occur as the TTL becomes somewhat longer may be reduced. Mathematical expression 10 may preferably satisfy 1.75 < Nd1 < 2.0. If it is designed to be lower than the lower limit of mathematical expression 10, the performance of reducing aberration may be obtained, and the refractive power of the first lens may be weakened so that light cannot be collected efficiently, which may lower the performance of the optical system. If it is designed to be higher than the upper limit of mathematical expression 10, there is a disadvantage in that it becomes difficult to obtain materials. In addition, if the refractive index of the first lens 111 is designed to be lower than the lower limit of mathematical expression 10, the radius of curvature of the first and second lenses may be increased in order to increase the refractive power of the first and second lenses.

$$[\text{Mathematical expression 10-1}]\ 1.7 < Aver(Nd1{:}Nd4) < 1.8$$

Aver(Nd1:Nd4) is the average of the refractive indices at the d-line of the first to fourth lenses. If Mathematical expression 10-1 is satisfied, the optical system 110 can suppress the influence of TTL.

$$[\text{Mathematical expression 10-2}]\ GMn\_Aver < GLn\_Aver$$

GLn_Aver is the average of the refractive indices at the d-line of the spherical glass lenses, and GMn_Aver is the average of the refractive indices at the d-line of the aspherical glass lenses. The spherical lens is a non-injection-molded glass lens, and the aspherical lens is a glass lens made of a glass mold. Spherical lenses with high refractive indices are positioned on the object side of the aspherical lens, which can increase chromatic dispersion.

$$[\text{Mathematical expression 11}]\ 0.5 < Nd1/Nd3 < 1.5$$

Nd1 and Nd3 are the refractive indices at the d-line of the first and third lenses 111 and 113. In Mathematical expression 11, by reducing the difference in the refractive index of the first lens 111 with that of the third lens 113, color dispersion caused by glass lenses may be prevented. Preferably, the refractive indices of the first, second, and third lenses may be identical.

$$[\text{Mathematical expression 12}]\ 1 < Nd3/Nd4 < 1.5$$

Nd3 and Nd4 are the refractive indices at the d-line of the third and fourth lenses 113 and 114. In Mathematical expression 12, by setting the refractive index of the third lens 113 higher than that of the fourth lens 114, color dispersion caused by spherical lenses and color dispersion caused by aspherical lenses may be controlled. Preferably, Mathematical expression 12 may satisfy: 1 < Nd3/Nd4 < 1.2.

$$[\text{Mathematical expression 13}]\ (Vd1{*}Nd1) < (Vd4{*}Nd4)$$

Nd1 and Nd4 are the refractive indices of the first and fourth lenses 111 and 114 at the d-line, and Vd1 and Vd4 are the Abbe numbers of the first and fourth lenses. In Mathematical expression 13, by setting the product of the refractive index and Abbe number of the first lens 111 to be smaller than the product of the refractive index and Abbe number of the fourth lens 114, the chromatic dispersion caused by spherical lenses and the chromatic dispersion caused by aspherical lenses may be controlled.

$$[\text{Mathematical expression 14}]\ TD < SD$$

SD is the optical axis distance from the aperture stop ST to the surface of the light source 116, and TD is the optical axis distance from the object-side surface of the first lens 111 to the light source-side surface of the fourth lens 114. If the optical system satisfies Mathematical expression 14, the aperture stop ST may be positioned closer to the object side than the first lens 111.

$$[\text{Mathematical expression 14-1}]\ TD < TTL < SD$$

SD is the optical axis distance from the object-side surface of the first lens 111 to the light source 116. If Mathematical expression 14-1 is satisfied, the position of the aperture stop ST may be set to be closer to the object side than the first lens 111.

$$[\text{Mathematical expression 15}]\ 1 < CA42 < CT4 < 3$$

CA42 is the effective diameter of the light source side of the fourth lens 114, and CT4 is the center thickness of the fourth lens. If Mathematical expression 15 is satisfied, the effective diameter of the last lens may be set so as not to be large compared to the center thickness. Preferably, 1.5 < CA42 < CT4 < 2.5 may be satisfied.

$$[\text{Mathematical expression 16}]\ CA42/2 < CG2 < CA11$$

CA11 is the effective diameter of the object-side surface of the first lens. If Mathematical expression 16 is satisfied, the center distance between the second and third lenses may be increased, and the effective diameter of the fourth lens may be set so as not to increase.

$$[\text{Mathematical expression 17}]\ 0.5 < CA11 < (CG1+CG2) < 1.5$$

In Mathematical expression 17, the effective diameter CA11 of the object-side surface of the first lens and the center distance between the first and second lenses The distance CG1 and the center distance CG2 between the second and third lenses may be set, and when this is satisfied, the number of lenses of the spherical lenses may be reduced. Preferably, 1 < CA11 < (CG1+CG2) < 1.2 may be satisfied.

$$[\text{Mathematical expression 18}]\ 0.5 < CA11 / CA21 < 1.5$$

CA11 refers to the effective diameter of the first surface S1 of the first lens 111, and CA21 refers to the effective diameter of the third surface S3 of the second lens 112. When mathematical expression 18 is satisfied, the optical system 110 can control the emitted light and set factors affecting aberration, and preferably, CA11 > CA21 may be satisfied.

$$[\text{Mathematical expression 19}]\ 0.4 < CA22 / CA31 < 1.5$$

CA22 refers to the effective diameter of the second lens 112. CA31 refers to the effective diameter of the fourth surface S4, and CA31 refers to the effective diameter of the fifth surface S5 of the third lens 113. When Mathematical Expression 19 is satisfied, the optical system 110 can control the light path that is emitted and can set the light source-side surface of the second lens 112 to a convex shape. Preferably, Mathematical Expression 19 may satisfy: 0.6 < CA22 / CA31 < 1.

$$[\text{Mathematical Expression 19-1}]\ 0.8 < (CA11 + CA31) / (CA21 + CA41) < 1.2$$

CA41 refers to the effective diameter of the object-side surface S7 of the fourth lens 114. When Mathematical Expression 19-1 is satisfied, the optical system 110 can set the light path that is emitted, for example, the light paths of the first to fourth lenses 111-114.

$$[\text{Mathematical expression 20}]\ 0.5 < CA11 / ST\_CA < 1.5$$

CA11 refers to the effective diameter of the first surface S1 of the first lens 111, and ST_CA refers the effective diameter of the aperture stop ST. When mathematical expression 20 is satisfied, the optical system 110 can set a light path that is emitted toward the aperture stop ST through the first lens 111. Preferably, mathematical expression 20 may satisfy: 1 < CA11 / ST_CA < 1.3.

$$[\text{Mathematical expression 21}]\ 1 < CA11 / CG0 < 5$$

CA11 refers to the effective diameter of the first surface S1 of the first lens 111, and CG0 represents the optical axis distance between the first lens 111 and the aperture stop ST or diffuser 119. When the optical system 110 satisfies Mathematical expression 21, the effective diameter and radius of curvature of the first lens 111 may be adjusted. Mathematical expression 21 preferably satisfies: 3 < CA11 / CG0 < 4.

$$[\text{Mathematical expression 22}]\ 0.5 < CG0 / CT1 < 1.5$$

When the optical system satisfies Mathematical expression 22, the optical axis distance between the first lens 111 and the aperture stop ST or diffuser 119 and the center thickness of the first lens 111 may be set, thereby controlling distortion aberration. Preferably, 0.5 < CG0 / CT1 < 1 may be satisfied.

$$[\text{Mathematical expression 23}]\ 0 < ST\_CA / CA\_Min < 1$$

CA_Min represents the smallest effective diameter among the lens surfaces of the lenses. When the optical system satisfies Mathematical expression 23, the overall optical axis length may be controlled. Preferably, 0.5 < ST_CA / CA_Max < 1 may be satisfied.

$$[\text{Mathematical expression 24}]\ 1 < CG\_Max / CG0 < 4$$

CG_Max represents the maximum center distance between lenses in the optical system. When the optical system satisfies Mathematical expression 24, the maximum center distance between the lenses can set the relationship between the optical axis distance between the first lens 111 and the aperture stop ST or diffuser 119, thereby controlling the overall optical axis length and suppressing an increase in the effective diameter of the first lens 111. Preferably, 1.5 < CG_Max / CG0 < 3 or 1.5 < CG2 / CG0 < 3 may be satisfied.

$$[\text{Mathematical expression 25}]\ 0.5 < CT4 / BFL < 1.5$$

CT4 is the center thickness of the fourth lens, and BFL is the optical axis distance from the center of the light source-side surface of the last lens to the light source 116. That is, BFL is the optical axis distance from the center of the eighth surface S8 of the fourth lens 114 to the light source 116. When mathematical expression 25 is satisfied, the emitted light may be transmitted to the entire area of the third lens 103 by the fourth lens 114. Preferably, 0.5 < CT4 / BFL < 1 may be satisfied.

$$[\text{Mathematical expression 26}]\ 0 < CG3 / CT4 < 1$$

CG3 represents the center distance between the third and fourth lenses, and CT4 represents the center thickness of the fourth lens. When Mathematical expression 26 is satisfied, the center distance between the third and fourth lenses 113 and 114 may be narrowed, and the effective diameter of the fourth lens 114 may be adjusted. Preferably, 0 < CG3 / CT4 < 0.3 may be satisfied.

$$[\text{Mathematical expression 27}]\ 2 < ST\_CA / CG0 < 4$$

When the transmitting optical system satisfies Mathematical expression 27, the position of the diffuser 119 may be set, and due to the diffuser 119, the transmitting optical system and the receiving optical system may be optically matched even if they have different aspect ratios. Preferably, 2.5 < ST_CA / CG0 < 3.5 may be satisfied.

$$[\text{Mathematical expression 28}]\ 1 < L4R2 / CT4 < 5$$

L4R2 is the radius of curvature of the light source-side surface of the fourth lens. When mathematical expression 28 is satisfied, the refractive power of the fourth lens 114 may be controlled and optical performance may be improved. Preferably, 1 < L4R2 / CT4 < 2 may be satisfied.

$$[\text{Mathematical expression 29}]\ 0.5 < L4R2 / L4R1 < 1.5$$

L4R1 is the radius of curvature of the object-side surface of the fourth lens. When mathematical expression 29 is satisfied, the refractive power of the fourth lens 114 may be controlled and optical performance may be improved. Preferably, 0.5 < L4R2 / L4R1 < 1 may be satisfied.

$$[\text{Mathematical expression 30}]\ 0 < L1R1 / L1R2 < 3$$

L1R1 is the radius of curvature of the object-side surface of the first lens, and L1R2 is the radius of curvature of the light-source-side surface of the first lens. When mathematical expression 30 is satisfied, the refractive power of the first lens 111 may be controlled and optical performance may be improved. Preferably, 0 < L1R1 / L1R2 < 1 is satisfied, in which case the distance between the first lens 111 and the aperture stop ST or diffuser 119 may be set. In addition, L1R1 > 0 and L1R2 > 0 may be satisfied.

$$[\text{Mathematical expression 31}]\ 0.5 < |L2R1 / L2R2| < 1.5$$

L2R1 is the radius of curvature of the object-side surface of the second lens, and L2R2 is the radius of curvature of the light-source-side surface of the second lens. When Mathematical Expression 31 is satisfied, the optical performance may be improved by controlling the refractive power of the second lens 112, and the incidence efficiency through the light source-side surface of the second lens 112 may be improved. Preferably, 0.5 < |L2R1 / L2R21 < 1 is satisfied, and L2R1 < 0 and L2R2 < 0 may be satisfied.

$$[\text{Mathematical Expression 31-1}]\ 2 < L3R2 / L3R1 < 6$$

L3R1 is the radius of curvature of the object-side surface of the third lens, and L3R2 is the radius of curvature of the light source-side surface of the third lens. When Mathematical Expression 31-1 is satisfied, the optical performance may be improved by controlling the refractive power of the third lens 113, and light may be refracted into the effective region of the second lens 112 through the object-side surface of the third lens 113. Preferably, 3 < L3R2 / L3R1 < 5.5 is satisfied, and L3R1 > 0 and L3R2 > 0 may be satisfied.

$$[\text{Mathematical Expression 32}]\ 0 < CT\_Max / CG\_Max < 2$$

In Mathematical Expression 32, the maximum center thickness CT_Max among the lenses and the maximum distance CG_Max between adjacent lenses may be set. When Mathematical Expression 32 is satisfied, the optical system can have good optical performance at the focal length of the set field of view and can reduce the TTL. Preferably, 0.5 < CT_Max / CG_Max < 1 may be satisfied.

$$[\text{Mathematical Expression 33}]\ 1 < \Sigma CT / \Sigma CG < 3$$

$\Sigma CT$ is the sum of the center thicknesses of the lenses, and $\Sigma CG$ is the sum of the distances between adjacent lenses. When mathematical expression 33 is satisfied, the optical system can have good optical performance at a focal length at a set field of view and can reduce the TTL. Preferably, 1.5 < $\Sigma CT / \Sigma CG$ < 2 may be satisfied.

$$[\text{Mathematical expression 34}]\ 5 < \Sigma Nd < 15$$

$\Sigma Nd$ represents the sum of the refractive indices at the d-line of each of the plurality of lenses. When mathematical expression 34 is satisfied, the TTL may be controlled in an optical system 110 comprising a mixture of aspherical lenses and spherical lenses. Furthermore, when the number of spherical lenses is greater than the number of aspherical lenses, the sum of the TTL and the refractive indices may be set. Mathematical expression 34 preferably satisfies: $6 \le \Sigma Nd \le 10$.

$$[\text{Mathematical expression 35}]\ 10 < \Sigma Vd / \Sigma Nd < 50$$

ΣVd represents the sum of the Abbe numbers of each of the plurality of lenses. When Mathematical expression 35 is satisfied, the optical system 110 can have improved aberration characteristics and resolution. By setting the sum of the Abbe numbers and the sum of the refractive indices of the lenses in Mathematical expression 35, optical characteristics may be controlled. Preferably, 13 < ΣVd / ΣNd < 23 may be satisfied.

$$[\text{Mathematical expression 36}] \; 50 < \Sigma CT*n < 100$$

ΣCT represents the sum of the center thicknesses of the plurality of lenses, and n represents the number of lenses in the optical system. When Mathematical expression 36 is satisfied, TTL may be controlled. Preferably, 70 < ΣCT*n < 90 may be satisfied.

$$[\text{Mathematical expression 37}] \; 0 < \Sigma CT / \Sigma ET < 2$$

ΣCT is the sum of the center thicknesses of the lenses, and ΣET is the sum of the edge thicknesses, i.e., the ends of the effective regions of the lenses. When Mathematical expression 37 is satisfied, the optical system can exhibit good optical performance at the focal length and the set field of view, and can reduce the TTL. Mathematical expression 37 preferably satisfies: 1 < ΣCT / ΣET < 1.6.

$$[\text{Mathematical expression 38}] \; 1 < CA11 / CA\_Min < 5$$

CA11 represents the effective diameter of the object-side first surface S1 of the first lens, and CA_Min represents the minimum effective diameter among the object-side and light-source-side surfaces of the lenses. When Mathematical expression 38 is satisfied, the optical system can control incident light, maintain optical performance, and provide a slimmer module. Mathematical expression 38 preferably satisfies: 1 < CA11 / CA_Min < 3. Here, CA42 may be the minimum effective diameter among the lens surfaces.

$$[\text{Mathematical expression 38-1}] \; 1 < CA\_Max / CA\_Min < 5$$

CA_Max represents the maximum effective diameter among the object-side and light-source-side surfaces of the lenses. When Mathematical expression 39 is satisfied, the optical system can maintain optical performance while setting the size for a slim and compact structure. Mathematical expression 39 preferably satisfies: 1 < CA_Max / CA_Min < 3 or 1.5 < CA_Max/CA_Min < 2.

$$[\text{Mathematical expression 39}] \; 0 < CG2 / CA12 < 1$$

CG2 is the center distance between the second and third lenses, and CA12 is the effective diameter of the light source-side surface of the first lens. When Mathematical expression 39 is satisfied, the incident light of the spherical lenses may be controlled. Mathematical expression 39 preferably satisfies: 0.3 < CG2 / CA12 < 0.9.

$$[\text{Mathematical expression 40}] \; 1 < CA\_Max / CA\_Aver < 3$$

CA_Aver represents the average effective diameter of the object-side and light source-side surfaces of the lenses. When Mathematical expression 40 is satisfied, the optical system can maintain optical performance while establishing a slim and compact sensor device. Mathematical Expression 40 preferably satisfies: 1 < CA_Max / CA_Aver < 2.

$$[\text{Mathematical Expression 41}] \; 0.1 < CA\_Min / CA\_Aver < 2$$

If Mathematical Expression 41 is satisfied, the optical system can maintain optical performance while establishing a slim and compact sensor device. Mathematical Expression 41 preferably satisfies: 0.5 < CA_Min / CA_Aver < 1.

$$[\text{Mathematical Expression 42}] \; 1 < CA\_Max / (2*LsH) < 6$$

Mathematical Expression 42 may be set to the maximum effective diameter CA_Max and the diagonal length (2*LsH) of the light source. If this is satisfied, the optical system can maintain good optical performance while establishing a slim and compact sensor device. Mathematical Expression 42 preferably satisfies: 1 < CA_max / (2*LsH) < 3.

$$[\text{Mathematical expression 42-1}]\ 1 < TD / CA\_Max < 4$$

TD is the optical axis distance from the center of the object-side surface of the first lens to the center of the light-source side surface of the last lens. If Mathematical expression 42-1 is satisfied, the total optical axis distance and maximum effective diameter of the lenses may be set, thereby setting the size for good optical performance. Mathematical expression 42-1 preferably satisfies: 1 < TD / CA_Max < 3.

$$[\text{Mathematical expression 43}]\ 0 < F / L4R2 < 3$$

F is the effective focal length of the transmitting optical system, and L4S2 is the radius of curvature of the light-source side surface of the fourth lens. If Mathematical expression 43 is satisfied, the effect on optical system reduction, such as TTL, may be controlled by setting the effective focal length and the radius of curvature of the light-source side surface of the last aspherical lens. Mathematical expression 43 preferably satisfies 1 < F / L4R2 < 3.

$$[\text{Mathematical expression 44}]\ 0 < F / L1R1 < 2$$

In Mathematical expression 44, the effective focal length of the transmitting optical system and the radius of curvature of the object-side surface of the first lens may be set to control the influence on the emitted light and TTL. Mathematical expression 44 preferably satisfies: 0.5 < F / L1R1 < 1.

$$[\text{Mathematical expression 45}]\ 0 < EPD / L4R2 < 2$$

"EPD" refers to the size (mm) of the entrance pupil diameter of the optical system 110, and "L4R2" refers to the radius of curvature of the light source-side surface of the fourth lens. When the optical system 110 according to the embodiment satisfies Mathematical expression 45, the optical system 110 can control the incident light. Preferably, the condition may satisfy: 1 < EPD / L4R2 < 1.5. Preferably, L4R1 > 0, L4R2 > 0 may be satisfied.

$$[\text{Mathematical expression 46}]\ 0 < EPD / L1R1 < 1$$

In Mathematical expression 46, the size of the entrance pupil diameter of the optical system 110 and the radius of curvature of the object-side surface of the first lens may be set, and when these are satisfied, the optical system 110 can control the output light. Preferably, the condition may satisfy: 0.3 < EPD / L1R1 < 0.8.

$$[\text{Mathematical expression 47}]\ 0 < |\ F1 / F2\ | < 1$$

F1 is the focal length of the first lens, and F2 is the focal length of the second lens. When Mathematical expression 47 is satisfied, the refractive power of the first and second lenses may be controlled, and the TTL and effective focal length (EFL) may be influenced. Preferably, 0 < | F1 / F2 | < 0.5 may be satisfied. The first and second lenses 111 and 112 have powers of opposite signs, thereby correcting aberrations. Here, F1 > 0 and F2 < 0 may be satisfied.

$$[\text{Mathematical Expression 48}]\ 1 < |\ F1\ |\ / F < 10$$

In Mathematical Expression 48, the focal length of the first lens and the effective focal length of the optical system may be set, and the refractive power of the first lens may be controlled.

$$[\text{Mathematical Expression 49}]\ 0 < |\ F1/F4\ | < 10$$

In Mathematical Expression 49, the focal lengths of the first and fourth lenses may be set, and the refractive power of the first and fourth lenses may be controlled. Preferably, 0 < | F1/F5 | < 0.5 may be satisfied.

[Mathematical expression 49-1] $F3 < F1 < |F4|$ (provided that $F4 < 0$)

[Mathematical expression 49-2] $|F2| < |F4|$

[Mathematical expression 49-3] $5*F1 < |F2|$

[Mathematical expression 49-3] $5*F3 < |F4|$

In Mathematical expressions 49-1 to 49-4, F1, F2, F3, and F4 represent the focal lengths of the first to fourth lenses. By adjusting the focal length of the spherical lens to the focal length of the last aspherical lens, light may be guided to the effective region of the spherical lens. Balancing the focal lengths of each lens can suppress differences in focus positions due to temperature changes. Accordingly, deterioration of the optical characteristics of the lenses due to temperature changes may be suppressed. In addition, the overall focal length of the transmitting optical system may be greater than the overall focal length of the receiving optical system.

[Mathematical expression 50] $Po2 * Po3 < 0$

Po2 is the power value of the second lens, and Po3 is the power value of the third lens. That is, the powers of the second and third lenses have opposite signs, which can improve aberrations and effectively guide light through the spherical lens. When Po2 * Po3 > 0, the chromatic aberration improvement effect of the two lenses is not significant.

[Mathematical expression 51] $20\ mm < TTL < 60\ mm$

TTL refers to the distance (mm) from the center of the first surface S1 of the first lens 111 to the upper surface of the light source 116 along the optical axis OA. By setting the TTL in Mathematical expression 51 to be greater than 20 mm and less than 60 mm, a vehicle optical system may be provided. Mathematical expression 51 preferably satisfies the conditions: 30 mm < TTL < 55 mm or TD < TTL. Furthermore, the TTL of the transmitting optical system may be smaller than the TTL of the receiving optical system. Furthermore, the number of lenses in the transmitting optical system may be smaller than the number of lenses in the receiving optical system. Furthermore, the number of aspherical lenses in the transmitting optical system may be smaller than the number of aspherical lenses in the receiving optical system.

[Mathematical expression 52] $2mm < LsH < 10mm$

LsH is half the diagonal length of the light source. Mathematical expression 52 can set the diagonal size (2*LsH) of the light source 116 and provide an optical system having a vehicle sensor size. Mathematical expression 52 preferably satisfies: 2mm < LsH < 5mm.

[Mathematical expression 53] $1.5\ mm < BFL < 9\ mm$

In Mathematical expression 53, the BFL (Back Focal Length) is set to be greater than 1.5 mm and less than 9 mm, thereby improving the assemblability of components and enhancing joint reliability through the distance between the light source 116 and the last lens. Mathematical expression 53 preferably satisfies: 5 mm < BFL < 7 mm. If the BFL falls below the range of Mathematical expression 53, some light emitted from the light source may not be emitted, which may cause resolution degradation. If the BFL exceeds the range of Mathematical expression 53, stray light may be emitted, degrading the aberration characteristics of the optical system.

[Mathematical expression 54] $5\ mm < F < 30\ mm$

Mathematical expression 54 can set the overall focal length F to suit a vehicle transmitting optical system. Mathematical expression 54 may satisfy: 10 mm < F < 20 mm, and may be greater than the total focal length of the receiving optical system.

## [Mathematical expression 55] FOV < 80 degrees

In Mathematical expression 55, the FOV refers to the field of view (Degree) of the optical system 110, and a vehicle optical system having an FOV of less than 80 degrees may be provided. The FOV may preferably satisfy: $30 \leq$ FOV $\leq 60$. The field of view of the transmitting optical system may be provided narrower than the field of view of the receiving optical system. That is, even if the field of view of the receiving optical system is implemented wide by the diffuser 119, a decrease in sensitivity of the sensing unit may be prevented. In Mathematical expression 55, the range of the vehicle optical system may be set by the field of view. When mathematical expression 55 is satisfied, the rate of change in the effective focal length and the rate of change in the field of view when the temperature changes from room temperature to high temperature may be set to 5% or less, for example, 0 to 5%. In addition, even when an aspherical lens is used in combination with a spherical lens within the optical system 110, the deterioration of optical characteristics may be prevented through temperature compensation and aberration correction by the aspherical lens made of glass.

## [Mathematical expression 56] 1 < TTL / CA_Max < 7

In Mathematical expression 56, CA_Max represents the largest effective diameter (mm) among the object-side and light-source-side surfaces of the plurality of lenses, and TTL represents the distance (mm) from the apex of the first surface S1 of the first lens to the upper surface of the light source 116 along the optical axis OA. Mathematical expression 56 establishes a relationship between the total optical axis length of the optical system and the maximum effective diameter, thereby providing an improved vehicle optical system. Mathematical expression 56 preferably satisfies: 1 < TTL / CA_Max < 3.

## [Mathematical expression 57] 5 < TTL / LsH < 15

Mathematical expression 57 can establish the total optical axis length (TTL) of the optical system and the diagonal length (LsH) from the optical axis of the light source 116. When the optical system 110 according to the embodiment satisfies Mathematical expression 57, the optical system 110 can have a TTL for application to the vehicle light source 116, thereby providing improved image quality. Mathematical expression 57 preferably satisfies: 5 < TTL / LsH < 11.

## [Mathematical expression 58] 0 < BFL / LsH < 3

Mathematical expression 58 can set the optical axis distance between the light source 116 and the last lens, and the diagonal length from the optical axis of the light source 116. When the optical system 110 according to the embodiment satisfies Mathematical expression 58, the optical system 110 can secure a BFL for applying the size of the vehicle light source 116, set the distance between the last lens and the light source 116, and have excellent optical characteristics in the FOV. Mathematical expression 58 preferably satisfies: 1 < BFL / LsH < 2.

## [Mathematical expression 59] 1 < TTL / BFL < 15

Mathematical expression 59 can set the overall optical axis length (TTL) of the optical system and the optical axis distance BFL between the light source 116 and the final lens. If the optical system 110 according to the embodiment satisfies Mathematical expression 59, the optical system 110 can secure BFL. Mathematical expression 59 preferably satisfies: 3 < TTL / BFL < 10.

## [Mathematical expression 60] 1 < TTL / F < 10

Mathematical expression 60 can set the overall focal length F and overall optical axis length (TTL) of the optical system 110. Accordingly, an optical system for a driver assistance system may be provided. Mathematical expression 60 preferably satisfies: $1.5 \leq$ TTL/F < 3. When the optical system 110 according to the embodiment satisfies Mathematical expression 60, the optical system 110 can have an appropriate focal length within a set TTL range and can form an image while maintaining an appropriate focal length even when the temperature changes from low to high. If the lower limit of Mathematical expression 60 is less than the lower limit of Mathematical expression 60, the refractive power of the lenses needs to be increased, making correction of spherical aberration or distortion difficult. If the upper limit of Mathematical expression 60 is greater than the upper limit of Mathematical expression 60, the effective diameter or TTL of the lenses may become longer, resulting in a problem of an enlarged imaging lens system.

$$[\text{Mathematical expression 61}]\ 0 < F\ /\ BFL < 3$$

Mathematical expression 61 can set the overall focal length F of the optical system **110** and the optical axis distance BFL between the light source 116 and the final lens. When the optical system 110 according to the embodiment satisfies Mathematical expression 61, the optical system 110 can have a set field of view and an appropriate focal length, and may be provided as a vehicle optical system. Furthermore, the optical system 110 can minimize the distance between the last lens and the light source 116, thereby providing excellent optical characteristics in the FOV. Mathematical expression 61 preferably satisfies: 1 < F / BFL < 3.

$$[\text{Mathematical expression 62}]\ 1 < F\ /\ LsH < 5$$

Mathematical expression 62 can set the overall focal length F (mm) of the optical system 110 and the diagonal length (LsH) from the optical axis of the light source 116. This optical system 110 can have improved aberration characteristics for the size of the vehicle light source 116. Mathematical expression 62 preferably satisfies: 3 < F / LsH < 4.

$$[\text{Mathematical expression 63}]\ 1 < F\ /\ EPD < 3$$

Mathematical expression 63 can set the overall focal length F and entrance pupil diameter of the optical system 110. Accordingly, the overall brightness of the optical system may be controlled. Mathematical expression 63 preferably satisfies: 1.2 < F / EPD < 2.

$$[\text{Mathematical expression 64}]\ 0 < EPD/LsH/FOV < 0.2$$

Mathematical expression 64 can set the relationship between the entrance pupil diameter (EPD), the length of half the diagonal length (LsH) of the light source, and the field of view. Accordingly, the overall size and brightness of the optical system may be controlled. Mathematical expression 64 preferably satisfies: 0 < EPD/LsH/FOV < 0.1.

$$[\text{Mathematical expression 65}]\ 10 < FOV\ /\ F\# < 30$$

Mathematical expression 65 can establish the relationship between the field of view and the F number (F#) of an optical system. Preferably, Mathematical expression 65 satisfies the condition: 15 < FOV / F# < 25. Here, F# is provided to be 1.8 or less, thereby providing a bright image.

$$[\text{Mathematical expression 66}]\ 20 < (CT\_Max + CG\_Max) * n < 80$$

$$[\text{Mathematical expression 67}]\ 200 < (FOV * TTL)\ /\ n < 500$$

Preferably, Mathematical expression 67 may satisfy the condition: 200 < (FOV * TTL) / n < 400, depending on the field of view and the number (n) of lenses.

$$[\text{Mathematical expression 68}]\ FOV < (TTL*n)$$

$$[\text{Mathematical expression 69}]\ 1 < (TD/CA\_Max)*n < 20$$

Preferably, 1 < (TD/CA_Max)*n < 10 may be satisfied.

$$[\text{Mathematical expression 70}]\ 0 < (CA42/CA22)/(CA11/CA22) < 1$$

In Mathematical expressions 66 to 70, n represents the total number of lenses. Depending on the total number of lenses, the relationship between the maximum center thickness CT_Max, maximum center distance CG_max, FOV, TTL, optical axis distance TD of the lenses, the effective diameter CA42 of the light source-side surface of the fourth lens, the effective diameter CA11 of the object-side surface of the first lens, and the effective diameter CA22 of the light source-side surface of the second lens may be established. Accordingly, the chromatic aberration, resolution, size, etc. of an optical system having five or fewer lenses may be controlled.

[Mathematical expression 71]

$$Z = \frac{cY^2}{1 + \sqrt{1 - (1+K)c^2Y^2}} + AY^4 + BY^6 + CY^8 + DY^{10} + EY^{12} + FY^{14} + \cdots$$

In Mathematical expression 71, Z represents Sag, which may represent the distance along the optical axis from an arbitrary location on the aspherical surface to the vertex of the aspherical surface. Y may represent the distance from an arbitrary location on the aspherical surface to the optical axis in a direction perpendicular to the optical axis. c may represent the curvature of the lens, and K may represent the conic constant. Additionally, A, B, C, D, E, and F may represent aspheric coefficients.

The optical system 110 according to the embodiment may satisfy at least one or more of the Mathematical expressions 1 to 70. In this case, the optical system 110 may have improved optical characteristics. Specifically, when the optical system 110 satisfies at least one of the Mathematical expressions 1 to 35 and/or at least one of the Mathematical expressions 36 to 70, the optical system 110 may have improved resolution and improved aberration and distortion characteristics. Furthermore, the optical system 110 may secure a back focal length BFL for applying a vehicle light source 116, compensate for optical characteristic degradation due to temperature changes, and minimize the distance between the last lens and the light source 116, thereby achieving excellent optical performance within the FOV.

Table 2 shows the items of the mathematical expressions described above in the transmitting optical system 110 of the embodiment, including the TTL (mm), BFL, effective focal length F, LsH, effective diameter (CA), sum of the center thicknesses of each lens, sum of the center distances between adjacent lenses, TTL (mm), sum of Abbe numbers, sum of refractive indices, TD (mm), which is the optical axis distance from the first surface S1 to the eighth surface S8, focal lengths F1, F2, F3, and F4, FOV, edge thickness ET, F number, etc. of the transmitting optical system 110.

[Table 2]

| Items | Values | Items | Values |
|---|---|---|---|
| F | 15.285 | ET1 | 3.640 |
| F1 | 59.114 | ET2 | 5.022 |
| F2 | -424.793 | ET3 | 2.507 |
| F3 | 21.623 | ET4 | 4.026 |
| F4 | -294.356 | FOV | 32.1340 |
| $\Sigma$Nd | 7.125 | EPD | 9.7000 |
| $\Sigma$Vd | 124.440 | BFL | 6.125 |
| $\Sigma$CT | 19.750 | TD | 30.8747 |
| $\Sigma$CG | 11.125 | LsH | 4.2300 |
| $\Sigma$ET | 15.195 | SD | 40.1700 |
| TTL | 37.0 | F-number | 1.576 |

Table 3 shows the result values for the mathematical expressions 1 to 70 described above in the optical system 110 of the embodiment. Referring to Table 4, it may be seen that the transmitting optical system 110 satisfies at least one, two or more, or three or more of the mathematical expressions 1 to 35. In addition, it may be seen that the optical system 110 satisfies at least one, two or more, or three or more of the mathematical expressions 36 to 70. In detail, it may be seen that the optical system 110 according to the embodiment satisfies at least one or two or more of the mathematical expressions 1 to 70, or all of the mathematical expressions. Accordingly, the optical system 110 can have good optical performance within the FOV and can have excellent optical characteristics.

# EP 4 737 971 A1

[Table 3]

| | Mathematical expressions | Values | | Mathematical expressions | Values |
|---|---|---|---|---|---|
| 1 | 0 < CT1 / CT2 < 3 | 0.706 | 36 | 50 < ∑CT*n < 100 | 79.000 |
| 2 | 0 < CT4 / CT3 < 3 | 0.386 | 37 | 0 < ∑CT / ∑ET < 2 | 1.300 |
| 3 | 0 < CT2 / CT3 < 3 | 1.055 | 38 | 1 < CA11 / CA_Min < 5 | 1.820 |
| 4 | 1 < CG2 / CT2 < 3 | 1.321 | 39 | 0 < CG2 / CA12 < 1 | 0.658 |
| 5 | 0 < CG2 / (CT3+CT4) < 1 | 0.607 | 40 | 1 < CA_Max / CA_Aver < 3 | 1.349 |
| 6 | 1 < CG2 / CG 1 < 3 | 2.332 | 41 | 0.1 < CA_Min / CA_Aver < 2 | 0.741 |
| 7 | 5 < CG2 / CG3 < 20 | 14.872 | 42 | 1 < CA_Max / (2*LsH) < 6 | 2.199 |
| 8 | 0 < CG2 / (CT1+CG1+CT2) < 1 | 0.581 | 43 | 0 < F / L4R2 < 3 | 2.022 |
| 9 | TTL < SD | Satisfaction | 44 | 0 < F / L1R1 < 2 | 0.893 |
| 10 | 1.70 < Nd1 | 1.816 | 45 | 0 < EPD / L4R2< 2 | 1.283 |
| 11 | 0.5 < Nd1/Nd3 <1.5 | 1.000 | 46 | 0 < EPD / L1R1 < 1 | 0.567 |
| 12 | 1 < Nd1/Nd4 <1.5 | 1.083 | 47 | 0< | F1 / F2 | <1 | 0.139 |
| 13 | (Vd3*Nd3) < (Vd4*Nd4) | Satisfaction | 48 | 1 < | F1 | / F < 10 | 3.867 |
| 14 | TD < SD | Satisfaction | 49 | 0 < |F1 / F4| < 10 | 0.201 |
| 15 | 1 < CA42 / CT4 < 3 | 2.124 | 50 | Po2 * Po3 < 0 | Satisfaction |
| 16 | CA42/2 < CG2 < CA11 | Satisfaction | 51 | 20 < TTL <60 | 37.000 |
| 17 | 0.5 < CA11 < (CG1+CG2) < 1.5 | 1.094 | 52 | 2 < LsH <10 | 4.230 |
| 18 | 0.5 < CA11 / CA21 < 1.5 | 1.009 | 53 | 1.5 < BFL< 9 | 6.125 |
| 19 | 0.4 < CA22 / CA31 < 1.5 | 0.813 | 54 | 5 < F < 30 | 15.285 |
| 20 | 0.5 < CA11 / ST_CA < 1.5 | 1.198 | 55 | FOV < 80 | 32.134 |
| 21 | 1 < CA11/CG0 < 5 | 3.666 | 56 | 1 < TTL / CA_Max < 7 | 1.989 |
| 22 | 0.5 < CG0 / CT1 < 1.5 | 0.798 | 57 | 5 < TTL / LsH < 15 | 8.747 |
| 23 | 0 < ST_CA / CA_Min < 1 | 0.949 | 58 | 0 < BFL / LsH < 3 | 1.448 |
| 24 | 1 < CG_Max / CG0 < 4 | 2.346 | 59 | 1 < TTL / BFL < 15 | 6.041 |
| 25 | 0.5 < CT4 / BFL < 1.5 | 0.785 | 60 | 1 < TTL / F < 10 | 2.421 |
| 26 | 0.5 < CG3 / CT4 < 1 | 0.104 | 61 | 0 < F / BFL < 3 | 2.495 |
| 27 | 2 < ST_CA / CG0 < 4 | 3.060 | 62 | 1 < F / LsH < 5 | 3.613 |
| 28 | 1 < L4R2 / CT4 < 5 | 1.571 | 63 | 1 < F / EPD < 3 | 1.576 |
| 29 | 0.5 < L4R2 / L4R1 < 1.5 | 0.765 | 64 | 0 < EPD/LsH/FOV < 0.2 | 0.071 |
| 30 | 0 < L1R1/L1R2 < 3 | 0.721 | 65 | 10 < FOV / F# <30 | 20.392 |
| 31 | 0.5 < |L2R1 / L2R2| < 1.5 | 0.783 | 66 | 20 < (CT_Max+CG_Max)*n < 80 | 52.258 |
| 32 | 0 < CT_Max / CG _Max < 2 | 0.757 | 67 | 200 < (FOV*TTL)/n < 500 | 297.240 |
| 33 | 1 < ∑CT / ∑CG < 3 | 1.775 | 68 | FOV < (TTL*n) | Satisfaction |
| 34 | 5 < ∑Nd <15 | 7.125 | 69 | 1 < (TD / CA_Max) *n < 20 | 6.640 |
| 35 | 10 < ∑Vd / ∑Nd <50 | 17.466 | 70 | 0 < (CA42/CA22) / (CA11/CA21) < 1 | 0.670 |

<Receiving Optical System>

The receiving optical system receives light emitted from the transmitting optical system disclosed above and converts the received light into an electrical signal. The receiving optical system may have a different number of lenses than the transmitting optical system, for example, four or more or five or more lenses. The receiving optical system and the

24

transmitting optical system may be aligned along their respective optical axis and may have individual optical characteristics.

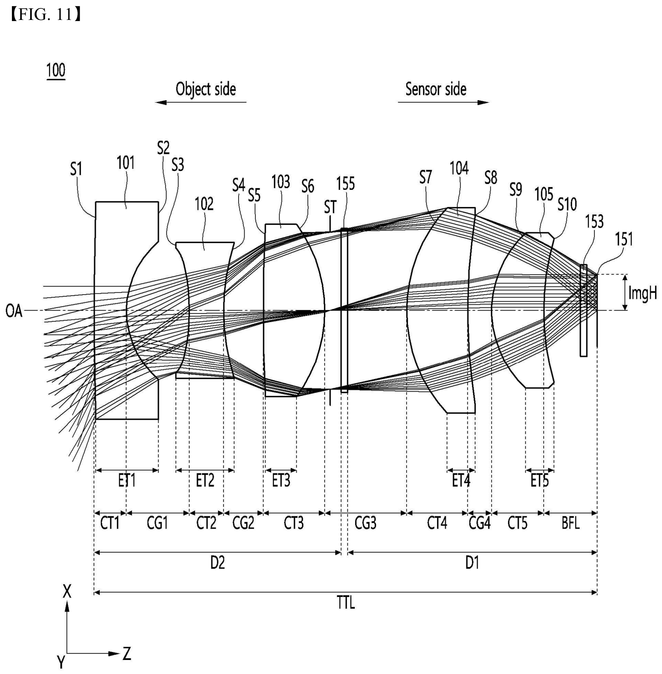

Referring to FIG. 11, the receiving optical system 100 may include a spherical lens and an aspherical lens. Here, the spherical lens is a lens in which at least one of the object-side surface and the sensor-side surface of the lens is spherical. The aspherical lens is a lens in which at least one of the object-side surface and the sensor-side surface of the lens is aspherical. The receiving optical system 100 may include a spherical glass lens and an aspherical glass lens. In addition, since an aspherical lens is employed, the optical system 100 can have a reduced overall length (TTL), and can provide good correction for various aberrations such as spherical aberration and chromatic aberration due to the aspherical lens. In addition, the aspherical lens can minimize distortion in the periphery of the sensing unit 300. The optical system 100 may include n lenses, the n-th lens may be the last lens adjacent to the sensing unit 151, and the n-1th lens may be the lens closest to the last lens. The n is an integer greater than or equal to 4, and may be, for example, in the range of 4 to 7 or in the range of 4 to 6. The ratio of the spherical lens to the aspherical lens in the n lenses may be any one of 3:1, 4:1, 3:2, 2:3, 3:3, 5:2, or 4:2.

The receiving optical system 100 may have a first lens 101 closest to the object made of glass. The glass material exhibits little change in expansion and contraction due to external temperature changes, and its surface is less likely to be scratched, thereby preventing surface damage. Accordingly, in the optical system 100, the object-side first lens 101 may be a spherical lens, and the n-th lens may be an aspherical lens. Since the n-th lens in the optical system 100 is arranged as an aspherical lens, various aberrations of the light incident on the sensing unit 151 may be corrected. Since at least two lenses closest to the object in the optical system 100 are arranged of glass, the rate of change in contraction and expansion due to temperature changes is smaller than that of plastic lenses, thereby preventing deterioration of optical characteristics due to temperature changes within the lens barrel.

Furthermore, since the optical system 100 arranges the lens 105 closest to the sensing unit 151 using a glass mold material, the rate of contraction and expansion due to temperature changes is lower than that of plastic materials, thereby preventing degradation of optical characteristics due to temperature changes within the lens barrel.

Each of the lenses 101-105 of the receiving optical system may have an object-side surface and a sensor-side surface. The lenses 101-105 may include an object-side spherical lens and a sensor-side spherical lens, and an object-side aspherical lens and a sensor-side aspherical lens. The optical system may have a smaller number of aspherical lenses than spherical lenses. Since the optical system 100 arranges the aspherical lenses adjacent to the sensing unit 151, it can correct various aberrations. The spherical and aspherical lenses may be made of glass. Among the lenses of the optical system 100, the lens with the highest refractive index may be a spherical lens, and the lens with the highest Abbe number may be a spherical lens. Accordingly, since the lens with the highest refractive index is disposed on the object side, the radius of curvature of the lenses after the second lens may be easily adjusted and the center thickness may be increased.

Within the optical system 100, the lens surface with the largest effective diameter is disposed on the first lens 101 closest to the object side. This lens surface may be made of glass and be a spherical lens. The lens with the smallest effective diameter within the optical system 100 is positioned between the aperture stop ST and the first lens 101 and may be a glass lens. Furthermore, the average effective diameter of the aspherical lenses may be smaller than the average effective diameter of the spherical lenses. Here, the effective diameter of the lenses is the average of the effective diameters of the object-side and sensor-side surfaces of each lens. By adjusting the effective diameters of each lens, the optical system 100 may be miniaturized. Each of the lenses 101-105 may include an effective region and an ineffective region. The effective region may be the region through which light incident on each lens passes. In other words, the effective region may be defined as an effective region or effective diameter where the incident light is refracted to implement optical characteristics. The ineffective region may be located around the effective region. The ineffective region may be a region where effective light is not incident on the plurality of lenses. In other words, the ineffective region may be a region unrelated to the optical characteristics. Furthermore, the end of the ineffective region may be a region fixed to a lens barrel (not shown) that accommodates the lens.

Among the lenses of the optical system 100, the lens with the largest center thickness may be a spherical lens, and the lens with the largest edge thickness may be a spherical lens. The average center thickness of the spherical lenses may be greater than the average center thickness of the aspherical lenses. Aspherical lenses with thin thickness can reduce the TTL and refract incident light into various paths.

Within the receiving optical system 100, the TTL may be more than 10 times the ImgH, for example, more than 10 times and less than 20 times. The TTL is the distance from the center of the object-side surface of the first lens 101 to the top surface of the sensing unit 151 along the optical axis OA. The ImgH is a distance from the center of the effective region of the sensing unit 151 to the diagonal end, or half the maximum diagonal length of the effective region of the sensing unit 151. Furthermore, the effective diameter of each lens within the optical system 100 may be greater than the diagonal length of the sensing unit 151.

In the receiving optical system 100, the effective focal length (EFL) is provided to be 10 mm or less and the FOV is 60 degrees or more or 100 degrees or more, so that it may be provided as a standard receiving optical system in a vehicle sensor system. For example, the receiving optical system and the sensor system according to the embodiment may be applied to a sensing device for an ADAS (Advanced Driving Assistance System) installed inside or outside a vehicle. The receiving optical system 100 can have a condition of TTL/(2*ImgH) greater than 5, for example, a range greater than 5 and less than 10. Accordingly, the center thickness of each lens along the optical axis OA may be increased and the size of the sensing unit 151 may be reduced, so that a vehicle lens optical system may be provided. In addition, in order to be used in a vehicle camera, temperature compensation must be applied in a temperature range that serves as a temperature reliability evaluation standard for automotive electrical components, that is, -45°C to +120°C. That is, the lens must be configured so that the focus of the lens remains within a set range even when the lens expands or contracts due to changes in temperature. The lens may be configured with a total effective focal length (EFL) of 10 mm or less, for example, a range of 1 mm to 10 mm or a range of 1 mm to 6 mm, and made of a glass material capable of the aforementioned temperature compensation. By shortening the effective focal length of the optical system, a wide angle may be achieved.

Within the receiving optical system 100, the number of lenses with positive (+) refractive power may be equal to or greater than the number of lenses with negative (-) refractive power. The number of lenses with positive (+) refractive power may be greater than 50% of the total number of lenses. The average refractive index of the lenses with negative refractive power may be less than the average refractive index of the lenses with positive refractive power. The difference between the average refractive index of the lenses with negative refractive power and the average refractive index of the lenses with positive refractive power may be 0.5 or less, for example, 0.2 or less. Accordingly, the dispersion of the lenses with positive refractive power may be greater than the dispersion of the lenses with negative refractive power. Since this optical system 100 combines spherical and aspherical lenses made of glass, it can correct various aberrations and prevent optical performance degradation.

The receiving optical system 100 may include first lenses 101 to fifth lenses 105 aligned from the object side toward the sensor side along the optical axis OA. The first to fifth lenses 101, 102, 103, 104, and 105 may be defined as a lens unit. For convenience of explanation, the lenses of the receiving optical system may be defined as the first lenses 101 to the fifth lenses 105 sequentially arranged from the object toward the image sensor, and the first to fifth lenses of the receiving optical system may be defined as the fifth to ninth lenses within the sensor system. Conversely, within the receiving system, the lenses of the receiving optical system may be defined as the first to fifth lenses, oriented from the object toward the image sensor, and the lenses of the transmitting optical system may be defined as the sixth to ninth lenses, oriented from the object toward the light source.

The receiving optical system 100 may include an optical filter 155, which may be positioned between the lenses. Light corresponding to object information may pass through the first lens 101 to the third lens 103, the optical filter 155, and the fourth and fifth lenses 104 and 105 and be incident on the sensing unit 151. The aperture stop ST may be positioned around the sensor-side surface of the third lens 103.

The first lens 101 may have positive (+) or negative (-) refractive power on the optical axis OA. The first lens 101 may have negative (-) refractive power. The first lens 101 may include a plastic material or a glass material, for example, a glass material. The first lens 101 made of the glass material can reduce changes in the center position and radius of curvature due to temperature changes in the surrounding environment, and can protect the incident side surface of the optical system 100. The first lens 101 is made of a glass material that is not injection molded. The first surface S1 on the object side of the first lens 101 on the optical axis may be convex, and the second surface S2 on the sensor side may be concave. The first surface S1 and the second surface S2 may have spherical surfaces. The first lens 101 may have a meniscus shape that is convex toward the object side. Alternatively, the first surface S1 may have a concave shape, and the second surface S2 may have a convex shape, on the optical axis OA. Alternatively, the first lens 101 may have a concave shape on both sides. Since the first surface S1 is convex and the second surface S2 is concave, the incident light may be refracted in a direction close to the optical axis OA, the distance between the first and second lenses 101 and 102 may be reduced, and the effective diameter of the second lens 102 may be reduced. The increase in the effective diameter of the second lens 102 may be suppressed by the shape of the lens surface of the first lens 101. When the refractive index of the first lens 101 is Nd1, the condition may satisfy: $1.7 < Nd1$ or $1.75 < Nd1 < 2.1$. Since the refractive index Nd1 of the first lens 101 is higher than that of other aspherical lenses, the radius of curvature of the first surface S1 of the first lens 101 may be increased, and lens manufacturing may be facilitated. If the refractive index Nd1 of the first lens 101 is lower than the above condition, the lens surfaces must be formed sharply concave or convex to increase the refractive power of the first and second lenses 101 and 102. In this case, lens manufacturing is not easy, the lens defect rate increases, and it may cause a decrease in yield.

The second lens 102 may be disposed between the first lens 101 and the third lens 103. The second lens 102 may have positive (+) or negative (-) refractive power on the optical axis OA. The second lens 102 may have negative (-) refractive power. The second lens 102 may include a plastic or glass material, and may be provided as a glass material, for example. The second lens 102 may be injection molded.

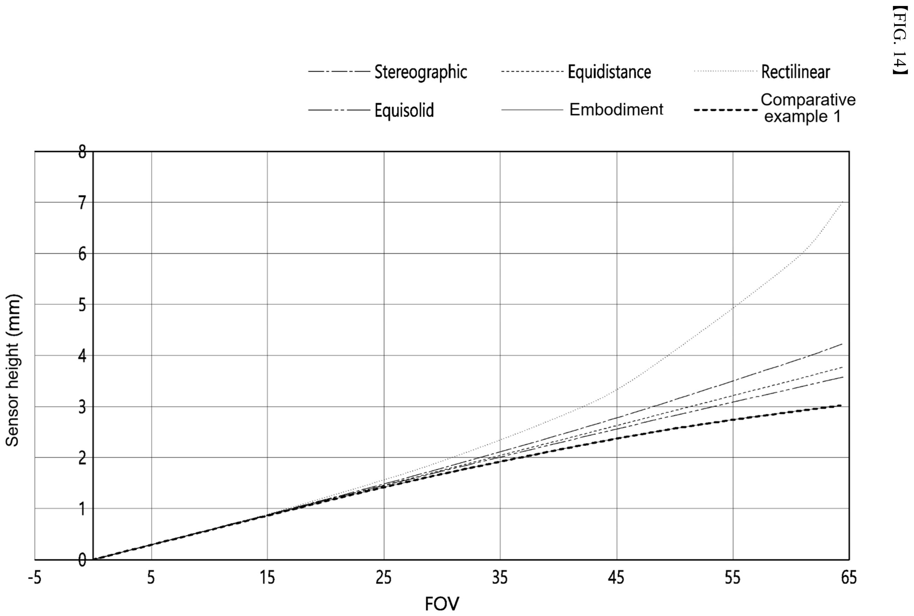

The object-side third surface S3 of the second lens 102 is concave on the optical axis OA, and the sensor-side fourth surface S4 may be concave. The third and fourth surfaces S3 and S4 may be aspherical, and as shown in FIG. 14, the conic constant K of L2S3 and L2S4 and the aspherical coefficients from the 4th to the 14th order A to F are shown. The third and fourth surfaces S3 and S4 may be provided without a critical point from the optical axis OA to the end of the effective region. Alternatively, the third surface S3 may be convex, and the fourth surface S4 may be concave. Alternatively, the second lens 102 may have a convex shape on both sides. When the refractive index of the second lens 102 is Nd2, the condition may satisfy: 1.75 > Nd2 or 1.55 < Nd2 < 1.75. Since the refractive index Nd2 of the second lens 102 is lower than that of other spherical lenses, the difference in the radius of curvature between the third and fourth surfaces S3 and S4 may be provided as small as 10 mm or less. Accordingly, the second lens 102 can refract light incident through the first lens 101 to the entire region of the third lens 103. Since the third surface S3 of the second lens 102 is concave and has a small radius of curvature, the center distance between the first and second lenses 101 and 102 may be secured. Additionally, since the sensor-side fourth surface S3 of the second lens 102 is concave and has a small radius of curvature, a distance between the second and third lenses 102 and 103 may be secured.

The third lens 103 may have positive (+) or negative (-) refractive power on the optical axis OA. The third lens 103 may have positive (+) refractive power. The third lens 103 may be made of plastic or glass, for example, glass. The third lens 103 is made of noninjection-molded glass. The object-side fifth surface S5 of the third lens 103 relative to the optical axis OA may be convex, and the sensor-side sixth surface S6 may be convex. The third lens 103 may have a shape in which both sides are convex on the optical axis OA. At least one or both of the fifth surface S5 and the sixth surface S6 may be spherical. At least one or both of the fifth surface S5 and the sixth surface S6 may be provided without a critical point from the optical axis OA to the end of the effective region. Alternatively, the third lens 103 may have a meniscus shape convex toward the object or sensor side. Alternatively, the third lens 103 may have a shape in which both sides are concave on the optical axis.

When the refractive index of the third lens 103 is Nd3, the condition may satisfy: Nd2 < Nd3. When the Abbe number of the third lens 103 is Vd3, the condition may satisfy: Vd3 < Vd2. Nd2 is the refractive index of the second lens 102, and Vd2 is the Abbe number of the second lens 102.

The aperture stop ST may be arranged around the sixth surface S6 on the sensor side of the third lens 103. Since the third lens 103 adjacent to the object side of the aperture stop ST has positive refractive power (F3 > 0), the third lens 103 can refract incident light in the direction of the optical axis and suppress an increase in the effective diameter of the sensor-side or rear-side lenses of the third lens 103. Accordingly, a decrease in the yield by weight of the optical system may be prevented by the third lens 103 and production efficiency may be improved. Here, the focal lengths of the fourth and fifth lenses 104 and 105 disposed on the sensor side of the aperture stop ST can have positive values, and the optical system can reduce the TTL within the field of view range.

Since the sensor-side sixth surface S6 of the third lens 103 has a convex shape and a small radius of curvature, the center distance between the third lens 103 and the aperture stop ST may be smaller than the center distance between the aperture stop ST and the fourth lens 104. The effective diameter of the optical filter 155 disposed on the sensor side of the third lens 103 may be larger than the effective diameter of the sixth surface S6 of the third lens 103. The optical filter 155 transmits a laser beam reflected by a subject after being emitted from the transmitting optical system of the LIDAR device, and blocks beams of other wavelengths. The optical filter 155 may be positioned closer to the third lens 103 than to the fourth lens 104 for light blocking and transmission efficiency.

The fourth lens 104 may have positive (+) or negative (-) refractive power in the optical axis OA. The fourth lens 104 may have positive (+) refractive power. The fourth lens 104 may include a plastic or glass material, and may be provided as a glass material. The fourth lens 104 may not be injection molded. The seventh surface S7 on the object side of the fourth lens 104 on the optical axis may be convex, and the eighth surface S8 on the sensor side may be concave. The fourth lens 104 may have a meniscus shape that is convex toward the object. At least one or both of the seventh surface S7 and the eighth surface S8 may be spherical. The seventh and eighth surfaces S7 and S8 may be provided without a critical point from the optical axis OA to the end of the effective region. Alternatively, the fourth lens 104 may have a convex meniscus shape toward the sensor. Alternatively, the fourth lens 104 may have a shape in which both sides are concave on the optical axis OA.

The fifth lens 105 may have positive (+) or negative (-) refractive power on the optical axis OA. The fifth lens 105 may have positive (+) refractive power. The fifth lens 105 may be made of plastic or glass, and may be provided as a glass material. The fifth lens 105 may be injection molded. The ninth surface S9 of the fifth lens 105 on the object side relative to the optical axis may be convex, and the tenth surface S10 on the sensor side may be concave. The fifth lens 105 may have a convex meniscus shape toward the object. In contrast, the fifth lens 105 may have a biconcave shape or a biconvex shape on the optical axis OA. At least one or both of the ninth surface S9 and the tenth surface S10 may be aspherical. The aspherical coefficients of the ninth and tenth surfaces S9 and S10 may be provided as L5S9 and L5S10 of FIG. 13. The ninth surface S9 may be provided without a critical point from the optical axis to the end of the effective region. The tenth surface S10 may have at least one critical point from the optical axis to the end of the effective region, and the critical point may be arranged closer to the edge than the center of the tenth surface S10. Here, the critical point refers to the point where the sign of the slope value relative to the optical axis OA and the direction perpendicular to the optical axis OA changes from positive (+) to negative (-) or from negative (-) to positive (+), and may refer to a point where the slope value is 0. Furthermore, the critical point may be a point where the slope value of the tangent line passing through the lens surface increases and then decreases, or a point where the slope value decreases and then increases.

If the refractive index of the fifth lens 105 is Nd5, the condition may satisfy: Nd5 < Nd4. If the Abbe number of the fifth lens 105 is Vd5, the condition may satisfy: Vd4 < Vd5. Nd4 is the refractive index of the fourth lens 104, and Vd4 is the Abbe number of the fourth lens 104. The materials of the first, third, and fourth lenses 101, 103, and 104 may be identical. The refractive indices of the first, third, and fourth lenses 101, 103, and 104 may be the same. The materials of the second and fifth lenses 102 and 105 may be the same. The refractive indices of the second and fifth lenses 102 and 105 may be the same. The fifth lens 105 may have a lower refractive index than the refractive indices of the first and third lenses 101 and 103 and a higher Abbe number than the Abbe numbers of the first and third lenses 101 and 103.

The effective diameter of the fifth lens 105 may be smaller than the effective diameter of the fourth lens 104. The effective diameter of the fourth lens 104 may be the largest among the lenses. The third lens 103, the fourth lens 104, and the fifth lens 105 may all have positive refractive power. At least one of the object-side and sensor-side surfaces of the second and fifth lenses 102 and 105 may have a free-form surface, i.e., a nonrotationally symmetrical surface. The fifth lens 105 may be an aspherical lens closest to the sensing unit 151. The aspherical lens surface can improve aberrations such as spherical aberration and chromatic aberration, and can control the impact on resolution. The aspherical surface of the lens surface adjacent to the sensing unit 151 can improve optical performance, for example, improving aberration characteristics and preventing resolution degradation.

The effective diameter of the first lens 101 may be larger than that of the fifth lens 105, which is closest to the sensing unit 151. Accordingly, the brightness of the optical system 100 may be controlled. By controlling the effective diameters of each of the lenses 101-105, the optical system 100 can control the incident light to compensate for resolution and degradation of optical characteristics due to temperature changes, improve chromatic aberration control characteristics, and improve vignetting characteristics of the optical system 100.

The optical filter 155 transmits light, emitted from the transmitting optical system and reflected from the subject, such as a laser wavelength, and blocks other wavelengths. The transmitted laser wavelength may range from 890 nm to 960 nm or 940 nm $\pm$ 10 nm. As another example, the laser wavelength may range from 1550 nm $\pm$ 10 nm. The optical filter 155 may be a bandpass filter. The optical filter 155 may be positioned between two different lenses. The optical filter 155 may be positioned between the spherical lenses. The optical filter 155 may be positioned between the third lens 103 and the fourth lens 104.

The optical filter 155 may perform an operation that allows only light of a specific wavelength or wavelength within a specific band to pass through, while blocking all other light. The optical filter 155 may actively perform the filtering operation. To this end, the optical filter 155 may include an active device that, in response to an external control signal, allows only light with a specific center wavelength to pass through and blocks light of other wavelengths. The control signal provided to the optical filter 155 may include information regarding the center wavelength of the light to pass through the active device, wherein the center wavelength may correspond to the center wavelength of the light emitted from the transmitting optical system. Consequently, the control signal provided to the optical filter 155 is a control signal that aligns the center wavelength of the light emitted from the transmitting optical system with the center wavelength of the light to pass through the active device of the optical filter 155. Due to the active device included in the optical filter 155, the optical filter 155 can selectively pass only the desired light while blocking other noise light, including natural light. Therefore, the signal-to-noise ratio (S/N) of the LIDAR system may be increased. As an example of the active device, the optical filter may include a tunable bandpass filter. The tunable bandpass filter may operate in a liquid crystal or acousto-optic manner.

The third lens 103 is disposed on the object side of the optical filter 155, has a refractive index greater than that of the second lens 102, and has a center thickness greater than that of the first lens 101. The fourth lens 104 is disposed on the sensor side of the optical filter 155, has a refractive index greater than that of the fifth lens 105, and may have a center thickness greater than that of the first lens 101. The center distance between the third lens 103 and the fourth lens 104 may be greater than the thickness of the optical filter 155. The center distance between the third lens 103 and the fourth lens 104 may be the largest among the center distances between two adjacent lenses within the optical system 100.

When the radius of curvature is described as an absolute value, the lens surface having the minimum radius of curvature on the optical axis OA within the optical system 100 may be the sensor-side second surface S2 of the first lens 101 among the spherical surfaces or the object-side ninth surface S9 of the fifth lens 105. Accordingly, the center distance between the first lens 101 and the second lens 102 may be spaced apart, and the center distance between the fourth lens 104 and the fifth lens 105 may be reduced. The lens surface having the maximum radius of curvature within the optical system 100 may be the object-side surface of the first lens 101 among the spherical surfaces. The lens surface having the second largest radius of curvature within the optical system 100 may be the object-side surface of the third lens 103 among the spherical surfaces. Adjusting the curvature radius of the lenses can prevent random reflections between adjacent lens surfaces, thereby reducing lens ghosting and preventing multipath interference (MPI) caused by lens ghosting. The object-side first surface S1 of the first lens 101 has a curvature radius of 200 mm or greater, for example, 20 times greater than the curvature radius of the second surface S2. This reduces distortion of reflected light and increases the depth of field, thereby improving image quality under low-light conditions.

The optical system 100 or sensor system may include a sensing unit 151. The sensing unit 151 can detect light sequentially passing through the lenses. The sensing unit 151 can detect the light and convert it into an electrical signal. The sensing unit 151 obtains various information about the subject. The sensing unit 151 detects time delay or phase difference information from incident light, and based on this, can obtain distance information to the subject, position information of the subject, and a depth image of the subject. To this end, the sensing unit 151 may include a device capable of detecting incident light, such as an image sensor, such as a Charge Coupled Device (CCD) or a Complementary Metal Oxide Semiconductor (CMOS). As another example, the sensing unit may include a Time-to-Digital Converter (TDC). Here, the effective length of the sensing unit 151 is the maximum length in the diagonal direction orthogonal to the optical axis OA. Here, the number of lenses having an effective diameter greater than the effective length of the sensing unit 151 is 4 to 6, and there may be no lenses having an effective diameter smaller than the effective length of the sensing unit 151.

At least two lenses may be disposed between the optical filter 155 and the sensing unit 151. For example, the fourth and fifth lenses 104 and 105 may be disposed between the optical filter 155 and the sensing unit 151. A spherical lens and an aspherical lens may be disposed between the optical filter 155 and the sensing unit 151. The optical filter 155 may be disposed between the spherical third lens 103 and the spherical fourth lens 104. The optical filter 155 may be disposed between the sensor-side sixth surface S6 of the third lens 103 and the object-side seventh surface S7 of the fourth lens 104. The optical filter 155 may be a band pass filter that passes a laser beam in the range of 890 nm to 960 nm or 940 nm $\pm$ 10 nm. The optical filter 155 can, for example, transmit light in the range of 1550 nm $\pm$ 10 nm and block other wavelengths. The optical filter 155 can transmit wavelengths corresponding to the laser beam transmitted from the transmitting optical system of the LIDAR device and block light corresponding to the remaining ambient light.

A cover glass 153 is positioned between the final lens and the sensing unit 151. It protects the upper portion of the sensing unit 151 and prevents degradation of the sensing unit's reliability. The cover glass 153 may be removed. The cover glass 153 may be a protective glass.

The optical system 100 may include an aperture stop ST. The aperture stop ST can adjust the amount of light incident on the optical system 100. The above aperture stop ST may be disposed on the periphery between the third lens 103 and the fourth lens 104. The aperture stop ST may be disposed on the periphery between the spherical third lens 103 and the spherical fourth lens 104. The aperture stop ST may be disposed on the periphery between the sensor-side sixth surface S6 of the third lens 103 and the object-side seventh surface S7 of the fourth lens 104. The aperture stop ST may be disposed on the periphery between the third lens 103 and the optical filter 155. The lens surface on which the aperture stop ST is arranged is to more efficiently control and guide the amount of light of the optical system 100. As in the embodiment, the aperture stop ST may be disposed on the sensor-side surface of the third lens 103. Alternatively, the aperture stop ST may be positioned around the object-side or sensor-side surface of the second lens 102. Alternatively, at least one lens selected from the plurality of lenses, for example, the object-side or sensor-side surface of the third lens 103, may function as an aperture stop.

In the optical system 100 of the embodiment, the sum of the refractive indices of the lenses may be greater than 5, for example, greater than or equal to 8.0, and preferably, in the range of 8.0 to 12.0, and the average refractive indices may be in the range of 1.70 to 1.80. The sum of the Abbe numbers of each of the lenses may be less than or equal to 180, for example, in the range of 120 to 180, and the average Abbe number may be less than or equal to 47, for example, in the range of 23 to 47. By adjusting the refractive indices of the lenses within the optical system 100, it is possible to prevent degradation of optical performance during temperature changes from -45 to 120 degrees Celsius and optimize thermal compensation. In addition, by adjusting the Abbe number, the deviation in the spot size of the incident light may be minimized, i.e., the spot diagram size may be minimized.

In the receiving optical system, the sum of the center thicknesses of all lenses may be 15 mm or greater, for example, in the range of 15 mm to 25 mm, and the average of the center thicknesses may be 4.9 mm or less, for example, in the range of 2.9 mm to 4.9 mm. The sum of the center distances between the lenses along the optical axis OA may be 15 mm or greater, for example, in the range of 15 mm to 30 mm, and may be less than the sum of the center thicknesses of the lenses. Furthermore, the average effective diameter of each lens surface of the optical system 100 may be 20 mm or less, for example, in the range of 9 mm to 20 mm. By adjusting the thickness of each lens within the optical system 100, thermal compensation may be optimized and optical performance degradation due to temperature changes from -45 to 120 degrees may be prevented.

In the receiving optical system according to an embodiment of the invention, the field of view may be 100 degrees or greater, for example, in the range of 118 degrees or greater to 138 degrees, and preferably, 128 degrees $\pm$ 10 degrees. The F-number of the optical system or camera module may be 1.2 or less, for example, in the range of 0.7 to 1.2 or 0.7 to 0.9. The diagonal length of the sensing unit 151 may be 6.04 mm $\pm$ 0.5 mm and may be greater than the vertical sensor height. The invention provides a vehicle LIDAR device that suppresses changes in the focal imaging position due to temperature changes by stacking glass lenses and provides an aspherical lens to correct various aberrations.

Since the embodiment is a receiving optical system applied to a LIDAR device, the first lens 101 may be made of glass. This material has the advantage of being scratchresistant and insensitive to external temperatures compared to plastic. To effectively prevent scratches caused by foreign substances or when placed inside a vehicle, a glass lens may be used as the first lens 101. The object-side surface of the first lens 101 may have a convex shape to prevent the accumulation of foreign substances. The LiDAR device can detect the distance, direction, speed, temperature, material distribution, and concentration characteristics to an object while the vehicle is in motion. Such a LiDAR device may be used for an Advanced Driver Assistance System (ADAS). The receiving optical system 100 according to an embodiment may further include a reflective member (not shown) for changing the path of light. The reflective member may be implemented as a prism that reflects incident light toward the lenses. The optical system according to the embodiment will now be described in detail.

If the lenses having negative refractive power are a first lens group and the lenses having positive refractive power are a second lens group, the aperture stop ST and the optical filter 155 may be positioned within the second lens group. The aperture stop ST and the optical filter 155 may be disposed between the spherical lens surfaces of the second lens group.

As shown in FIGS. 11 and 12, the center thickness of the first to fifth lenses 101 to 105 is represented by CT1 to CT5, the edge thickness at the end of the effective region of each lens is represented by ET1 to ET5, and the center distance between two adjacent lenses is represented by CG1 to CG4. The first to fifth lenses 101 to 105 may satisfy the following conditions.

$$\text{Condition 1: CT1} < \text{CT3}$$

$$\text{Condition 2: CT2} < \text{CT5} < \text{CT4}$$

$$\text{Condition 3: (CT4-CT5)} < \text{(CT3-CT2)}$$

$$\text{Condition 4: ET3} < \text{ET2} < \text{ET1}$$

$$\text{Condition 5: ET4} < \text{ET3} < \text{CT5}$$

Either the center thickness CT3 and CT4 of the third and fourth lenses 103 and 104 is the largest among the lenses, and either the center thickness CT1 and CT2 of the first and second lenses 101 and 102 is the smallest among the lenses. The maximum center thickness may be no more than three times the minimum center thickness, and the difference between the maximum and minimum center thicknesses may be no more than 4 mm. In other words, even if the center thickness of spherical lenses is thin, optical performance may not be degraded, and the sensor system may be slimmed down. By adjusting the thickness of these lenses, thermal compensation may be achieved for temperature variations ranging from low to high temperatures.

Regarding the center distance CG between adjacent lenses, the center distance CG3 between the third lens 103 and the fourth lens 104 is maximum and is greater than the center distance CG1 between the first and second lenses 101 and 102. The center distance CG4 between the fourth and fifth lenses 104 and 105 may be minimum. Here, the difference between the maximum and minimum center distance may be 3 mm or greater, for example, in the range of 3 mm to 6 mm. Furthermore, by providing a maximum center distance between the lenses greater than the maximum center thickness of each lens, a receiving optical system may be provided in which the center distance between the spherical lens and the aspherical lens does not increase. Furthermore, since the maximum center distance between the lenses is 1.5 times greater than the minimum center thickness of each lens, the optical path may be controlled.

Regarding the effective diameter, the lens with the maximum effective diameter may be the fourth lens 104, which is disposed on the sensor side of the optical filter 155. The fourth lens 104 having the maximum effective diameter may be a spherical lens made of glass. The lens surface having the maximum effective diameter may be the first surface S1 of the first lens 101. The lens having the minimum effective diameter may be the second lens 102 adjacent to the first lens 101. The lens surface having the minimum effective diameter may be either the third surface S3 of the second lens 102 or the tenth surface S10 of the fifth lens 105, and may be less than 70% of the first surface S1. The effective diameter of each of the first to fifth lenses 101-105 may be greater than the diagonal length of the effective region of the sensing unit 151. The fifth lens 105 has an aspherical surface and may guide light incident through the fourth lens 104, which is a spherical lens, to the sensing unit 151.

FIG. 12 is an example of lens data of the optical system of the embodiment of FIG. 11. As shown in FIG. 12, the radius of curvature of the optical axis OA of the first to fifth lenses 101, 102, 103, 104, and 105, the center thickness CT of the lenses, the center distance CG between the lenses, the refractive index at the d-line, the Abbe Number, and the size of the effective radius may be set. As shown in FIG. 13, the lens surfaces of the second and fifth lenses 102 and 105 of the embodiment may include an aspherical surface having a 14th-order aspherical surface coefficient. For example, the object-side surface and the sensor-side surface of the second and fifth lenses 102 and 105 may be lens surfaces having a 14th-order aspherical surface coefficient. As described above, an aspherical surface having a 14th-order aspherical coefficient (a non-zero value) can significantly change the aspherical shape of the periphery, and thus can effectively correct the optical performance of the periphery of the FOV.

The focal lengths F1 and F2 of the first and second lenses 101 and 102 may have negative refractive power, and the focal lengths F3, F4, and F5 of the third, fourth, and fifth lenses 103, 104, and 105 may have positive refractive power. Here, among the lenses, the second lens 102 has negative refractive power, and the third lens 103 has positive refractive power. Therefore, according to the conditions 1 and 2, the refractive index of the third lens 103 is greater than the refractive index of the second lens 102, and the dispersion value of the third lens 103 is less than the dispersion value of the second lens 102. Chromatic aberration occurring in a spherical lens may be corrected using a spherical lens. Furthermore, by ensuring that the refractive index difference between the second lens 102 and the third lens 103, which are sequentially arranged spherical lenses, is between 0.1 and 0.15, and the Abbe number difference is between 10 and 20, the chromatic aberration occurring in the spherical lens may be compensated for using the spherical lens.

Optical system experiences chromatic aberration, and this aberration is corrected using spaced aspherical lenses. As the temperature changes from low to high, the lens repeatedly contracts and expands. Since the lens characteristics of lenses made of the same material change the same amount with temperature, it is effective to correct chromatic aberration between lenses made of the same material even when the temperature changes. For example, as shown in Table 4, when the temperature of the lens barrel or receiving optical system varies from -45°C (low temperature), 22°C (room temperature), and 90°C (high temperature), there is little change in optical characteristics.

Table 4 compares the changes in optical characteristics such as EFL, BFL, F number (F#), TTL, and FOV at room temperature, low temperature, and high temperature in the optical system according to the embodiment, and it may be seen that the change rate of the optical characteristics at low temperature is 5% or less, for example, 3% or less or 2% or less, based on room temperature, and the change rate of the optical characteristics at high temperature is 5% or less, for example, 3% or less or 2% or less, based on room temperature.

[Table 4]

|  | Low temperature | Room temperature | High temperature | Low temperature/Room temperature (%) | High temperature/Room temperature (%) |
|---|---|---|---|---|---|
| EFL | 3.348 | 3.349 | 3.350 | 99.98% | 100.04% |
| BFL | 4.592 | 4.588 | 4.606 | 100.09% | 100.38% |
| F# | 0.802 | 0.802 | 0.802 | 99.95% | 100.06% |
| TTL | 42.954 | 43.000 | 43.047 | 99.89% | 100.11% |
| FOV | 128.890 | 128.809 | 128.704 | 100.06% | 99.92% |

Therefore, as shown in Table 4, it may be seen that the change in optical characteristics according to the temperature change from low temperature to high temperature, for example, the change rate of EFL, TTL, BFL, F number, and FOV, is 10% or less, that is, 5% or less, for example, in the range of 0 to 5%. This means that even if at least one or two or more aspherical lenses are used, the design enables temperature compensation for the aspherical lenses, thereby preventing a decrease in the reliability of the optical characteristics. The receiving optical system of the embodiment disclosed above can effectively control aberration characteristics such as chromatic aberration and distortion aberration, and can have good optical performance at the center and periphery of the FOV. Here, EFL is the effective focal length of the optical system, BFL is the optical axis distance from the final lens, i.e., the fifth lens 105, to the surface of the sensing unit 151, i.e., the image sensor, Fno is the F-number of the optical system, TTL is the optical axis distance from the first lens 101 to the surface of the sensing unit 151, i.e., the surface of the image sensor, and FOV is the field of view of the optical system.

Comparing the focal lengths in absolute values, the focal length of the fourth lens 104 is the largest among the lenses and may be 10 mm or more and 35 mm or less. Accordingly, the optical system can exhibit improved MTF characteristics, aberration control characteristics, and resolution characteristics within the set field of view range, and can exhibit excellent optical performance at the periphery of the field of view.

Furthermore, the receiving optical system 100 according to the embodiment exhibits excellent optical performance and can exhibit set distortion characteristics in a temperature range from low (-45°C) to high (120°C) depending on temperature changes. For example, the optical system 100 may be based on any one of the following mapping functions of a wide-angle lens. Specifically, when the distance (mm) from the surface center (0. Filed) of the image sensor, which is the sensing unit 151, to 1 field, and in detail, half of the maximum diagonal length (mm) of the effective region of the image sensor is defined as ImgH, the field of view (FOV) is defined as $\theta$, and the total focal length (mm) of the optical system 100 is defined as F, the mapping function of the wide-angle or fisheye optical system may be defined as follows.

Equidistance mapping may be defined as ImgH = F*θ, and Equal Area (Equisolid angle) mapping may be defined as ImgH = 2*F*sin(θ/2). Additionally, Orthographic mapping may be defined as ImgH = f*sinθ, and Stereographic mapping may be defined as ImgH = 2*F* tan(θ/2). Here, * represents multiplication. Looking at the transmitting optical system of Fig. 12, it has a microlens array as a diffuser, and the optical path of light passing through the microlens array changes the Field of Illumination (FOI) in the on-axis direction, separate from the direction of light propagation. In the comparative example, it may be seen that the FOI changes in the off-axis direction after passing through the one-dimensional microlens array. Here, looking at the optical path after passing through the diffuser, the comparative example has an optical path of F*θ, while the embodiment has an optical path of f*sinθ.

Referring to FIG. 14, the receiving optical system 100 can have distortion characteristics set relative to the design criteria (comparative example) as it moves from a 0-degree field of view to a maximum half-field of view HFOV (i.e., 1/2 the FOV). For example, the embodiment of the optical system 100 may be seen to further increase as the sensor height increases from a 0-degree field of view to a maximum half-field of view HFOV (i.e., 1/2 the FOV). Furthermore, the embodiment can have distortion characteristics that are satisfactory compared to other examples of mapping, such as Stereographic, Equidistance, Rectilinear, and Equisolid. Specifically, the embodiment can have distortion characteristics that are satisfactory compared to Example 1.

Furthermore, the receiving optical system 100 can have distortion characteristics set relative to other examples as it moves from a 0-degree field of view to a maximum half-field of view HFOV (i.e., 1/2 the FOV), thereby providing an optical system that satisfies the Orthographic projection type. Here, the ratio for distortion characteristics can refer to the value of ImgH at a specific half-angle position, calculated as ((Other Example - Example)/Example * 100). Accordingly, the optical system according to the embodiment can prevent changes in optical characteristics due to temperature changes in the temperature range from low (-45 degrees Celsius) to high (120 degrees Celsius) based on the Equal Area mapping method, and can provide improved optical performance across a wide temperature range.

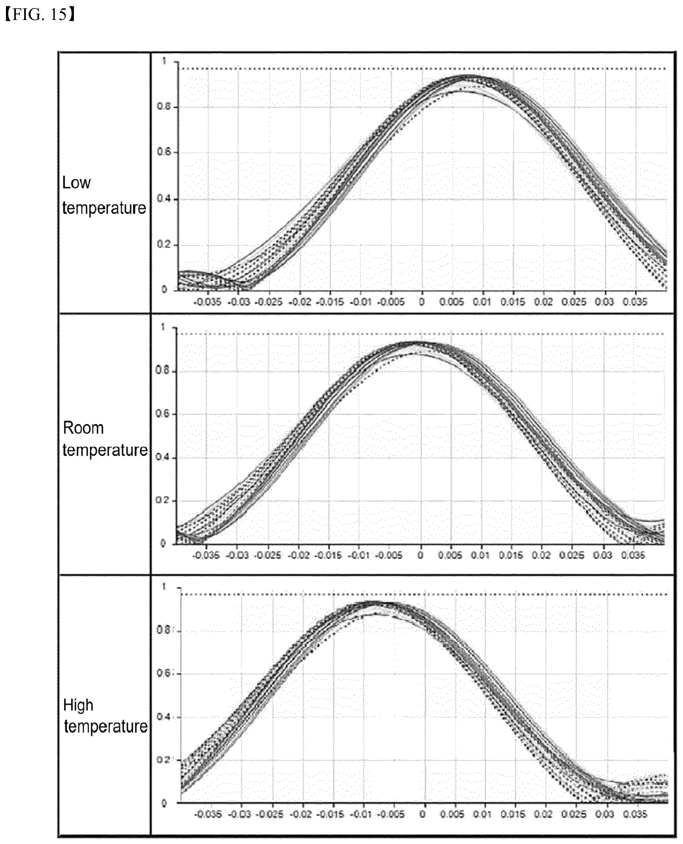

FIG. 15 is a graph showing the diffraction MTF (Modulation Transfer Function) at low, room, and high temperatures in the optical system of FIG. 11, and is a graph showing the modulation ratio according to spatial frequency. As shown in FIG. 15, in the embodiment of the invention, the deviation in the MTF between low and high temperatures relative to room temperature may be less than 10%, i.e., 7% or less. Here, each MTF curve was measured from 0.000 mm to 3.170 mm in 0.302 mm increments.

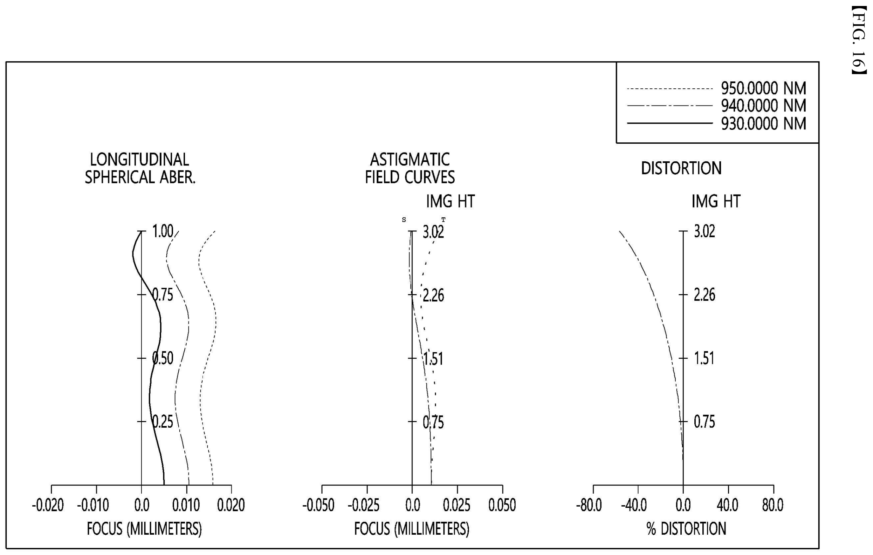

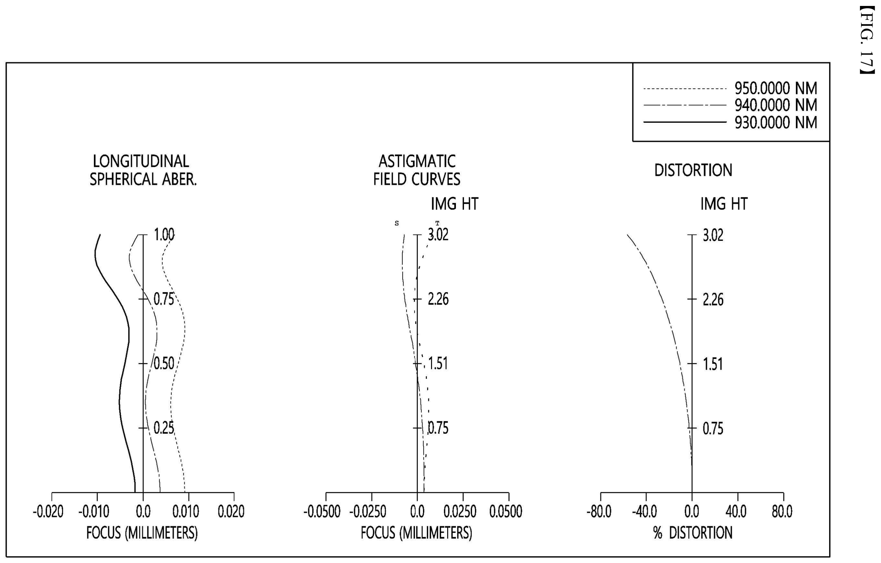

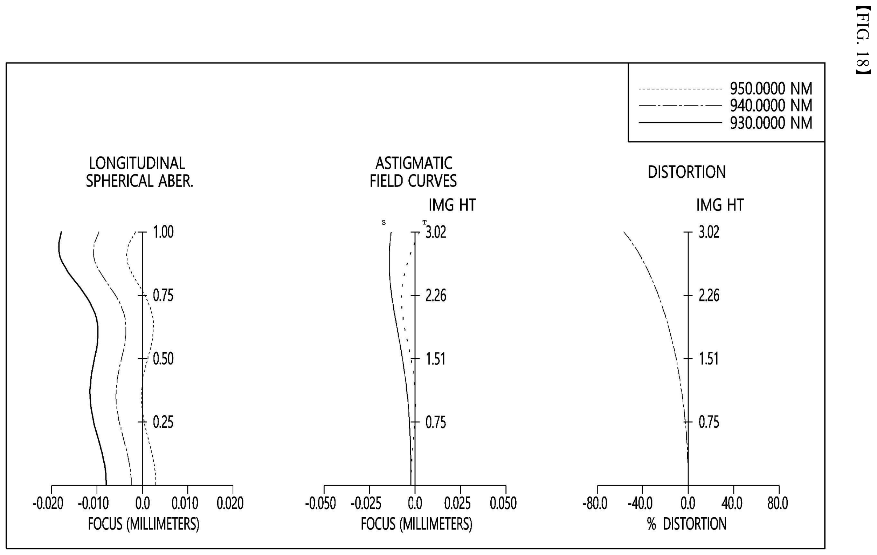

FIGS. 16 to 18 are graphs showing aberration characteristics at low, room, and high temperatures in the optical system of FIG. 11. The aberration graphs of FIGS. 16 to 18 show spherical aberration (Longitudinal Spherical Aberration), astigmatic field curves, and distortion measured from left to right. In FIGS. 16 to 18, the X-axis may represent the focal length (mm) and distortion (%), and the Y-axis may represent the image height. Furthermore, the graph for spherical aberration is for light in the wavelength bands of approximately 930 nm, approximately 940 nm, and approximately 950 nm, while the graphs for astigmatic aberration and distortion are for light in the wavelength band of approximately 940 nm. In the aberration diagrams of FIGS. 16 to 18, the closer the curves at low, room, and high temperatures are to the Y-axis, the better the aberration correction function may be interpreted. In other words, the optical system 100 according to the embodiment can have improved resolution and excellent optical performance both at the center and periphery of the FOV. Here, low temperature refers to a temperature below -20°C, for example, in the range of -20 to -50°C; room temperature refers to a temperature between 22°C and 5°C or between 18°C and 27°C; and high temperature refers to a temperature above 85°C, for example, in the range of 85°C to 120°C. Accordingly, it may be seen that the modulation decrease from low to high temperatures in FIGS. 16 to 18 is less than 10%, for example, 5% or less, or is almost unchanged.

The receiving optical system according to the embodiment of the invention can prevent optical performance degradation from low to high temperatures by taking into account the characteristics of vehicle optical systems. For example, a lens may be designed at room temperature, and then the temperature-dependent refractive index change coefficient (dn/dt) may be assembled by considering the power combination of each lens. The temperature coefficient (dn/dt) based on the refractive index of the lens and the defocus for the thickness variable at low, room, and high temperatures may be set to 5 μm or less. To this end, the first, third, and fourth lenses 101, 103, and 104 are made of spherical glass, and the second and fifth lenses 102 and 105 are made of aspherical glass.

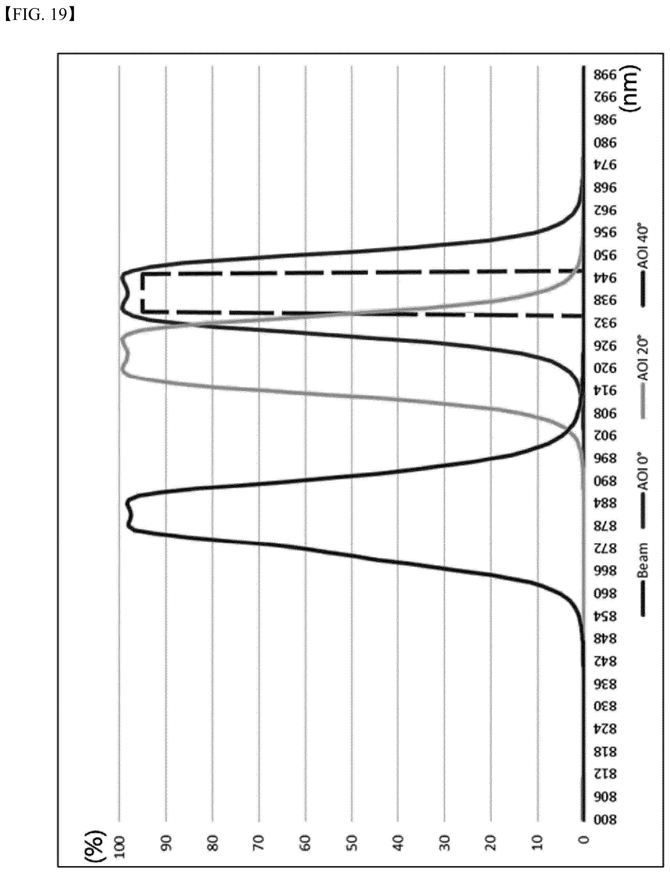

In an embodiment of the invention, the optical filter 155 may be positioned close to the aperture stop ST, i.e., between the aperture stop ST and the fourth lens 104. The filter in the comparative example is positioned between the sensing unit and the last lens. Therefore, the invention can minimize the incident angle of light incident on the optical filter 155. That is, the incident angle of the main beam incident on the optical filter 155 may be less than 20 degrees at most, that is, less than 18 degrees. It is possible to overcome the material limitation that the filter transmittance region shifts depending on the incident angle incident on the optical filter 155. For example, when the existing filter is arranged between the sensing unit and the last lens, the incident angle of the main beam incident on the filter is about 45 degrees, but the optical filter 155 of the invention is arranged around the aperture stop ST, so that the incident angle of the main beam is reduced to less than 20 degrees, for example, less than 18 degrees. Considering the transmittance curve when the main beam is incident at an angle of 0 degrees on the optical filter 155 and the transmittance curves when the angle of incidence of 20 degrees and 40 degrees, there is an effect that the filter region may be utilized more widely from an angle of incidence of the main beam of 0 degrees to a maximum of less than 20 degrees. FIG. 19 is a graph showing the transmittance (%) curves when the incident angle of the main beam incident on the filter of the invention is 0 degrees, 20 degrees, and 40 degrees.

The incident angle of the main beam on the incident surface of the optical filter 155 was inspected using Automated Optical Inspection (AOI) equipment. It was found that the incident angle of the main beam incident on the filter from 0 field to 1.05 field and in different directions (+Y direction, +X direction) ranged from 0 degrees to a maximum of 17.55 degrees. Accordingly, the problem of the incident angle of the main beam shifting at low and high temperatures compared to room temperature may be minimized.

The receiving optical system 100 according to the embodiment disclosed above may satisfy at least one or two or more of the Mathematical expressions described below. Accordingly, the optical system 100 according to the embodiment may have improved optical characteristics. For example, when the optical system 100 satisfies at least one Mathematical expression, the optical system 100 may effectively control aberration characteristics such as chromatic aberration and distortion aberration, and may have good optical performance at the center and periphery of the FOV. In addition, the receiving optical system 100 may have improved resolution. In addition, the thickness of the lens at the optical axis OA described in the Mathematical expressions and the distance between adjacent lenses at the optical axis OA may refer to the embodiment disclosed above. The center thickness of the lenses of the receiving optical system may be defined as CT1 to CT5, and the edge thickness may be defined as ET1 to ET5.

$$\text{[Mathematical expression 1] } 0 < CT1 / CT2 < 3$$

CT1 is the center thickness of the first lens 101, and CT2 is the center thickness of the second lens 102. By setting the center thickness CT1 of the first lens 101 and the center thickness CT2 of the second lens 102 in Mathematical expression 1, the rigidity of the first lens 101 may be prevented from deteriorating, and factors affecting aberration may be controlled. Preferably, Mathematical expression 1 satisfies: $0.5 < CT1 / CT2 < 1.2$.

$$\text{[Mathematical expression 2] } 2 < CA11 / CT1 < 10$$

CA11 is the effective diameter of the object-side surface S1 of the first lens 101. In Mathematical Expression 2, the center thickness CT1 of the first lens 101 and the effective diameter CA11 of the object-side surface S1 of the first lens 101 may be set, and if these values are satisfied, the strength and optical properties of the glass lens may be prevented from deteriorating. If it is lower than the range of Mathematical Expression 1, the lens may be damaged or the incidence efficiency may be reduced, and if it is larger than the above range, the TTL may increase and the weight of the optical system may increase. Preferably, Mathematical Expression 2 may satisfy: $5 < CA11 / CT1 < 8$.

$$\text{[Mathematical Expression 3] } 0 < CT5 / CT4 < 3$$

CT4 is the center thickness of the fourth lens 104, and CT5 is the center thickness of the fifth lens 105. In Mathematical Expression 3, the center thickness CT5 of the fifth lens 105 and the center thickness CT4 of the fourth lens 104 may be set, thereby optimizing thermal compensation according to temperature changes from low to high temperatures and preventing degradation of optical performance. Preferably, Mathematical Expression 3 may satisfy: $0.5 < CT5/CT4 < 1$.

$$\text{[Mathematical Expression 3-1] } 0 < CT5 / CT3 < 3$$

CT3 is the center thickness of the third lens 103. In Mathematical Expression 3-1, by setting the center thicknesses CT3 and CT5 of the third and fifth lenses 103 and 105, light refracted from the object-side lenses may be guided to the sensing unit 151. Preferably, Mathematical Expression 3-1 may satisfy: $0.5 < CT5/CT3 < 1$. Accordingly, the fifth lens 105 closest to the sensing unit 151 can thicken its center thickness CT5 without significantly increasing its effective diameter, and can refract light refracted through the object-side lenses to the entire area of the sensing unit 151.

$$\text{[Mathematical expression 4] } 0 < CT5 / (CT1+CT2) < 3$$

In mathematical expression 4, the center thickness CT5 of the fifth lens 105 is set to be greater than the sum of the center thicknesses CT1 and CT2 of the first and second lenses 101 and 102, thereby guiding light refracted from the object-side lens to the sensing unit 151. Preferably, mathematical expression 4 may satisfy: $0.5 < CT5 / (CT1+CT2) < 1$. Accordingly, the center thickness (CT5) of the fifth lens 105 closest to the sensing unit 151 may be thickened without significantly increasing its effective diameter.

$$[\text{Mathematical expression 5}] \quad 1 < CG3 / CT5 < 3$$

CG3 is the center distance between the third and fourth lenses 103 and 104. In Mathematical expression 5, the center distance CG3 between the third and fourth lenses 103 and 104 may be set to be greater than the center thickness CT5 of the fifth lens 105. Accordingly, a space for installing an optical filter 155 may be secured between the convex sensor-side surface of the third lens 103 and the convex object-side surface of the fourth lens 104. The effective diameter of the third lens 103 may be set to be greater than the effective diameter of the second lens 102. Preferably, 1.2 < CC3 / CT5 < 2.2 may be satisfied.

$$[\text{Mathematical expression 6}] \quad 0 < CG4 / CG1 < 1$$

CG1 is the center distance between the first and second lenses 101 and 102, and CG4 is the center distance between the fourth and fifth lenses 104 and 105. In mathematical expression 6, by setting the center distance CG1 between the first and second lenses 101 and 102 and the center distance CG4 of the fourth and fifth lenses 104 and 105, the center distances between the spherical lenses 101 and 104 and the aspherical lenses 102 and 105 may be set. Preferably, 0.1 < CG4 / CG1 < 0.5 may be satisfied.

$$[\text{Mathematical expression 6-1}] \quad 0 < CG4 / CG2 < 1$$

In Mathematical expression 6-1, the center distance CG2 between the second and third lenses 102 and 103 is set to be greater than the center distance CG4 between the fourth and fifth lenses 104 and 105, so that the center distance between the two object-side lenses 102 and 103 of the aperture stop ST is set to be greater than the center distance between the two sensor-side lenses 104 and 105 of the aperture stop ST, thereby controlling the light paths on the incident and exit sides of the aperture stop ST. Preferably, 0.3 < CG4 / CG2 < 0.8 may be satisfied.

$$[\text{Mathematical expression 7}] \quad 2 < CG3 / OFt < 5$$

CG3 is the center distance between the third and fourth lenses 103 and 104, and OFt is the thickness of the optical filter 155. In mathematical expression 7, the center distance CG3 between the third and fourth lenses 103 and 104 is set to be greater than the thickness of the optical filter 155, thereby securing a space in which the optical filter 155 may be installed in the area between the third and fourth lenses 103 and 104. Preferably, 2.8 < CG3 / OFt < 5 may be satisfied.

$$[\text{Mathematical expression 8}] \quad 0.3 < CG3 / (CT1+CG1+CT2) < 1.5$$

In mathematical expression 8, the center distance CG3 between the third and fourth lenses 103 and 104 may be set to be greater than the optical axis distance between the object-side surface of the first lens 101 and the sensor-side surface of the second lens 102. Accordingly, the effective diameter of the object-side surface of the first lens 101 may be set to the maximum, and the second lens 102 may be set to the minimum effective diameter with a concave shape on both sides. Preferably, 0.3 < CG2 / (CT1 + CG1 + CT2) < 1 may be satisfied.

$$[\text{Mathematical expression 10}] \quad 1.70 < Nd1$$

Nd1 is the refractive index of the first lens 101 at the d-line. In mathematical expression 10, by setting the refractive index of the first lens 101 high, factors affecting the reduction of the third-order aberration (Seidel aberration) of the optical system may be controlled, and aberrations that may occur as the TTL is somewhat extended may be reduced. mathematical expression 10 can preferably satisfy: 1.75 < Nd1 < 2.1. If it is designed to be lower than the lower limit of mathematical expression 10, the performance of reducing aberration may be obtained, and the refractive power of the first lens becomes weak, so that light cannot be collected efficiently, which may deteriorate the performance of the optical system. If it is designed to be higher than the upper limit of mathematical expression 10, there is a disadvantage in that it becomes difficult to obtain materials. In addition, if the refractive index of the first lens 101 is designed to be lower than the lower limit of mathematical expression 10, the radius of curvature of the first and second lenses may be increased in order to increase the refractive power of the first and second lenses.

[Mathematical expression 10-1] $1.7 \leq \text{Aver}(Nd1:Nd5) \leq 1.8$

Aver(Nd1:Nd5) is the average of the refractive indices at the d-line of the first to fifth lenses. When Mathematical expression 10-1 is satisfied, the optical system 100 can set the resolution and suppress the influence of TTL.

[Mathematical expression 10-2] $GMn\_Aver < GLn\_Aver$

GLn_Aver is the average of the refractive indices at the d-line of the spherical glass lenses, and GMn_Aver is the average of the refractive indices at the d-line of the aspherical glass lenses, which are glass molds. The spherical lens is a lens made of non-injection-molded glass, while the aspherical lens is a lens made of injection-molded glass. Spherical lenses with high refractive indices are positioned on the object side of the aspherical lens to increase chromatic dispersion.

[Mathematical expression 11] $0 < Nd1/Nd3 < 1.5$

Nd1 and Nd3 are the refractive indices at the d-line of the first and third lenses 101 and 103. In Mathematical expression 11, the difference in the refractive index of the first lens 101 and the refractive index of the third lens 103 may be reduced, thereby preventing the reduction in chromatic dispersion caused by lenses made of glass. Preferably, in Mathematical expression 11, Nd1 and Nd3 may be equal.

[Mathematical expression 12] $0 < Nd3/Nd4 < 1.5$

Nd3 and Nd4 are the refractive indices at the d-line of the third and fourth lenses 103 and 104. In Mathematical expression 12, by setting the refractive index of the third lens 103 higher than that of the fourth lens 104, the chromatic dispersion caused by spherical lenses and the chromatic dispersion caused by aspherical lenses may be controlled. Preferably, in Mathematical expression 12, Nd3 and Nd4 may be the same.

[Mathematical expression 13] $(Vd4*Nd4) < (Vd2*Nd2)$

Nd2 and Nd4 are the refractive indices of the second and fourth lenses 102 and 104 at the d-line, and Vd2 and Vd4 are the Abbe numbers of the second and fourth lenses. In Mathematical expression 13, by setting the product of the refractive index and Abbe number of the second lens 102 higher than the product of the refractive index and Abbe number of the fourth lens 104, the chromatic dispersion caused by spherical lenses and the chromatic dispersion caused by aspherical lenses may be controlled.

[Mathematical expression 13-1] $(Vd3*Nd3) < (Vd5*Nd5)$

Nd3 and Nd5 are the refractive indices of the third and fifth lenses 103 and 105 at the d-line, and Vd3 and Vd5 are the Abbe numbers of the third and fifth lenses. In Mathematical expression 13-1, by setting the product of the refractive index and Abbe number of the fifth lens 105 to be greater than the product of the refractive index and Abbe number of the third lens 103, the chromatic dispersion caused by the spherical material lens and the chromatic dispersion caused by the aspherical lens may be controlled.

[Mathematical expression 14] $BFL < D1$

BFL is the optical axis distance from the surface of the sensing unit 151 to the center of the sensor-side surface of the last lens, i.e., the fifth lens 105. D1 is the optical axis distance from the surface of the sensing unit 151 to the surface of the optical filter 155. By satisfying Mathematical expression 14, the optical filter 155 may be positioned adjacent to the aperture stop ST or closer to the object side than the last lens.

[Mathematical expression 14-1] $1 < SD/D1 < 1.2$

SD is the distance along the optical axis from the aperture stop ST to the surface of the sensing unit 151. When Mathematical expression 14-1 is satisfied, the optical filter 155 may be positioned adjacent to the aperture stop ST and on the sensor side of the aperture stop ST.

[Mathematical expression 14-2] $BFL < CG3 < D1$

[Mathematical expression 15] $CT5 < TTL/3 < D1$

CT5 is the center thickness of the fifth lens 105, and TTL is the optical axis distance from the first lens 101 to the surface of the sensing unit 151. In Mathematical Expression 15, the optical axis distance D1 between the optical filter 155 and the sensing unit 151 may be set to be greater than the center thickness of the fifth lens 105 adjacent to the sensing unit 151 and also greater than half the TTL value. Accordingly, the incident angle of the main beam incident on the optical filter 155 may be reduced to less than 20 degrees, and the problem of the incident angle shifting at low and high temperatures compared to room temperature may be minimized. Preferably, D1 satisfies 18 mm < D1 < 25 mm.

[Mathematical Expression 16] $0.5 < D1/D2 < 1.5$

D1 is the optical axis distance from the surface of the sensing unit 151 to the optical filter 155, and D2 is the optical axis distance from the center of the object-side surface of the first lens 101 to the object-side surface of the optical filter 155. When mathematical expression 16 is satisfied, the optical filter 155 may be positioned between the lenses, between the third and fourth lenses, or adjacent to the aperture stop ST. Accordingly, the incident angle of the main beam incident on the optical filter 155 may be reduced to less than 20 degrees, minimizing the problem of the incident angle shifting at low and high temperatures compared to room temperature. Preferably, D2 < D1 may be satisfied.

[Mathematical expression 17] $0 < OFt < CG3$

When the thickness OFt of the optical filter and the center distance between the third and fourth lenses 103 and 104 satisfy mathematical expression 17, the optical filter 155 may be positioned between the third and fourth lenses. Furthermore, 0 < OFt < CG3 < EG3 may be satisfied, where EG3 is the edge distance between the third and fourth lenses. In addition, 0 < OFt < CG_Min may be satisfied, where CG_Min represents the minimum distance among the center distances between two adjacent lenses.

[Mathematical expression 18] $1 < CA11 / CA21 < 5$

CA11 represents the effective diameter of the first surface S1 of the first lens 101, and CA21 represents the effective diameter of the third surface S3 of the second lens 102. When Mathematical expression 18 is satisfied, the optical system 100 can control incident light and set factors affecting aberration. Preferably, 1 < CA11 / CA21 < 2.5 may be satisfied.

[Mathematical expression 19] $0 < CA22 / CA31 < 2$

CA22 refers to the effective diameter of the fourth surface S4 of the second lens 102, and CA31 refers to the effective diameter of the fifth surface S5 of the third lens 103. When Mathematical expression 19 is satisfied, the optical system 100 can control the incident light path and set the sensor-side surface of the second lens 102 to a concave shape. Preferably, Mathematical expression 19 may satisfy: 0.5 < CA22 / CA31 < 1.

[Mathematical expression 20] $0.5 < CA42 / CA51 < 2$

CA42 refers to the effective diameter of the eighth surface S8 of the fourth lens 104, and CA51 refers to the effective diameter of the ninth surface S9 of the fifth lens 105. When Mathematical Expression 20 is satisfied, the optical system 100 can set a light path incident on the sensing unit 151 through the fourth lens 104 and the fifth lens 105. Mathematical Expression 20 preferably satisfies: 1 < CA42 / CA51 < 1.5.

[Mathematical Expression 21] $1 < CA11 / CA52 < 5$

CA11 represents the effective diameter of the first surface S1 of the first lens 101, and CA52 represents the effective diameter of the tenth surface S10 of the fifth lens 105. When the optical system 100 satisfies Mathematical Expression 21, the incident amount of the first lens, the spherical lens, may be increased, and the light path toward the sensing unit may be set through the last lens, the aspherical lens. Mathematical Expression 21 preferably satisfies: $1 < CA11 / CA52 < 2.5$.

$$\text{[Mathematical expression 22]} \quad 0 < CG2 / (CT2+CT3) < 1$$

CG2 is the center distance between the second and third lenses, and CT2 and CT3 are the center thicknesses of the second and third lenses. When mathematical expression 22 is satisfied, the concave radius of curvature of the sensor-side surface of the second lens 102 may be set, and the optical path between the second and third lenses 102 and 103 may be set. Preferably, $0.2 < CG2 / (CT2+CT3) < 0.6$ may be satisfied.

$$\text{[Mathematical expression 23]} \quad 0 < CG4 / (CT4+CT5) < 1$$

CG4 is the center distance between the fourth and fifth lenses, and CT4 and CT5 are the center thicknesses of the fourth and fifth lenses. When Mathematical expression 23 is satisfied, the radius of curvature of the sensor-side surface of the fourth lens 104 may be reduced, and the optical path may be set according to the center distance between the fourth and fifth lenses 104 and 105. Preferably, $0 < CG4 / (CT4 + CT5) < 0.5$ may be satisfied.

$$\text{[Mathematical expression 24]} \quad 1 < CG\_max / CG4 < 5$$

CG_max refers to the maximum center distance between lenses in the optical system. When Mathematical expression 24 is satisfied, the maximum center distance between lenses is positioned closer to the object than the center distance between the fourth lens 104 and the fifth lens 105, thereby suppressing an increase in the size of the fourth lens 104. Preferably, $3 < CG\_max / CG4 < 4$ may be satisfied.

$$\text{[Mathematical expression 25]} \quad 0.5 < CT5 / BFL < 2$$

When the center thickness of the fifth lens and the optical axis distance between the fifth lens 105 and the sensing unit 151 satisfy Mathematical expression 25, the incident light may be stably transmitted to the entire area of the sensing unit 151 by the fifth lens 105. Preferably, $0.7 < CT5 / BFL < 1.2$ may be satisfied.

$$\text{[Mathematical expression 26]} \quad 1 < CG3 / CT5 < 3$$

CG3 represents the central distance between the third and fourth lenses, and CT5 represents the center thickness of the fifth lens. When Mathematical expression 26 is satisfied, the effective diameter of the fifth lens 105 may be adjusted. Preferably, $1.2 < CG3 / CT5 < 2.2$ may be satisfied.

$$\text{[Mathematical expression 27]} \quad 0 < CG4 / CT5 < 1$$

CG4 represents the center distance between the fourth and fifth lenses, and CT5 represents the center thickness of the fifth lens. When Mathematical expression 27 is satisfied, the effective diameter of the fifth lens 105 may be adjusted, improving aberration characteristics in the central and peripheral regions of the sensing unit 151. Preferably, $0.3 < CG4 / CT5 < 0.8$ may be satisfied.

$$\text{[Mathematical expression 28]} \quad 5 < L5R2 / CT5 < 30$$

L5R2 represents the radius of curvature of the sensor-side surface of the fifth lens. When Mathematical expression 28 is satisfied, the refractive power of the fifth lens 105 may be controlled, improving optical performance. Preferably, $10 < L5R2 / CT5 < 20$ may be satisfied.

$$\text{[Mathematical expression 29]} \quad 3 < L5R2 / L5R1 < 10$$

L5R1 is the radius of curvature of the object-side surface of the fifth lens. When Mathematical expression 29 is satisfied, the refractive power of the fifth lens 105 may be controlled and optical performance may be improved. Preferably, $5 < L5R2 / L5R1 < 9$ may be satisfied.

$$[\text{Mathematical expression 30}]\ 20 < L1R1 / L1R2 < 70$$

L1R1 is the radius of curvature of the object-side surface of the first lens, and L1R2 is the radius of curvature of the sensor-side surface of the first lens. When Mathematical expression 30 is satisfied, the refractive power of the first lens 101 may be controlled and optical performance may be improved. Preferably, 30 < L1R1 / L1R2 < 50 may be satisfied.

$$[\text{Mathematical expression 31}]\ 0 < |L2R1 / L2R2| < 2$$

L2R1 is the radius of curvature of the object-side surface of the second lens, and L2R2 is the radius of curvature of the sensor-side surface of the second lens. When Mathematical expression 31 is satisfied, the refractive power of the second lens 102 may be controlled, improving optical performance and adjusting the effective diameters of the sensor-side lenses of the second lens 102. Flattening the object-side surface of the second lens 112 can facilitate lens processing. Preferably, 1 < |L2R1 / L2R2| < 1.5 may be satisfied.

$$[\text{Mathematical expression 32}]\ 0 < CT\_Max / CG\_Max < 2$$

In Mathematical expression 32, the maximum center thickness CT_Max among the lenses and the maximum distance CG_Max between adjacent lenses may be set. When Mathematical expression 32 is satisfied, the optical system can exhibit good optical performance at a focal length within a set field of view and can reduce the TTL. Preferably, 0.5 < CT_Max / CG_Max < 1 may be satisfied.

$$[\text{Mathematical expression 33}]\ 0 < \Sigma CT / \Sigma CG < 2$$

$\Sigma CT$ is the sum of the center thicknesses of the lenses, and $\Sigma CG$ is the sum of the distances between adjacent lenses. When Mathematical expression 33 is satisfied, the optical system can exhibit good optical performance at a focal length within a set field of view and can reduce the TTL. Preferably, 1 < $\Sigma CT / \Sigma CG$ < 1.5 may be satisfied.

$$[\text{Mathematical expression 34}]\ 5 < \Sigma Nd < 15$$

$\Sigma Nd$ represents the sum of the refractive indices at the d-line of each of the plurality of lenses. When mathematical expression 34 is satisfied, the TTL may be controlled in an optical system 100 that combines aspherical and spherical lenses, thereby achieving improved resolution. Furthermore, when the number of spherical lenses exceeds the number of aspherical lenses, the sum of the TTL and the refractive index may be set. Mathematical expression 34 preferably satisfies: 7 < $\Sigma Nd$ < 13.

$$[\text{Mathematical expression 35}]\ 10 < \Sigma Vd / \Sigma Nd < 50$$

$\Sigma Vd$ represents the sum of the Abbe numbers of each of the plurality of lenses. When mathematical expression 35 is satisfied, the optical system 100 can have improved aberration characteristics and resolution. By setting the sum of the Abbe numbers and the sum of the refractive indices of the lenses in mathematical expression 35, optical characteristics may be controlled, and preferably satisfies: 10 < $\Sigma Vd / \Sigma Nd$ < 20.

$$[\text{Mathematical expression 36}]\ 50 < \Sigma CT*n < 150$$

$\Sigma CT$ is the sum of the center thicknesses of multiple lenses, and n is the number of lenses in the optical system. If Mathematical expression 36 is satisfied, TTL control is possible. Preferably, 70 < $\Sigma CT*n$ < 120 may be satisfied.

$$[\text{Mathematical expression 37}]\ 1 < CA11 / CA\_Min < 5$$

CA11 represents the effective diameter of the object-side first surface S1 of the first lens, and CA_Min represents the minimum effective diameter among the object-side and sensor-side surfaces of the lenses. If Mathematical expression 37 is satisfied, the optical system can control incident light, maintain optical performance, and provide a slimmer module. Mathematical expression 38 preferably satisfies: 1 < CA11 / CA_Min < 3. Here, CA11 may be the maximum effective diameter, and the object-side third surface S3 of the second lens 102 may have a minimum effective diameter.

[Mathematical Expression 38] $2 < CA\_Max / CG\_Max < 4$

CA_Max represents the maximum effective diameter among the lens surfaces, and CG_Max represents the maximum center distance among the lenses. If Mathematical Expression 38 is satisfied, the maximum center distance is arranged within the range based on the maximum effective diameter, thereby reducing the TTL. Preferably, $2 < CA\_Max / CG\_Max < 3$ may be satisfied.

[Mathematical Expression 39] $0.5 < CA\_Max / D1 < 1.5$

If Mathematical Expression 39 is satisfied, the position of the optical filter 155 may be set based on the maximum effective diameter. Preferably, $0.5 < CA\_Max / D1 < 1$ may be satisfied.

[Mathematical expression 40] $0.1 < CA\_Min / CG\_Max < 1$

Mathematical expression 30 sets the minimum effective diameter of the lens surface and the maximum center distance between lenses within the above range, thereby reducing TTL. Preferably, $0.2 < CA\_Min / CG\_Max < 0.8$ may be satisfied.

[Mathematical expression 41] $1 < CA\_max / (2*ImgH) < 5$

Mathematical expression 41 may be set to the maximum effective diameter CA_Max and the diagonal length (2*ImgH) of the sensing unit 151. If this is satisfied, the optical system can maintain good optical performance and a slim, compact sensor device may be configured. Mathematical expression 41 preferably satisfies: $2 < CA\_max / (2*ImgH) < 4$.

[Mathematical expression 42] $1 < TD / CA\_Max < 4$

TD is the optical axis distance from the center of the object-side surface of the first lens 101 to the center of the sensor-side surface of the last lens 105. When mathematical expression 42 is satisfied, the total optical axis distance and maximum effective diameter of the lenses may be set, thereby setting a size for good optical performance. Preferably, mathematical expression 43 satisfies: $1.5 < TD / CA\_Max < 3$.

[Mathematical expression 42-1]

$SD < TD$

The SD is the optical axis distance from the aperture stop position to the surface of the sensing unit 151. Preferably, the condition may satisfy: $1.5 < TD/SD < 2.5$.

[Mathematical expression 43]

$0 < F / L5R2 < 0.5$

F is the effective focal length of the receiving optical system, and L5S2 is the radius of curvature of the sensor-side surface of the fifth lens 105. If Mathematical expression 43 is satisfied, the effect on optical system reduction, such as TTL, may be controlled by setting the effective focal length and the radius of curvature of the sensor-side surface of the last aspherical lens. Mathematical expression 43 preferably satisfies: $0 < F / L5R2 < 0.2$.
[Mathematical expression 44] $0 < F / L1R1 < 0.5$

In Mathematical expression 44, the effective focal length of the receiving optical system and the radius of curvature of the object-side surface of the first lens 101 are set to control the influence on incident light and TTL. Mathematical expression 44 preferably satisfies: $0 < F / L1R1 < 0.1$.

$$[\text{Mathematical expression 45}] \quad 0 < EPD / L5R2 < 0.5$$

EPD refers to the size (mm) of the entrance pupil diameter of the receiving optical system 100. When the receiving optical system 100 according to the embodiment satisfies Mathematical expression 45, the optical system 100 can control incident light. Preferably, the condition satisfies: $0 < EPD / L5R2 < 0.2$.

$$[\text{Mathematical expression 46}] \quad 0 < EPD / L1R1 < 0.5$$

In Mathematical expression 46, the size of the entrance pupil diameter of the receiving optical system 100 and the radius of curvature of the object-side surface of the first lens 101 may be set. If these conditions are met, the receiving optical system 100 can control the incident light. Preferably, the condition may satisfies: $0 < EPD / L1R1 < 0.2$.

$$[\text{Mathematical expression 47}] \quad 0 < |F1 / F2| < 5$$

F1 is the focal length of the first lens 101, and F2 is the focal length of the second lens 102. If Mathematical expression 47 is satisfied, the refractive power of the first and second lenses may be controlled to improve resolution, and this can affect the TTL and effective focal length (EFL). Preferably, the condition may satisfies: $0.5 < |F1 / F2| < 1$ or $|F1| < |F2|$.

$$[\text{Mathematical expression 48}] \quad 0 < |F1| / F < 10$$

In Mathematical expression 48, the focal length of the first lens 101 and the effective focal length of the optical system may be set, and the refractive power of the first lens 101 may be controlled to improve the resolution. Preferably, $0 < |F1| / F < 5$ may be satisfied.

$$[\text{Mathematical expression 49}] \quad 0 < |F1 / F5| < 5$$

In Mathematical expression 49, the focal lengths of the first and fifth lenses 101 and 105 may be set, and the refractive power of the first and fifth lenses 101 and 105 may be controlled to improve the resolution. Preferably, $0 < |F1 / F5| < 1$ may be satisfied.

$$[\text{Mathematical expression 49-1}] \quad |F1| < F4$$

$$[\text{Mathematical expression 49-2}] \quad F3 < F4$$

$$[\text{Mathematical expression 49-3}] \quad F5 < F4$$

In Mathematical expressions 49-1 to 49-3, F1 to F5 represent the focal lengths of the first to fifth lenses 101 to 105. By adjusting the focal length of the spherical lens to the focal length of the last aspherical lens, light may be guided to the effective region of the aspherical lens. Here, F1 is less than or equal to -5 mm, for example, within the range of -5 mm to -30 mm. F2 is less than or equal to -5 mm, for example, within the range of -5 mm to -30 mm. F3 is greater than or equal to 8 mm, for example, within the range of 8 mm to 30 mm. F4 is greater than or equal to 10 mm, for example, within the range of 10 mm to 36 mm. F5 is greater than or equal to 8 mm, for example, within the range of 8 mm to 30 mm. The balance of the focal lengths of each of the lenses can suppress the difference in focus position due to temperature change. Accordingly, the optical characteristics of the imaging lenses may be suppressed from deteriorating due to temperature change. Here, the aperture stop ST of the receiving optical system is disposed on the sensor-side surface of the third lens 103. The focal length of the lens disposed on the sensor-side surface closer to the aperture stop ST and closest to the aperture stop ST is greater than 0. In the embodiment of the present invention, the focal length F3 of the third lens 103 should be designed to be greater than 0. In this case, the third lens 103 collects light, so that the effective diameters of the fourth and fifth lenses, which are lenses arranged closer to the sensor than the third lens 103, may be prevented from increasing, and the TTL may be prevented from becoming longer, enabling miniaturization of the receiving optical system. In this case, a wide-angle optical system may be provided in a FOV exceeding 100 degrees, for example, in a range of 110 to 130 degrees.

$$[\text{Mathematical expression 50}]\ 0 < |\ F1\ /\ F4\ | < 1$$

F1 is the refractive power of the first lens 101, and F4 is the refractive power of the fourth lens 104. That is, the refractive powers of the first and fourth lenses are opposite to each other, which can improve aberrations and effectively guide light through the aspherical lens. When F1 * F4 < 0, the chromatic aberration improvement effect of the two lenses is not significant.

$$[\text{Mathematical expression 51}]\ 20\ mm < TTL < 60\ mm$$

TTL refers to the distance (mm) from the center of the first surface S1 of the first lens 101 to the image surface of the sensing unit 151 along the optical axis OA. In Mathematical expression 51, by setting the TTL to be greater than 20 mm and less than 60 mm, a vehicle optical system may be provided. Mathematical expression 51 preferably satisfies the conditions: 30 mm < TTL < 55 mm or TD < TTL.

$$[\text{Mathematical expression 52}]\ 2\ mm < ImgH < 20\ mm$$

Mathematical expression 52 can set the diagonal size (2*ImgH) of the sensing unit 151 and provide an optical system having the size of a vehicle sensor. Mathematical expression 52 preferably satisfies the condition: 2 mm < ImgH < 5 mm.

$$[\text{Mathematical expression 53}]\ 3\ mm < BFL < 7\ mm$$

In Mathematical expression 53, the BFL is set to be greater than 3 mm and less than 7 mm, thereby securing the installation space for the cover glass 153. Furthermore, the distance between the sensing unit 151 and the last lens improves the assembling of components and enhances joint reliability. Mathematical expression 53 preferably satisfies the condition: 4 mm < BFL < 7 mm. If the BFL falls below the range of Mathematical expression 53, some light traveling to the sensing unit may not be transmitted to the sensing unit, which may cause resolution degradation. If the BFL exceeds the range of Mathematical expression 53, stray light may be introduced, degrading the aberration characteristics of the optical system.

$$[\text{Mathematical expression 54}]\ 1\ mm < F < 10\ mm$$

Mathematical expression 54 can set the overall focal length F to suit a vehicle receiving optical system. Mathematical expression 54 may satisfy the condition: 1 mm < F < 5.5 mm.

$$[\text{Mathematical expression 55}]\ 100\ degrees < FOV$$

In Mathematical expression 55, the FOV refers to the field of view (Degree) of the optical system 100, and a vehicle optical system having an FOV exceeding 100 degrees may be provided. The FOV can preferably satisfy: $110° \leq FOV \leq 130°$. In mathematical expression 55, the range of the vehicle optical system may be set by the field of view. The sensor length in the horizontal direction is based on 6.04 mm $\pm$ 0.5 mm. In addition, when mathematical expression 55 is satisfied, when the temperature changes from room temperature to high temperature, the change rate of the effective focal length and the change rate of the field of view may be set to 5% or less, for example, 0 to 5%. In addition, even if two or more aspherical lenses are mixed with spherical lenses and used in the optical system 100, the deterioration of optical characteristics may be prevented through temperature compensation and aberration correction by the aspherical lens made of glass.

$$[\text{Mathematical expression 56}]\ 1 < TTL\ /\ CA\_max < 7$$

Mathematical expression 56 establishes a relationship between the total optical axis length of the optical system and the maximum effective diameter, thereby providing an improved vehicle optical system. Preferably, Mathematical expression 56 satisfies: 1 < TTL / CA_max < 3.

$$[\text{Mathematical expression 57}]\ 10 < TTL\ /\ ImgH < 30$$

Mathematical expression 57 can establish the total optical axis length (TTL) of the optical system and the diagonal length (ImgH) of the optical axis of the sensing unit 151. When the optical system 100 according to the embodiment satisfies Mathematical expression 57, the optical system 100 can have a TTL for application to the vehicle sensing unit 151, thereby providing improved image quality. Mathematical expression 57 preferably satisfies: 10 < TTL / ImgH < 20.

$$[\text{Mathematical Expression 58}] \ 1 < BFL / ImgH < 2$$

Mathematical Expression 58 can set the optical axis distance between the sensing unit 151 and the last lens and the diagonal length from the optical axis of the sensing unit 151. When the optical system 100 according to the embodiment satisfies mathematical expression 58, the optical system 100 can secure a BFL for applying the size of the vehicle sensing unit 151, set the distance between the last lens and the sensing unit 151, and have good optical characteristics at the center and periphery of the FOV. Mathematical Expression 58 can preferably satisfy: 1.2 < BFL / ImgH < 1.8.

$$[\text{Mathematical expression 58-1}] \ ImgH < BFL < D1$$

BFL may be greater than a value (ImgH) equal to half the diagonal length of the sensing unit 151 and less than the optical axis distance from the optical filter 155 to the surface of the sensing unit 151.

$$[\text{Mathematical expression 59}] \ 7 < TTL / BFL < 15$$

Mathematical expression 59 may set the total optical axis length (TTL) of the receiving optical system and the optical axis distance BFL between the sensing unit 151 and the last lens. When the optical system 100 according to the embodiment satisfies mathematical expression 59, the optical system 100 may secure BFL. Preferably, mathematical expression 59 may satisfy: 8 < TTL / BFL < 12.

$$[\text{Mathematical Expression 60}] \ 0 < F/TTL < 0.5$$

Mathematical Expression 60 can set the overall focal length F and overall optical axis length (TTL) of the receiving optical system 100. Accordingly, an optical system for a driver assistance system may be provided. Mathematical Expression 60 preferably satisfies: 0 < TTL/F < 0.1. When the optical system 100 according to the embodiment satisfies Mathematical Expression 60, the optical system 100 can have an appropriate focal length within the set TTL range, and provides an optical system capable of maintaining an appropriate focal length and forming an image even when the temperature changes from low to high temperatures. If it is below the lower limit of Mathematical Expression 60, the refractive power of the lenses needs to be increased, making it difficult to correct spherical aberration or distortion aberration. If it is above the upper limit of Mathematical Expression 60, the effective diameter or TTL of the lenses may become longer, which may cause a problem of the imaging lens system becoming larger.

$$[\text{Mathematical expression 61}] \ 0 < F / BFL < 2$$

Mathematical expression 61 can set the overall focal length F of the optical system 100 and the optical axis distance BFL between the sensing unit 151 and the last lens. When the optical system 100 according to the embodiment satisfies mathematical expression 61, the optical system 100 can have a set field of view and an appropriate focal length, and may be provided as a vehicle optical system. In addition, the optical system 100 can minimize the distance between the last lens and the sensing unit 151, thereby providing good optical characteristics at the periphery of the FOV. Mathematical expression 61 can preferably satisfy: 0.5 < F / BFL < 1.

$$[\text{Mathematical expression 62}] \ 0.5 < F / ImgH < 1.5$$

Mathematical expression 62 can set the overall focal length F (mm) of the optical system 100 and the diagonal length (ImgH) from the optical axis of the sensing unit 151. This optical system 100 can have improved aberration characteristics in the size of the vehicle sensing unit 151. Preferably, Mathematical expression 62 satisfies: 0.8 < F / ImgH < 1.4.

[Mathematical expression 63] $0.5 < F / EPD < 1.5$

Mathematical expression 63 can set the overall focal length F and entrance pupil diameter of the receiving optical system 100. Accordingly, the overall brightness of the optical system may be controlled. Preferably, Mathematical expression 63 satisfies: $0.5 < F / EPD < 1$.

[Mathematical expression 64] $0 < EPD / ImgH / FOV < 0.2$

Mathematical expression 64 can set the relationship between the entrance pupil diameter (EPD), the length ImgH of 1/2 of the maximum diagonal length of the sensing unit, and the field of view. Accordingly, the overall size and brightness of the optical system may be controlled. Preferably, Mathematical expression 64 satisfies: $0 < EPD / ImgH / FOV < 0.1$.

[Mathematical expression 65] $100 < FOV / F\# < 200$

Mathematical expression 65 can set the relationship between the field of view and the F number F# of the optical system. Preferably, Mathematical expression 65 satisfies: $120 < FOV / F\# < 170$. Here, F# is provided to be 1.2 or less, thereby providing a bright image.

[Mathematical expression 66] $50 < (CT\_Max+CG\_Max)*n < 150$

[Mathematical expression 67] $800 < (FOV*TTL)/n$

Preferably, Mathematical expression 67 satisfies the condition: $1000 < (FOV*TTL)/n < 1300$, depending on the field of view and the number n of lenses.

[Mathematical expression 68] $FOV < (TTL*n)$

[Mathematical expression 69] $5 < (TD/CA\_Max)*n < 30$

Preferably, $8 < (TD/CA\_Max)*n < 20$ may satisfies.

[Mathematical expression 70] $0 < (CA52/CA22)/(CA11/CA22) < 1.5$

In mathematical expressions 66 to 70, n represents the total number of lenses. Depending on the total number of lenses, the relationship between the maximum center thickness CT_Max, maximum center distance CG_Max, FOV, TTL, optical axis distance TD of the lenses, the effective diameter CA52 of the sensor-side surface of the fifth lens, the effective diameter CA11 of the object-side surface of the first lens, and the effective diameters CA21 and CA22 of the object-side and sensor-side surfaces of the second lens may be established. Accordingly, the chromatic aberration, resolution, size, etc. of an optical system having six or fewer lenses may be controlled.

The receiving optical system 100 according to the embodiment may satisfy at least one or two of the mathematical expressions 1 to 70. In this case, the receiving optical system 100 can have improved optical characteristics. Specifically, when the receiving optical system 100 satisfies at least one of Mathematical expressions 1 to 35 and/or at least one of Mathematical expressions 36 to 70, the receiving optical system 100 can have enhanced resolution and improve aberration and distortion characteristics. Furthermore, the receiving optical system 100 can secure a back focal length BFL for applying the vehicle sensing unit 151, compensate for optical characteristic degradation due to temperature changes, and minimize the distance between the last lens and the sensing unit 151, thereby achieving excellent optical performance at the center and periphery of the FOV.

Table 5 shows the items of the mathematical expressions described above in the receiving optical system 100 of the embodiment, including the TTL (mm), BFL (mm), effective focal length F, ImgH (mm), effective diameter (mm), the sum of the center thicknesses of each lens, the sum of the center distances between adjacent lenses, the sum of Abbe numbers, the sum of refractive indices, the optical axis distance TD (mm) from the first surface S1 to the tenth surface S10, the focal lengths F1, F2, F3, F4, and F5 of each of the first to fifth lenses, the field of view (degrees), the edge thickness ET, the F number, etc. of the optical system 100.

[Table 5]

| Items | Values | Items | Values |
|---|---|---|---|
| F(EFL) | 3.349 | ET1 | 5.613 |
| F1 | -9.909 | ET2 | 4.295 |
| F2 | -10.775 | ET3 | 2.502 |
| F3 | 14.869 | ET4 | 1.803 |
| F4 | 19.845 | ET5 | 1.903 |
| F5 | 15.271 | FOV | 128.810 |
| $\sum$Nd | 8.786 | EPD | 3.516 |
| $\sum$Vd | 133.500 | BFL | 4.176 |
| $\sum$CT | 20.567 | TD | 4.599 |
| $\sum$CG | 17.834 | ImgH | 41.586 |
| TTL | 43.0 | SD | 3.020 |
| F-number | 0.802 | | |

Table 6 shows the results for the mathematical expressions 1 to 70 described above in the receiving optical system 100 of the embodiment. Referring to Table 6, it may be seen that the receiving optical system 100 satisfies at least one, two or more, or three or more of the mathematical expressions 1 to 35. Furthermore, it may be seen that the receiving optical system 100 satisfies at least one, two or more, or three or more of the mathematical expressions 36 to 70. Specifically, it may be seen that the optical system 100 according to the embodiment satisfies at least one, two or more, or all of the mathematical expressions 1 to 70. Accordingly, the receiving optical system 100 can have good optical performance and superior optical characteristics in the center and periphery of the FOV.

[Table 6]

| | Mathematical expressions | Values | | Mathematical expressions | Values |
|---|---|---|---|---|---|
| 1 | 0 < CT1 / CT2 < 3 | 0.938 | 36 | 50 < $\sum$CT*n < 150 | 102.837 |
| 2 | 2 < CA11 / CT 1 < 10 | 6.433 | 37 | 2 < CA11 / CA_Min < 5 | 1.678 |
| 3 | 0 < CT5 / CT4 < 3 | 0.848 | 38 | 2 < CA_Max / CG_Max < 4 | 2.548 |
| 4 | 0< CT5 / (CT1+CT2) < 3 | 0.762 | 39 | 0.5 < CA_Max / D1 < 1.5 | 0.845 |
| 5 | 1 < CG3 / CT5 < 3 | 1.604 | 40 | 0.1 < CA_Min / D1 < 1 | 0.503 |
| 6 | 0 < CG4 / CG1 < 1 | 0.384 | 41 | 1 < CA_Max / (2*ImgH) < 5 | 2.982 |
| 7 | 2 < CG3 / CG4 < 5 | 3.447 | 42 | 1 < TD / CA_Max < 4 | 2.309 |
| 8 | 0.3 < CG3 / (CT1+CG1+CT2) < 1.5 | 0.635 | 43 | 0 < F / L5R2 < 0.5 | 0.054 |
| 9 | 5 < TTL/CT_AVER < 25 | 10.453 | 44 | 0 < F / L1R1 < 0.5 | 0.011 |
| 10 | 1.70 < Nd1 | 1.816 | 45 | 0 < EPD / L5R2< 0.5 | 0.067 |
| 11 | 0 < Nd1/Nd3 <1.5 | 1.000 | 46 | 0 < EPD / L1R1 < 0.5 | 0.013 |
| 12 | 0 < Nd3/Nd4 <1.5 | 1.000 | 47 | 0 < |F1 / F2| < 5 | 0.920 |
| 13 | (Vd4*Nd4) < (Vd2*Nd2) | Satisfaction | 48 | 1 < |F1| / F < 10 | 2.959 |
| 14 | BFL < D1 | Satisfaction | 49 | 0 < |F1 / F5| < 5 | 0.649 |
| 15 | CT5 < TTL/3 < D1 | Satisfaction | 50 | 0<|F1 / F4| <1 | 0.499 |
| 16 | 0.5 < D1 / D2 < 1.5 | Satisfaction | 51 | 20 < TTL < 60 | 43.000 |
| 17 | 0 < OFt < CG3 | Satisfaction | 52 | 2 < ImgH < 20 | 3.020 |
| 18 | 1 < CA11 / CA21 < 5 | 1.678 | 53 | 3 < BFL < 7 | 4.599 |

(continued)

| | Mathematical expressions | Values | | Mathematical expressions | Values |
|---|---|---|---|---|---|
| 19 | 0 < CA22 / CA31 < 2 | 0.837 | 54 | 1 < F < 10 | 3.349 |
| 20 | 0.5 < CA42 / CA51 < 2 | 1.237 | 55 | 100 < FOV | 128.810 |
| 21 | 1 < CA11/CA52 < 5 | 1.657 | 56 | 1 < TTL / CA_max < 7 | 2.387 |
| 22 | 0 < CG2 / (CT2+CT3) < 1 | 0.413 | 57 | 10 < TTL / ImgH < 30 | 14.238 |
| 23 | 0 < CG4 /(CT4+CT5) < 1 | 0.214 | 58 | 1 < BFL / ImgH < 2 | 1.523 |
| 24 | 1 < CG_Max / CG4 < 5 | 3.447 | 59 | 7 < TTL / BFL < 15 | 9.350 |
| 25 | 0.5 < CT5 / BFL < 2 | 0.958 | 60 | 0 < F / TTL < 0.5 | 0.078 |
| 26 | 1 < CG3 / CT5 < 3 | 1.604 | 61 | 0 < F /BFL< 2 | 0.728 |
| 27 | 0 < CG4 / CT5 < 1 | 0.465 | 62 | 0.5 < F / ImgH < 1.5 | 1.109 |
| 28 | 5 < L5R2 / CT5 < 30 | 14.159 | 63 | 0.5 < F / EPD < 1.5 | 0.802 |
| 29 | 3 < L5R2 / LSR1 < 10 | 6.959 | 64 | 0 < EPD/Imgh/FOV < 0.2 | 0.011 |
| 30 | 20 < L1R1 / L1R2 < 70 | 40.192 | 65 | 100 < FOV / F# <200 | 160.631 |
| 31 | 0 < |L2R2 / L2R1| <2 | 1.153 | 66 | 50 < (CT_Max+CG_Max)*n < 150 | 61.337 |
| 32 | 0 < CT_Max / CG_Max < 2 | 0.735 | 67 | 800 < (FOV*TTL)/n | 1107.764 |
| 33 | 0 < ∑CT / ∑CG < 2 | 1.153 | 68 | FOV < (TTL*n) | Satisfaction |
| 34 | 5 < ∑Nd <15 | 8.786 | 69 | 5 < (TD / CA_max) *n < 30 | 11.544 |
| 35 | 10 < ∑Vd / ∑Nd <50 | 15.195 | 70 | 0 < (CA52/CA22) / (CA11/CA21) < 1.5 | 0.562 |

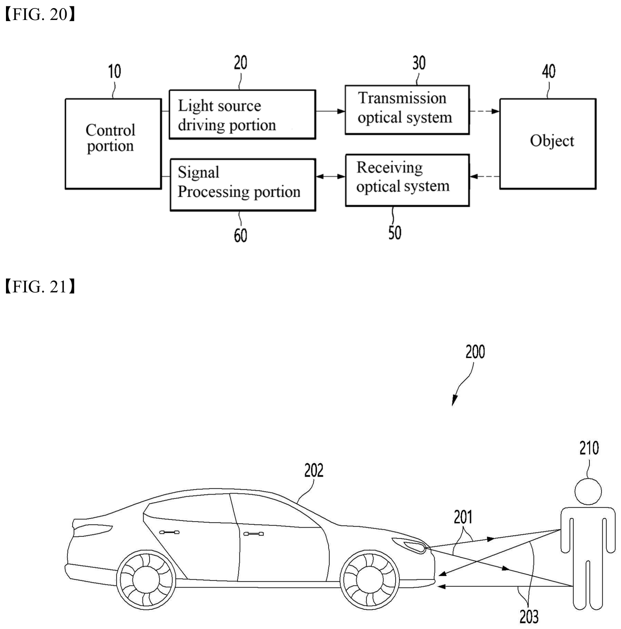

FIG. 20 is a block diagram of a sensor system having a receiving optical system according to an embodiment of the invention. Referring to FIG. 20, the sensor system includes a control unit 10, a light source driving unit 20, a transmitting optical system 30, a receiving optical system 50 disclosed above, and a signal processing unit 60. The control unit 10 controls the transmission and reception of signals, and may be linked to devices related to communication services such as autonomous driving modules, artificial intelligence modules, drones, robots, augmented reality devices, virtual phenomenon devices, and 5G and 6G based on the transmitted/received signals. The light source driving unit 20 supplies power to and drives a light source included in the transmitting optical system 30. The light source generates a laser beam in the form of a line light source or a point light source. The light source driving unit 20 can adjust or vary the driving current supplied to the light source according to driving environment information. The driving environment information may include topographic information of the driving section, traffic congestion information, weather, etc. The wavelength of the laser beam generated from the light source may be in the range of 890 nm to 960 nm or 940 nm ± 10 nm. As another example, the wavelength of the laser beam may be 1550 nm ± 10 nm. The laser light source may be implemented as an InGaAs/GaAs-based semiconductor diode laser and may emit a high-power laser beam. The light source may include a single emitter and/or multiple emitters.

The transmitting optical system 30 transmits the laser beam generated from the light source to an object 40 through a lens unit and a diffuser, and the light reflected from the object 40 is received by the receiving optical system 50. The receiving optical system 50 may be composed of a plurality of optical sensors, and the optical sensors convert the received light into an electrical signal using a photodiode. That is, the sensing unit is arranged in a matrix type and converts the light received from the scanned object in the horizontal and vertical directions into current. The signal processing unit 60 converts the output of the receiving optical system 50 into voltage, amplifies it, and then converts the amplified signal into a digital signal using an analog-to-digital converter. The signal processing unit 60 analyzes the digital data using a TOF (Time of Flight) algorithm or a phase-shift algorithm to detect the distance to the object 40 and the shape of the object.

The control unit 10 can receive vehicle speed information and road condition information through a control unit (ECU) or a network. The control unit 10 can receive driving environment information through a network. The driving environment information can include terrain information of the driving section, traffic congestion information, weather, etc. The control unit 10 can adjust the gain based on one or more of the vehicle's speed, the road surface condition of the road on which the vehicle is traveling, and driving environment information, and can provide sensor data including distance to an object and shape information of the object to the autonomous driving device.

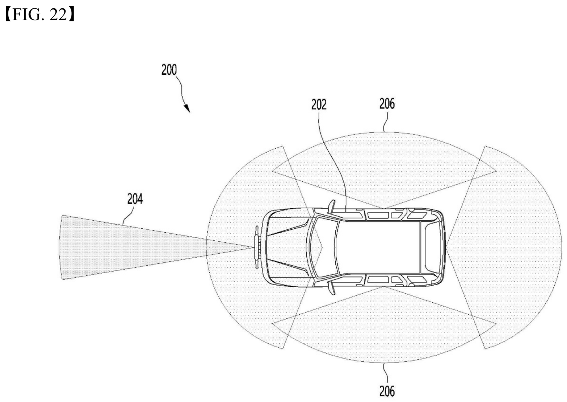

FIG. 21 is a diagram illustrating an example of measuring an object in a vehicle equipped with the sensor system of the invention, and FIG. 22 is a diagram illustrating an example of surrounding surveillance in a vehicle equipped with the sensor system of the invention.

Referring to FIGS. 21 and 22, the vehicle 202 equipped with the sensor system includes a transmitting optical system that projects a laser beam 201 generated by a light source toward a target scene, and a receiving optical system that receives light 203 reflected from the target or subject 210. The sensor system also includes a LIDAR system, which typically includes a controller that calculates distance information to the subject 210 from the reflected light, and a device capable of scanning or providing a specific pattern of light, which may be a static pattern within a desired range and FOV. The transceiver optics are used to convert the received signal light into measurements representing a point-by-point 3D map of the surrounding environment within the LIDAR system's range and FOV.

The LIDAR receiving optics and signal processing unit calculate range information based on time-of-flight measurements of light pulses emitted from the light source. Furthermore, the target plane associated with a specific range is illuminated, and known information about the light beam profile, based on the specific design of the source and projector system, is used to determine positional information about the reflecting surface, generating a complete x, y, z, or 3D picture of the scene. In other words, the point-by-point 3D map of the surrounding environment represents a collection of measurement data representing positional information from all surfaces reflecting the light from the source to the receiver within the LIDAR system's field of view. In this way, a 3D representation of objects within the LIDAR system's field of view is obtained.

Also illustrated is a schematic diagram illustrating the 2D field of view and range requirements of a typical surround sensing LIDAR system 200 for a vehicle 202. For example, adaptive cruise control may require a field of view and range 204 with a narrower field of view compared to the "surround view" field of view and range (206), but with a longer-range requirement. Typically, a vehicle's sensor capabilities may be enabled by a combination of LIDAR, radar, cameras, and ultrasonic sensors. The combination of these sensor data to generate information about the surrounding environment is often referred to as "sensor fusion." While the present invention describes a LIDAR system in the context of an automobile, where LIDAR is widely used for autonomous, self-driving, or driver-assisted vehicles, it should be understood that the embodiments may be applied to any vehicle. Other types of vehicles may include robots, tractors, trucks, airplanes, drones, boats, ships, and the like.

Features, structures, effects, etc. described in the embodiments above are included in at least one embodiment of the invention, and are not necessarily limited to only one embodiment. Furthermore, the features, structures, and effects illustrated in each embodiment may be combined or modified with respect to other embodiments by those skilled in the art in the field to which the embodiments belong. Therefore, contents related to these combinations and variations should be construed as being included in the scope of the invention. Although described based on the embodiments, this is only an example, this invention is not limited, and it will be apparent to those skilled in the art that various modifications and applications not illustrated above are possible without departing from the essential characteristics of this embodiment. For example, each component specifically shown in the embodiment may be modified and implemented. And the differences related to these modifications and applications should be construed as being included in the scope of the invention as defined in the appended claims.

**Claims**

1.   An optical system comprising:

   first to fifth lenses aligned along an optical axis from an object toward a sensing unit; and
   an optical filter spaced apart from the sensing unit and disposed between the third lens and the fourth lens,
   wherein the first to fifth lenses include aspherical lenses and spherical lenses having a number of lenses greater than a number of aspherical lenses,
   wherein an optical axis distance from the optical filter to a surface of the sensing unit is D1,
   wherein an optical axis distance from a sensor-side surface of the fifth lens closest to the sensing unit to the surface of the sensing unit is BFL,
   wherein the following Mathematical expression satisfies:

$$BFL < D1,$$

   wherein an effective diameter of the first lens is greater than effective diameters of the remaining lenses, and
   wherein the effective diameter of the fourth lens is smaller than the effective diameter of the first lens.

2.   The receiving optical system of claim 1, comprising:

an aperture stop disposed on an object-side periphery of the optical filter,
wherein an optical axis distance from the aperture stop to the surface of the sensing unit is SD, and
wherein the following Mathematical expression satisfies:

$$1 < SD/D1 < 1.2.$$

3. The receiving optical system of claim 1,

wherein an optical axis distance from an object-side surface of the first lens to the optical filter is D2, and
wherein the Mathematical expression satisfies:

$$0.5 < D1/D2 < 1.5.$$

4. The receiving optical system of any one of claims 1 to 3,

wherein the fourth lens and the fourth lens are spherical lenses,
wherein the second lens is an aspherical lens, and
wherein the fifth lens is an aspherical lens.

5. The receiving optical system of claim 4,

wherein the first lens is a spherical lens,
wherein the effective diameter of the fourth lens is larger than the effective diameter of the first lens, and
wherein the effective diameter is an average of the effective diameters of an object-side surface and a sensor-side surface of each lens.

6. The receiving optical system of any one of claims 1 to 3,

wherein a center thickness of the fifth lens is CT5,
wherein an optical axis distance from a center of an object-side surface of the first lens to the surface of the sensing unit is TTL, and
wherein the following Mathematical expression satisfies:

$$CT5 < TTL/3 < D1.$$

7. The receiving optical system of any one of claims 1 to 3,

wherein the optical filter is a bandpass filter that passes light in the range of 890 nm to 960 nm, and
wherein a center distance between the third lens and the fourth lens is the largest of center distances between the first lens to the fifth lens.

8. The optical system of any one of claims 1 to 3,

wherein the first lens includes a convex object-side surface and a concave sensor-side surface on the optical axis, and
wherein an effective diameter of an object-side surface of the first lens is the largest among effective diameters of lens surfaces from the first lens to the fifth lens.

9. The optical system of any one of claims 1 to 3,

wherein the third lens has a biconvex shape on the optical axis,
wherein the fourth lens has a meniscus shape convex toward the object, and
wherein the fifth lens has a convex object-side surface and a concave sensor-side surface on the optical axis.

10. The optical system of any one of claims 1 to 3,

wherein the first lens has negative refractive power,
wherein the fifth lens has positive refractive power,
wherein the third and fourth lenses have positive refractive power.

11. The receiving optical system of any one of claims 1 to 3,

wherein Half of a diagonal length of the sensing unit is ImgH,
wherein the optical axis distance from the optical filter to the surface of the sensing unit is D1,
wherein the following Mathematical expression satisfies: ImgH < BFL < D1.

12. The receiving optical system of claim 11,

wherein an optical axis distance from a surface of the first lens to the surface of the sensing unit is TTL,
wherein the following Mathematical expression satisfies: 20 mm < TTL < 60 mm, and
wherein the first to fifth lenses are made of glass.

13. A LIDAR device comprising:

a transmitting optical system having a light source and first to fourth lenses aligned with a first optical axis from an object toward the light source; and
a receiving optical system having a sensing unit and fifth to ninth lenses aligned along a second optical axis from an object side toward the sensing unit,
wherein the fifth to ninth lenses include spherical lenses and aspherical lenses,
wherein a number of spherical lenses is greater than a number of aspherical lenses in the receiving optical system,
wherein the receiving optical system includes an optical filter disposed between the spherical lenses,
wherein the transmitting optical system includes spherical lenses and aspherical lenses,
wherein a number of aspherical lenses is smaller than a number of spherical lenses in the transmitting optical system,
wherein the transmitting optical system includes an aperture stop and a diffuser disposed closer to the object side than the first lens,
wherein a light emitting area of the light source is different from a light receiving area of the sensing unit, and
wherein the first to fourth lenses and the fifth to ninth lenses are made of glass.

14. The LIDAR device of claim 13,

wherein the first lens of the transmitting optical system has a meniscus shape convex toward the object side and has positive power, and
wherein the third lens has positive power.

15. The LIDAR device of claim 14,

wherein the fourth lens has a meniscus shape convex toward the object side and has negative power, and
wherein an effective diameter of the third lens is larger than an effective diameter of the fourth lens.

【FIG. 1】

【FIG. 2】

(A)

(B)

【FIG. 3】

(Comparative example)　　　　(Embodiment)

【FIG. 4】

|  | Surface | Radius of curvature | CT/CG | Effective diameter | Refractive index | Abbe number | Focal length |
|---|---|---|---|---|---|---|---|
| Stop | Stop | Intifity | 3.170 | 9.700 |  |  |  |
| Lens1 | S1 | 17.108 | 3.975 | 11.621 | 1.816 | 23.780 | 59.114 |
|  | S2 | 23.743 | 3.189 | 11.301 |  |  |  |
| Lens2 | S3 | -10.611 | 5.629 | 11.518 | 1.816 | 23.780 | -424.793 |
|  | S4 | -13.555 | 7.436 | 15.125 |  |  |  |
| Lens3 | S5 | 14.501 | 5.336 | 18.600 | 1.816 | 23.780 | 21.623 |
|  | S6 | 67.927 | 0.500 | 17.197 |  |  |  |
| Lens4 | S7 | 9.875 | 4.811 | 14.700 | 1.677 | 53.100 | -294.356 |
|  | S8 | 7.559 | 6.125 | 10.218 |  |  |  |
| Light source |  |  | 0.000 |  |  |  |  |

【FIG. 5】

|   | L4 | |
|---|---|---|
|   | S7 | S8 |
| K | 0.24277 | -0.0053623 |
| A | -4.45E-05 | 2.80E-04 |
| B | -1.52E-07 | 5.62E-06 |
| C | -4.21E-08 | 2.84E-08 |
| D | 4.80E-10 | -1.68E-08 |
| E | -3.15E-12 | 1.14E-09 |
| F | -7.29E-14 | -2.27E-11 |

【FIG. 6】

【FIG. 7】

【FIG. 8】

[FIG. 9]

EP 4 737 971 A1

56

【FIG. 10】

【FIG. 11】

【FIG. 12】

|  | Surface | Radius of curvature | CT/CG | Effective diameter | Refractive index | Abbe number | Focal length |
|---|---|---|---|---|---|---|---|
| Lens1 | S1 | 315.615 | 2.800 | 18.013 | 1.816 | 23.780 | -9.909 |
|  | S2 | 7.853 | 5.340 | 11.686 |  |  |  |
| Lens2 | S3 | -20.437 | 2.986 | 10.736 | 1.669 | 31.080 | -10.775 |
|  | S4 | 23.559 | 3.373 | 11.520 |  |  |  |
| Lens3 | S5 | 149.490 | 5.176 | 13.770 | 1.816 | 23.780 | 14.869 |
|  | S6 | -13.000 | 0.500 | 14.826 |  |  |  |
| Stop | ST |  | 1.000 | 13.620 |  |  |  |
| BPF | FS1 | Infinity | 0.500 | 14.042 |  |  |  |
|  | FS2 | Infinity | 5.070 | 14.180 |  |  |  |
| Lens4 | S7 | 13.029 | 5.198 | 17.810 | 1.816 | 23.780 | 19.845 |
|  | S8 | 54.724 | 2.051 | 16.499 |  |  |  |
| Lens5 | S9 | 8.968 | 4.408 | 13.336 | 1.669 | 31.080 | 15.271 |
|  | S10 | 62.410 | 3.185 | 10.869 |  |  |  |
| Cover glass | S11 |  | 0.500 |  |  |  |  |
|  | S12 |  | 0.914 |  |  |  |  |
| Image sensor |  |  | 0.000 |  |  |  |  |

【FIG. 13】

|  | L2 | | L5 | |
|---|---|---|---|---|
|  | S3 | S4 | S9 | S10 |
| K | 91.2859704 | -3.872552 | 0.212897 | -41.55157 |
| A | -0.000594 | 8.06E-06 | -3.02E-05 | 0.0006 |
| B | 6.46E-06 | -6.00E-07 | -7.42E-06 | -1.43E-05 |
| C | -3.30E-07 | 2.49E-07 | 5.15E-07 | 1.57E-06 |
| D | 4.69E-09 | -1.42E-08 | -2.10E-08 | -8.46E-08 |
| E | -4.95E-23 | 3.41E-10 | 4.02E-10 | 2.12E-09 |
| F | -3.81E-26 | -3.06E-12 | -3.65E-12 | -2.15E-11 |

【FIG. 14】

【FIG. 15】

【FIG. 16】

【FIG. 17】

【FIG. 18】

【FIG. 19】

【FIG. 20】

【FIG. 21】

【FIG. 22】

## INTERNATIONAL SEARCH REPORT

| International application No. |
|---|
| **PCT/KR2024/009092** |

**A. CLASSIFICATION OF SUBJECT MATTER**

**G02B 13/00**(2006.01)i; **G01S 7/481**(2006.01)i; **G02B 9/60**(2006.01)i; **G03B 9/02**(2006.01)i; **G02B 3/02**(2006.01)i; **G02B 5/28**(2006.01)i; **G02B 9/34**(2006.01)i; **G02B 3/00**(2006.01)i

According to International Patent Classification (IPC) or to both national classification and IPC

**B. FIELDS SEARCHED**

Minimum documentation searched (classification system followed by classification symbols)

G02B 13/00(2006.01); G01S 7/481(2006.01); G02B 13/04(2006.01); G02B 13/18(2006.01); G02B 3/00(2006.01); G02B 7/02(2006.01); G02B 9/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5 렌즈(fifth lens), 광학 필터(optical filter), BFL, 광축 거리(optical axis distance), 비구면 렌즈(aspherical lens), 구면 렌즈(spherical lens), 수신 광학계(receiving optics), 송신 광학계(transmitting optics), 두께(thickness)

**C. DOCUMENTS CONSIDERED TO BE RELEVANT**

| Category* | Citation of document, with indication, where appropriate, of the relevant passages | Relevant to claim No. |
|---|---|---|
| X | CN 113419334 A (FUJIAN HUAKE PHOTOELECTRIC CO., LTD.) 21 September 2021 (2021-09-21) See paragraphs [0037]-[0050] and figure 1. | 1,2,4 |
| Y | | 13 |
| A | | 3,5-12,14,15 |
| Y | KR 10-2023-0006924 A (JENOPTIK OPTICAL SYSTEMS GMBH) 11 January 2023 (2023-01-11) See paragraphs [0087]-[0155], claim 13 and figures 1, 24 and 32. | 13 |
| A | KR 10-2022-0169608 A (SAMSUNG ELECTRONICS CO., LTD.) 28 December 2022 (2022-12-28) See paragraphs [0124]-[0126] and figure 9. | 1-15 |
| A | KR 10-2005-0110605 A (SHYNING PHOTO CO., LTD.) 23 November 2005 (2005-11-23) See claim 1 and figure 1. | 1-15 |

✓ Further documents are listed in the continuation of Box C.　　✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 October 2024** | **07 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/009092** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2016-038574 A (NALUX CO., LTD.) 22 March 2016 (2016-03-22)<br>    See paragraph [0038] and figure 1. | 1-15 |

Form PCT/ISA/210 (second sheet) (July 2022)

## INTERNATIONAL SEARCH REPORT
### Information on patent family members

International application No.

**PCT/KR2024/009092**

| Patent document cited in search report | | | Publication date (day/month/year) | Patent family member(s) | | | Publication date (day/month/year) |
|---|---|---|---|---|---|---|---|
| CN | 113419334 | A | 21 September 2021 | None | | | |
| KR | 10-2023-0006924 | A | 11 January 2023 | US | 2024-0098352 | A1 | 21 March 2024 |
| | | | | WO | 2022-270734 | A1 | 29 December 2022 |
| KR | 10-2022-0169608 | A | 28 December 2022 | KR | 10-0672876 | B1 | 22 January 2007 |
| KR | 10-2005-0110605 | A | 23 November 2005 | JP | 4920572 | B2 | 18 April 2012 |
| | | | | US | 2009-0161234 | A1 | 25 June 2009 |
| | | | | US | 8098441 | B2 | 17 January 2012 |
| JP | 2016-038574 | A | 22 March 2016 | JP | 5884113 | B1 | 15 March 2016 |
| | | | | US | 10365539 | B2 | 30 July 2019 |
| | | | | US | 2016-0320688 | A1 | 03 November 2016 |

Form PCT/ISA/210 (patent family annex) (July 2022)